Europäisches Patentamt

European Patent Office

Office européen des brevets

(19)

(11) Publication number: **0 134 115**
**A2**

(12) # EUROPEAN PATENT APPLICATION

(21) Application number: **84305229.1**

(22) Date of filing: **01.08.84**

(51) Int. Cl.⁴: **G 06 F 13/12**

(30) Priority: **04.08.83 US 520395**

(43) Date of publication of application: **13.03.85 Bulletin 85/11**

(84) Designated Contracting States: **DE FR GB NL**

(71) Applicant: **TEKTRONIX, INC., Tektronix Industrial Park D/S Y3-121 4900 S.W. Griffith Drive P.O. Box 500, Beaverton Oregon 97077 (US)**

(72) Inventor: **Tierney, Lannie J., 11765 S.W. 92ND, Tigard Oregon 97223 (US)**

(74) Representative: **Baillie, Iain Cameron et al, c/o Ladas & Parry Isartorplatz 5, D-8000 München 2 (DE)**

(54) **Asynchronous buffered communications interface.**

(57) A communications interface for controlling asynchronous data transmission between a host computer and an input/output device achieves very high data transfer rates and reduces I/O bottlenecks. The interface includes a microprocessor and a memory addressable thereby. The microprocessor controls data transfer from the host computer into an output buffer maintained within the memory and controls subsequent data transfer from the output buffer to an output device, independently of the operation of the host computer. Data received from the host computer is stored directly into the appropriate output buffer storage location without any time-consuming reading and writing of the data by the microprocessor. This is accomplished by providing a hardware register for storing data received from the host computer. At the appropriate time data transfer from the microprocessor to the memory is disabled, and data transfer from the register to the memory is enabled. Data is this rapidly transferred from the register directly into the memory location addressed by the microprocessor.

-1-

# ASYNCHRONOUS BUFFERED
# COMMUNICATIONS INTERFACE

## FIELD OF THE INVENTION

This invention pertains to input/output interfaces for facilitating communication between a digital computer and one or more input/output devices. In particular, the invention pertains to an interface for controlling asynchronous communication between a digital computer and an input/output device such as a high-speed keyboard-equipped graphics terminal.

## BACKGROUND

Communications interfaces facilitate digital computer input/output operations by controlling the flow of data transmitted by the computer to one or more output devices and the flow of data transmitted from one or more input devices to the computer.

Typically, the computer is programmed to transmit output data to a communications interface which, in turn, transmits the data to the output device in controlled fashion, at the relatively slow data transfer rate at which the output device operates, thereby freeing the computer from the task of ensuring that all applicable data transmission protocols are adhered to while the data is transmitted to the output device.

The computer programming for transferring data from the computer to an output device is usually such that a check is first made by the computer to determine whether the communications interface is already "busy" transmitting data to the output device. If the communications interface is "busy", then the computer must wait some minimum time interval before again checking to see if the communications interface is free to accept fresh data. If the communications interface is "free", then a data character is transmitted to the communications interface, which then

-2-

enters the "busy" state, and transmits the data character to the output device, independently of the operation of the computer. Because the data transfer rate attainable by even a very high-speed output device will be relatively slow in comparison to the data transfer rate attainable by the computer, the communications interface remains in the "busy" state for a comparatively long time. If the computer has additional data available for transmission to the output device it must wait until the communications interface has reverted from the "busy" state to the "free" state. Such waiting causes a bottleneck which may impede operating some very high-speed output devices [such as graphics terminals, which may be capable of operating at 19,200 baud data transfer rates] at their maximum capabilities.

The present invention substantially reduces the time during which the computer must wait for the communications interface to revert from the "busy" state to the "free" state and become available to accept fresh data for transmission to the output device. The communications interface of the present invention may accept up to 1,022 data characters from the computer much faster than a conventional output device can accept that data. The data is temporarily stored in an output buffer included in the communications interface. The transfer of data from the computer to the temporary output storage buffer is handled by high-speed electronic hardware, in a manner which minimizes the time the computer must wait before fresh data may be transmitted. The communications interface then transmits the data from the temporary output storage buffer to the output device at the relatively slow data transfer rate attainable by the output device and independently of the operation of the computer which initiated the data output operation.

A corresponding data transfer bottleneck may be encountered during the transmission of data from an input device to the computer. The computer may, for example, be busy executing some non-input task when the input device presents the communications interface with a stream of data characters for input to the computer. If the com puter does not happen to be ready to accept fresh input data then the data may be lost, necessitating retransmission of the data to the computer.

The communications interface of the present invention also includes a temporary input storage buffer in which up to 2,048 input data characters received from an input device may be temporarily stored for subsequent rapid transfer to the computer. Thus, a relatively large block of data may be assembled for input to the computer. This is advantageous when input is to be received from a relatively high-speed input device at a time when the computer is heavily burdened by some other operation, such as outputting data to a very high-speed output device. The communications interface accepts the input data and stores it temporarily in the input storage buffer independently of the operation of the computer, thereby minimizing the likelihood that input data may be lost.

It is accordingly an object of the present invention to provide a data communications interface having output buffer storage for rapidly accumulating data output by the computer and for temporarily storing that data for subsequent transmission to a relatively slow speed output device, independently of the operation of the computer.

It is a further object of the invention to provide a communications interface having input buffer storage for accumulating, independently of the operation of the computer, data received from an input device and for temporarily storing that data for subsequent rapid transmission to the computer.

-4-

## SUMMARY OF THE INVENTION

In accordance with the invention, there is provided a communications interface for controlling data transmission between a host computer and an input/output device. The communications interface comprises programmable control means and data storage means addressable by the programmable control means. The programmable control means controls data transfer from the host computer to an output buffer maintained within the data storage means. The programmable control means also controls subsequent transfer of the data from the output buffer to an output device, independently of the operation of the host computer. Further, the programmable control means controls, independently of the operation of the host computer, data transfer from an input device to an input buffer maintained within the data storage means and subsequently controls transfer of the data from the input buffer to the host computer.

The output buffer comprises a plurality of sequentially addressable data storage locations in the data storage means. Data received from the host computer is stored directly into the next sequentially available data storage location of the output buffer. The programmable control means does not read or write the data. This is preferably accomplished by providing a register for storing data received from the host computer and means for disabling data transfer from the programmable control means to the data storage means and for enabling data transfer from the register to the data storage means. Data may thus be transfered from the register directly into a data storage location of the data storage means addressed by the programmable control means.

Advantageously, the communications interface may also comprise a counter for counting data characters received from the host computer and means for

-5-

resetting the counter if a preselected number of data storage locations of the output buffer are available to receive data. Overflow of the counter may then be used to signal the host computer that no data storage locations of the output buffer are available to receive data. Resetting of the counter may be used to signal the host computer that data storage locations of the output buffer are available to receive data.

Preferably, the communications interface also comprises address storage means addressable by the programmable control means and for storing the address of the next sequentially available data storage location of the output buffer; and, digital circuit means for receiving, from the programmable control means, an incremented address for storage in the address storage means and for changing the incremented address to the address of the first data storage location of the output buffer if the incremented address exceeds the address of the last data storage location of the output buffer.

The communications interface may further comprise a timer for timing host computer-specified time delays between transmission, by the programmable control means, of successive data characters transfered from the output buffer to the output device. A programmable timer for programming as specified by the host computer, to specify the rate of data transfer, by the programmable control means, from the output buffer to the output device may also be provided.

Preferably, a register is also provided for storing data to be input to the host computer. The programmable control means controls data transfer from the input buffer to the host computer by transfering the data from the input buffer to the register and then signals the host computer that the data may be extracted from the register.

-6-

In a particularly preferred embodiment, the communications interface facilitates the control of data transmission between a host computer, a first plurality of input devices and a second plurality of output devices. In this case, the data storage means includes a plurality of output buffers--one output buffer corresponding to each of the output devices. The programmable control means controls data transfer from the host computer to the out put buffers and controls subsequent transfer of the data from the output buffers to their corresponding output devices. Similarly, a plurality of input buffers may be provided--one corresponding to each of the input devices. The programmable control means controls data transfer from the input devices to their corresponding input buffers and controls subsequent transfer of the data from the input buffers to the host computer.

BRIEF DESCRIPTION OF THE DRAWINGS

FIG. 1 is a block diagram of the preferred embodiment.

FIG. 2 is an electronic circuit schematic diagram of the microprocessor and electronically programmable read only memory ("EPROM") microcircuitry of the preferred embodiment.

FIGS. 3A and 3B (hereinafter collectively called "FIG. 3") are alignable such that they together comprise an electronic circuit schematic diagram of the random access memory ("RAM") and RAM control microcircuitry of the preferred embodiment.

FIGS. 4A and 4B (hereinafter collectively called "FIG. 4") are alignable such that they together comprise an electronic circuit schematic diagram of the input/output control microcircuitry of the preferred embodiment.

FIGS. 5A and 5B (hereinafter collectively called "FIG. 5") are alignable such that they together comprise an electronic circuit schematic diagram of the memory address and data control microcircuitry of the preferred embodiment.

FIG. 6 is an electronic circuit schematic diagram of the host computer interrupt control microcircuitry of the preferred embodiment. The host computer interrupt control microcircuitry is standard in the art.

DETAILED DESCRIPTION OF THE PREFERRED EMBODIMENT I.  Introduction

The preferred embodiment to be described is a quad [four channel] asynchronous buffered communications interface for controlling data transmission between a Digital Equipment Corporation ("DEC") PDP-11™ digital computer and up to four separate full duplex RS232C compatible input/output devices.

The communications interface of the preferred embodiment is controlled by "programmable control means," namely, a microprocessor. Hereinafter, the term "host computer" is used to refer to the DEC PDP-11™ computer from which output data is to be transmitted to an output device, or to which input data is to be transmitted from an input device. The term "microprocessor" is used exclusively to refer to the programmable control means which controls the operation of the preferred communications interface.

I (a).  Data Transfer From Host Computer to Output
        Device

Data is transferred, one character at a time, from the host computer to an output device in two stages. During the first stage, data is rapidly transferred, by special purpose electronic hardware operating under the microprocessor's control, from the host computer into a temporary output storage buffer provided on the communications interface. During the second stage, data temporarily stored in the output buffer is transmitted to the output device, one character at a time, independently of the operation of the host computer, and at the relatively slow data transmission rate attainable by the output device.

Conventionally, the operation of transferring data from the host computer to the output buffer would be accomplished with an intermediate operation in which the microprocessor would read the data presented by the host computer and subsequently write the data into the appropriate output buffer data storage location. This, however, is relatively time consuming. In the preferred embodiment, the aforesaid special purpose electronic hardware facilitates direct storage into the output buffer of data presented by the host computer, without necessitating any reading or writing of the data by the microprocessor.

Utilizatiion of the host computer's operating time is thus optimized by reducing the number of host computer operating cycles completed before the communications interface becomes free to accept another data character for output.

I (b). Data Transfer From Input Device to Host Computer

Data is also transferred, one character at a time, from an input device to the host computer in two stages. During the first stage, which proceeds at the relatively slow data transfer rate attainable by the input device, and independently of the operation of the host computer, data received from the input device is temporarily stored in an input storage buffer provided on the communications interface. During the second stage, which occurs whenever the host computer is free to accept the input data, the data is rapidly transferred, one character at a time, from the temporary input storage buffer to the host computer.

Because the first data input stage proceeds independently of the operation of the host computer, the possibility of losing input data because the host computer is too busy to accept that data is eliminated.

II.   Block Diagram Overview

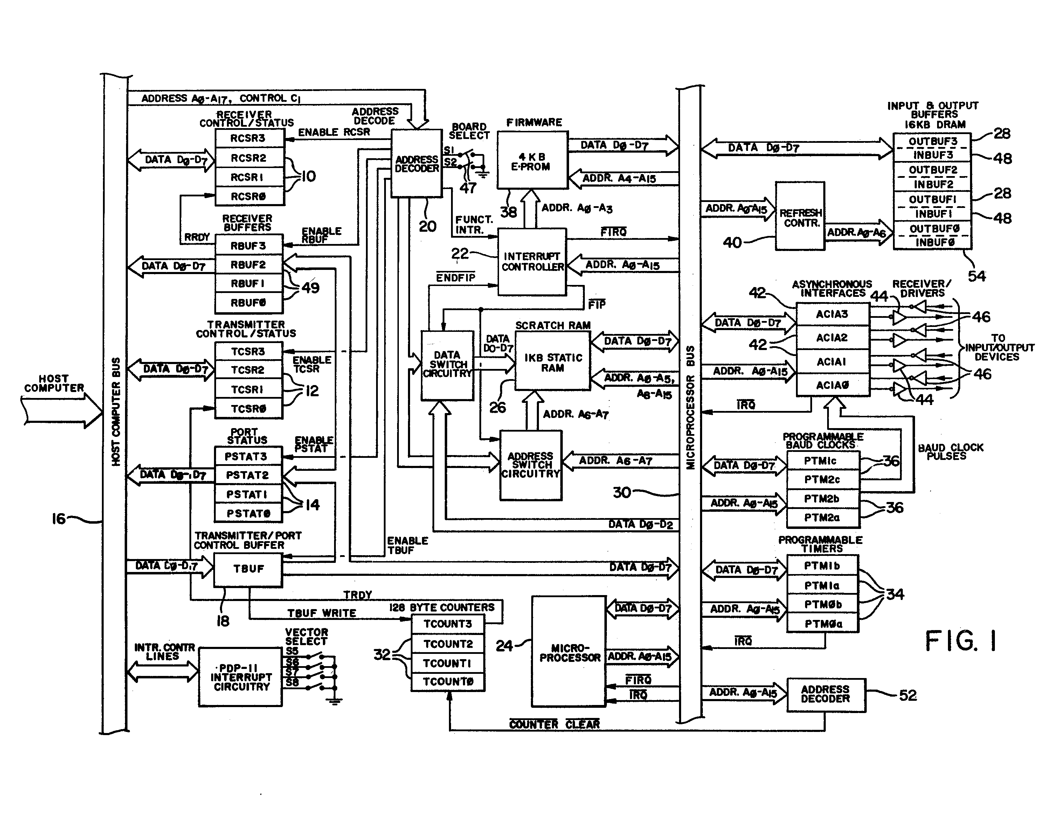

Fig. 1 is a block diagram representative of the preferred communications interface, which is capable of simultaneously controlling asynchronous data transfer between a host computer (not shown) and up to four output devices, and between the host computer and up to four input devices.  Thus, the communications interface includes  four data output channels and four data input channels.

Operation of the communications interface is controlled by microprocessor 24.  EPROM 38 contains the firmware program which defines the sequence of operations performed by microprocessor 24.  Static RAM 26 serves as an "address storage means" in which tables of address pointers to the temporary input and output storage buffers are maintained.  The temporary input and output storage buffers are maintained in a "data storage means," namely dynamic RAM 54, which is controlled and refreshed by RAM controller 40

A separate temporary, cyclical, output storage buffer ("OUTBUF") 28 is maintained in RAM 54 for each of the four output channels.  Similarly, a separate, cyclical, input storage buffer ("INBUF") 48 is maintained in RAM 54 for each input channel.  OUTBUFs 28 each include 2,048 sequentially addressable one-byte storage locations.  The output buffer storage locations are used in pairs, to store a data character and an "attribute code" which is utilized, as hereinafter explained, to control some aspects of the manner in which the data character is transmitted to the output device.  Each output buffer thus contains 1,024 pairs of one-byte storage locations.  However, only 1,022 pairs of storage locations are actually utilized in each buffer.  This is to avoid time-consuming buffer pointer address comparison operations which would otherwise be required to determine whether the "oldest" data character in a particular buffer might be over-written by a newly received data character. The storage capacity of each output buffer is therefore 1,022 data characters plus 1,022 attribute codes. Although each data character stored in a particular output buffer is in fact separated, by an attribute code, from the next data character stored in the same output buffer, the output buffers are nonetheless described herein as each comprising 1,022 "sequentially addressable" data storage locations. Each input buffer includes 2,048 sequentially addressable data storage locations (i.e. each input buffer may store a maximum of 2,048 data characters).

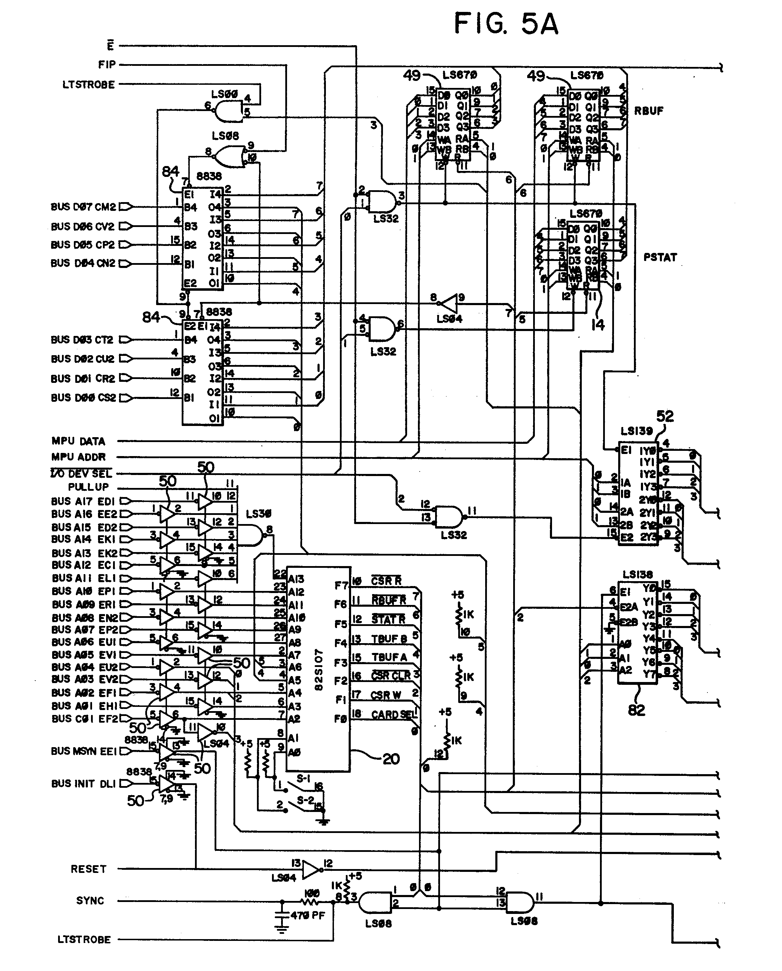

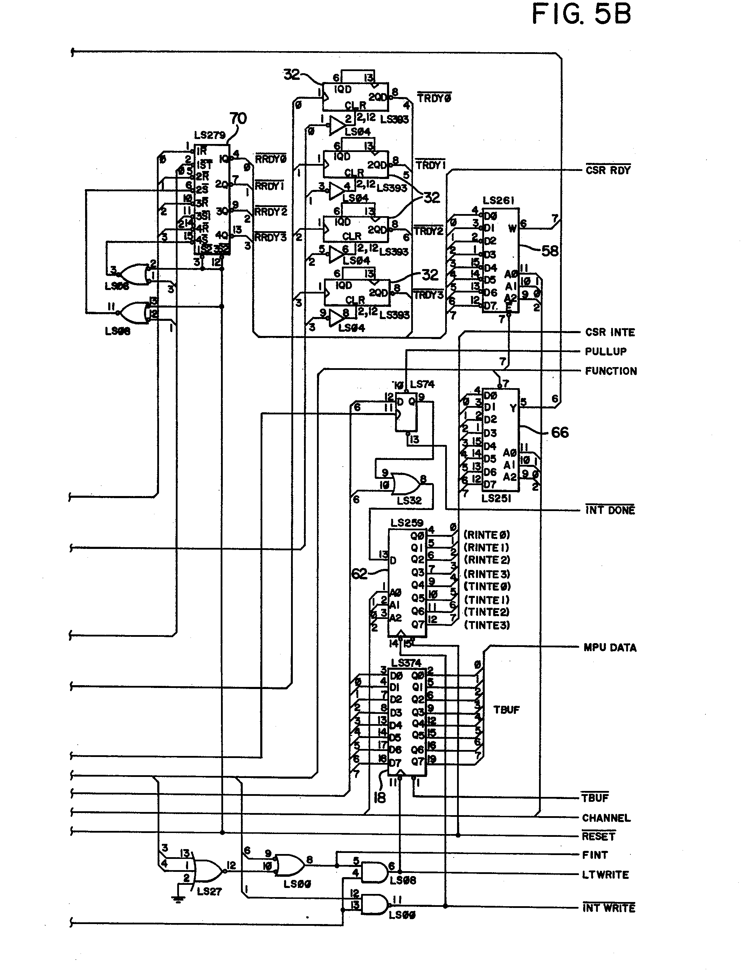

Up to four communications interfaces, each controlling four input/output channel pairs, may be used with a single host computer. Switches 47 (FIGS. 1 and 5) may be set to identify each of the four possible interfaces with a unique one-of-four code addressable by the host computer.

II (a). Data Transfer From Host Computer to Output Device

A transmitter ready ("TRDY") flag is maintained for each output channel to signal the host computer when the communications interface is ready to accept a fresh data character for output via a particular channel. The hardware TRDY flags facilitate direct interrupts of the host computer. The TRDY flags, which are maintained in transmitter control/status registers ("TCSR") 12, may also be interrogated by the host computer if it is outputting data with interrupts disabled.

The host computer presents the data character to the communications interface via the host computer bus 16. The eight-bit data character is stored in a temporary (hardware) holding register ("TBUF") 18. The host computer also presents address decoder 20 with

-11-

address information identifying the output channel servicing the output device to which the data character is to be transferred. After decoding this information, address decoder 20 triggers interrupt controller 22 which interrupts the operation of microprocessor 24. Microprocessor 24 then obtains from the address pointer tables maintained in RAM 26, an address which points to the next sequentially available data storage location in whichever of OUTBUFs 28 is associated with the output device to which the data character is to be transferred. The data character is then transferred, on microprocessor bus 30, from TBUF 18, directly into the appropriate OUTBUF 28, as hereinafter explained.

Microprocessor 24 controls the transfer of data from OUTBUFs 28 to their associated output devices in conventional fashion with the aid of asynchronous communication interface adapters ("ACIAs") 42 and line drivers 44. One ACIA is provided for each input/output channel pair, and each output channel is provided with a line driver 44.

A counter 32 is provided for each of the four output channels to assist in ensuring (as hereinafter explained) that OUTBUFs 28 do not overflow. A programmable timer 34 is also provided for each output channel for timing delayed output of successive data characters, as hereinafter explained. Each channel is also provided with a programmable clock 36 for controlling the channel data transfer rate, as hereinafter explained.

II (b). Data Input From Input Device to Host Computer

Line receivers 46 (one per input channel) convey serial input data from the input devices to the associated ACIAs 42 which convert the data to parallel form and, in turn, interrupt the operation of microprocessor 24. Microprocessor 24 transfers the input data character from the receiving ACIA into whichever of INBUFs 48 is associated with the output device from which the data was received. Data characters temporarily stored in INBUFs 48 are then transferred, one character at a time, by microprocessor 24 to a (hardware) receiver buffer ("RBUF") 49. Each input channel is provided with a separate RBUF register.

A receiver ready ("RRDY") flag is maintained for each input channel to signal the host computer when a fresh data character is waiting to be read from the associated RBUF 49. The RRDY flags facilitate direct interrupts of the host computer. The RRDY flags, which are maintained in receiver control/status registers ("RCSR") 10, may also be interrogated by the host computer if it is inputting data with interrupts disabled.

II (c). Channel Status and Control

The communications interface of the preferred embodiment facilitates software control, by the host computer, of the operating characteristics of each of the four input/output channels serviced by the communictions interface. Channel (or, "port") status and control registers (respectively, "PSTAT" 14, and "PCTR") are maintained for each input/output channel pair. By interrogating the appropriate PSTAT 14 the host computer may determine the current operating characteristics of a particular input/ output channel. Similarly, the host computer may, by depositing an appropriate code in a particular PCTR, change the current operating characteristics of a particular input/output channel.

Channel characteristics which may be determined and/or controlled by the host computer are largely arbitrary, but may, for example, include the channel data transfer rate, and a "flagged input mode" facility for terminating input data transmission by a particular input device if the associated INBUF 48 is full. The definition of these characteristics may be varied, via suitable programming of the host computer and microprocessor 24, to suit the particular environment in which the communications interface must operate. Accordingly, in the description of the block diagram of FIG. 1 these characteristics are not discussed in great detail.

III. Detailed Description of Microcircuitry and Microprocessor Firmware

The communications interface of the present invention accomplishes data transfer operations with the aid of special purpose microcircuit hardware and firmware (i.e. a computer program) which programs the operation of microprocessor 24. The interaction between the microcircuitry and the firmware is now described in detail.

III (a). Registers and Microprocessor Interrupts

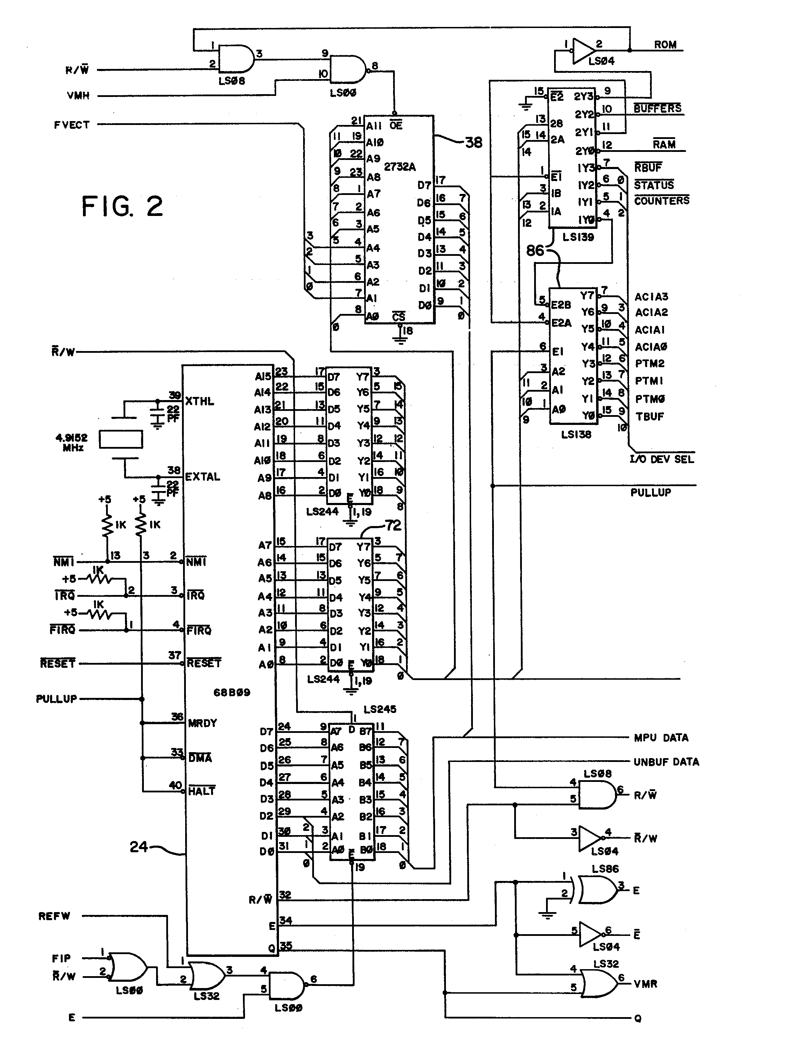

Seven 16-bit registers are maintained on the communications interface in respect of each input/output channel pair. These registers, which are addressable by the host computer via address decoders 86 (FIG. 2), are used to pass data characters, channel control and status information between the host computer and the communications interface. Six of the seven registers have already been mentioned, namely, RCSRs 10, TCSRs 12, PSTATs 14, TBUF 18, RBUFs 49, and the PCTRs. The seventh register is a data attributes register used to pass data attribute codes from the host computer to the communications interface, as hereinafter explained.

The ATR, PCTR and TCSR registers each pertain to data output operations. As hereinafter explained, there are three stypes of data output operation; namely, output of a normal data character (to which TCSRs 12 pertain), output of a data attribute code (to which the ATTR registers pertain) and output of channel control information (to which the PCTR registers pertain). Since only one type of output operation may occur at any give time with respect to a particular output channel, the addresses in which the TCSRs are maintained may also be used to maintain the ATTRs and PCTRs. The three register types are distinguished by setting bits 4 and 5 thereof as will shortly be explained.

The TBUF register is used only during data output operations. Conversely, the PSTAT registers are used to input status information to the host computer. Accordingly, since input and output operations never occur at the same time on a given input/output channel pair, the address in which the TBUF register is maintained may also be used to maintain the PSTAT register.

-15-

The registers are configured as follows:


Receiver Status Register (RCSR)

```
Bit    15 14 13 12 11 10  9  8  7  6  5  4  3  2  1  0
       [-][-][-][-][-][-][-][-][-][-][-][-][-][-][-][-]
         :  :  :  :  :  :  :  :  :  :  :  :  :  :  :  :
              UNASSIGNED             :  :  :  :  :  :  :  :
                                     :  :  :  :  :  :  :  :
RECEIVER DONE (RRDY) . . . . . :     :  :  :  :  :  :  :
                                     :  :  :  :  :  :  :
RECEIVER INTERRUPT ENABLE (RINTE) :  :  :  :  :  :  :
                                        :  :  :  :  :  :
UNASSIGNED . . . . . . . . . . . . . :  :  :  :  :  :
                                        :  :  :  :  :
UNASSIGNED . . . . . . . . . . . . . :  :  :  :  :
                                           :  :  :  :
UNASSIGNED . . . . . . . . . . . . . . . : :  :  :
                                              :  :  :
UNASSIGNED . . . . . . . . . . . . . . . . : :  :
                                                 :  :
UNASSIGNED . . . . . . . . . . . . . . . . . . : :
                                                    :
UNASSIGNED . . . . . . . . . . . . . . . . . . . . :
```

| Bit | Description and Operation |
|---|---|
| 15-8 | Unassigned |
| 7 | This is the RRDY flag which is set when a data character has been transferred to the associated RBUF 49 for input to the host computer. It is cleared when the host reads the contents of RBUF. |
| 6 | This bit, when set, causes a host computer interrupt request to be generated each time the RRDY flag is set. It may be cleared by the host program. |
| 5-0 | Unassigned. |

0134115

-16-

Receiver Data Buffer Register (RBUF)

Bit     15 14 13 12 11 10  9  8  7  6  5  4  3  2  1  0
        [-][-][-][-][-][-][-][-][-][-][-][-][-][-][-][-]
         :  :  :  :  :  :  :  :  :  :  :  :  :  :  :  :
                 UNASSIGNED          :  :  :  :  :  :  :  :
                                     :  :  :  :  :  :  :  :
                                     :  :  :  :  :  :  :  :
                                          RECEIVED DATA

Bit  Description and Operation

15-8  Unassigned

7-0   These bits contain the data character to be read
      by the host program.  The data is valid only if
      the RRDY flag in the associated RCSR is set.

-17-

Transmitter Status Register (TCSR)

```
Bit     15 14 13 12 11 10  9  8  7  6  5  4  3  2  1  0
        [-][-][-][-][-][-][-][-][-][-][-][-][-][-][-][-]
         :  :  :  :  :  :  :  :  :  :  :  :  :  :  :  :
              UNASSIGNED         :  :  :  :  :  :  :  :
                                 :  :  :  :  :  :  :  :
TRANSMITTER DONE (TRDY) . . . . :  :  :  :  :  :  :  :
                                 :  :  :  :  :  :  :  :
TRANSMITTER INTERRUPT ENABLE
    (TINTE)  . . . . . . . . . . :  :  :  :  :  :  :
                                    :  :  :  :  :  :  :
SAME STATE AS BIT 4 . . . . . . . . :  :  :  :  :  :
                                       :  :  :  :  :  :
SAME STATE AS BIT 5 . . . . . . . . . :  :  :  :  :
                                          :  :  :  :
UNASSIGNED  . . . . . . . . . . . . . . . :  :  :  :
                                             :  :  :
UNASSIGNED  . . . . . . . . . . . . . . . . :  :  :
                                                :  :
UNASSIGNED  . . . . . . . . . . . . . . . . . . :  :
                                                   :
UNASSIGNED  . . . . . . . . . . . . . . . . . . . :
```

Bit     Description and Operation

15-8    Unassigned

7       This is the TRDY flag which indicates that the
        host computer may output data through TBUF 18.

6       This bit, when set, causes a host computer
        interrupt request to be generated whenever the
        TRDY flag is set.  It may be cleared by the host
        program.

5,4     These two bits are used to indicate whether this
        register is to be interpreted as TCSR, ATTR, or
        PCTR.  Both bits must be the same (both set or
        cleared) if this is to be interpreted as a TCSR
        register.

3-0     Unassigned.

Port Control Register (PCTR)

```
Bit     15 14 13 12 11 10  9  8  7  6  5  4  3  2  1  0
        [-][-][-][-][-][-][-][-][-][-][-][-][-][-][-][-]
          :  :  :  :  :  :  :  :  :  :  :  :  :  :  :  :
                    UNASSIGNED        :  :  :  :  :  :  :  :
                                      :  :  :  :  :  :  :  :
REQUEST BIT 7 . . . . . . . . . . :  :  :  :  :  :  :  :
                                         :  :  :  :  :  :  :
REQUEST BIT 6 . . . . . . . . . . .  :  :  :  :  :  :  :
                                            :  :  :  :  :  :
CLEARED . . . . . . . . . . . . . . .  :  :  :  :  :  :
                                               :  :  :  :  :
SET . . . . . . . . . . . . . . . . . .  :  :  :  :  :
                                                  :  :  :  :
REQUEST BIT 3 . . . . . . . . . . . . . .  :  :  :  :
                                                     :  :  :
REQUEST BIT 2 . . . . . . . . . . . . . .  .  :  :  :
                                                        :  :
REQUEST BIT 1 . . . . . . . . . . . . . . . . . . :  :
                                                           :
REQUEST BIT 0 . . . . . . . . . . . . . . . . . .  :
```

| Bit | Description and Operation |
|-----|---------------------------|
| 15-8 | Unassigned |
| 7 | Buffer Control Request Bit. |
| 6 | Buffer Control Request Bit. |
| 5,4 | Bit 5 must be cleared and bit 4 must be set if this is to be interpreted as PCTR register. |
| 3-0 | Buffer Control Request Bits. Refer to "PORT CONTROL REQUESTS" in the PROGRAMMING section for correct request protocol. |

See Appendix A for a summary of the buffer control request codes which may be specified via appropriate settings of the buffer control request bits.

-19-

Data Attributes Register (ATTR)

```
Bit    15 14 13 12 11 10  9  8  7  6  5  4  3  2  1  0
       [-][-][-][-][-][-][-][-][-][-][-][-][-][-][-][-]
        :  :  :  :  :  :  :  :  :  :  :  :  :  :  :  :
                 UNASSIGNED        :  :  :  :  :  :  :  :
                                   :  :  :  :  :  :  :  :
START OF REPEAT SEQUENCE . . . :   :  :  :  :  :  :  :  :
                                   :  :  :  :  :  :  :
END OF REPEAT SEQUENCE . . . . .   :  :  :  :  :  :  :
                                      :  :  :  :  :  :
SET . . . . . . . . . . . . . . . . . :  :  :  :  :  :
                                         :  :  :  :  :
CLEARED . . . . . . . . . . . . . . . .  :  :  :  :  :
                                            :  :  :  :
DATA OUTPUT INHIBIT . . . . . . . . . . . . :  :  :  :
                                               :  :  :
                                            DELAY UNIT
```

| Bit | Description and Operation |
|-----|---------------------------|
| 15-8 | Unassigned |
| 7 | When set this marks the first character of an output buffer repeat sequence. |
| 6 | When set this marks the end character of an output buffer repeat sequence. |
| 5,4 | Bit 5 must be set and bit 4 must be cleared if this 15 is to be interpreted as an ATTR register. |
| 3 | When this bit is set the character is not output to the terminal. |
| 2-0 | These 3 bits indicate the delay requested before the next character is output. |

See Appendix A for particulars of action taken in respect of bits 7, 6 and 2-0.

Transmit Data Register (TBUF)

```
Bit    15 14 13 12 11 10  9  8  7  6  5  4  3  2  1  0
       [-][-][-][-][-][-][-][-][-][-][-][-][-][-][-][-]
        :  :  :  :  :  :  :  :  :  :  :  :  :  :  :  :
              UNASSIGNED           :  :  :  :  :  :  :  :
                                   :  :  :  :  :  :  :  :
                                   :  :  :  :  :  :  :  :
                                   TRANSMITTED DATA
```

Bit    Description and Operation

15-8   Unassigned

7-0    These bits contain the data character to be
       transmitted to the output buffer and then on to
       the output device.

-21-

The registers are configured as follows:

Receiver Status Register (RCSR)

Bit       15 14 13 12 11 10  9  8  7  6  5  4  3  2  1  0
          [-][-][-][-][-][-][-][-][-][-][-][-][-][-][-][-]
          :  :  :  :  :  :  :  :  :  :  :  :  :  :  :  :
                    UNASSIGNED           :  :  :  :  :  :  :  :
                                         :  :  :  :  :  :  :  :

CLEARED . . . . . . . . . . . . :  :  :  :  :  :  :  :
                                :  :  :  :  :  :  :

DOUBLE <CTRL C> DETECTED . . . . :  :  :  :  :  :  :
                                   :  :  :  :  :  :

DATA OVERRUN . . . . . . . . . . . :  :  :  :  :  :
                                     :  :  :  :  :

FRAMING ERROR . . . . . . . . . . . . :  :  :  :  :
                                        :  :  :  :

UNASSIGNED . . . . . . . . . . . . . . . :  :  :  :
                                           :  :  :

UNASSIGNED . . . . . . . . . . . . . . . . . :  :  :
                                               :  :

UNASSIGNED . . . . . . . . . . . . . . . . . . . :  :
                                                   :

UNASSIGNED . . . . . . . . . . . . . . . . . . . . . :

Bit    Description and Operation

15-8   Unassigned

7      When cleared this bit indicates that the ter-
       minal input status is reflected in bits 4-6.
       When set this bit indicates that port control
       request status is reflected in bits 4-6.

6      When set this bit indicates that two consecutive
       <CTRL C>s were received from the input device.

5      When set this bit indicates an input buffer or
       ACIA overflow.

4      When set this bit indicates that an improperly
       framed character was received as the stop bit was
       not received as expected.  It usually means that
       a BREAK code was received from the output device.

3-0    Unassigned.

See Appendix A for further particulars of action taken
in respect of the assigned bits.

-22-

Port Status Register (PSTAT) Address 176XX6*
(Port Control Status Request)

```
Bit     15 14 13 12 11 10  9  8  7  6  5  4  3  2  1  0
        [-][-][-][-][-][-][-][-][-][-][-][-][-][-][-][-]
         :  :  :  :  :  :  :  :  :  :  :  :  :  :  :  :
                  UNASSIGNED           :  :  :  :  :  :  :  :
                                       :  :  :  :  :  :  :  :
SET . . . . . . . . . . . . . . .  :  :  :  :  :  :  :  :
                                       :  :  :  :  :  :  :
                                STATUS  :  :  :  :
                                       :  :  :  :
UNASSIGNED  . . . . . . . . . . . . . . . . :  :  :  :
                                          :  :  :
UNASSIGNED  . . . . . . . . . . . . . . . . :  :  :
                                             :  :
UNASSIGNED  . . . . . . . . . . . . . . . . . . :  :
                                                :
UNASSIGNED  . . . . . . . . . . . . . . . . . . . :
```

Bit     Description and Operation

15-8    Unassigned

&       When set this bit indicates that the port
        control request status is reflected in bits 4-6.
        When cleared this bit indicates that terminal
        input status is reflected in bits 4-6.

6-4     See Appendix A for the returned status bit codes.

3-0     Unassigned.


        RCSRs 10 and TCSRs 12 are addressed via
multiplexers 58 and 66 (FIG. 5).  Multiplexer 58
selects for presentation on its output line the appropriate channel TRDY flag (maintained, as hereinafter
described, via counters 32) or RRDY flag (maintained in
latch 70).  Multiplexer 66 selects for presentation on
its output line the appropriate channel receiver or
transmit enable flag (maintained in latch 62).  A host
computer addressable 16-bit register (14) is used to

-23-

maintain PSTATs 14. Similarly, a pair of 16-bit registers (49) comprise RBUFs 49. A single flip-flop (18) comprises TBUF 18. It is not necessary to provide a separate TBUF for each output channel because, as hereinafter explained, special hardware included in the communications interface facilitates direct determination of the appropriate output buffer storage location which is to receive a data character held in TBUF 18 and also facilitates direct transfer of the data character into that storage location.

The fast interrupt request ("FIRQ") capability of microprocessor 24 (FIG. 2) is used to transfer data characters or attribute codes from TBUF 18 to OUTBUFs 28 and to transfer data characters from RBUFs 49 to the host computer. FIRQ interrupts are also used to process channel control information which the host computer may transfer to the communications interface via RBUF 18.

The interrupt request ("IRQ") capability of microprocessor 24 is used to transfer data characters from OUTBUFs 28 to the associated output devices or from the input devices to the associated INBUFs 48.

The non-maskable interrupt ("NMI") capability of microprocessor 24 is used by the self-testing routines included in the firmware which programs the operation of microprocessor 24.

III (b). Microprocessor Firmware

Appendix A to this specification is a source code listing of the firmware which programs the operation of microprocessor 24 in the preferred embodiment.

The "mainline" routine included in Appendix A runs continuously whenever interrupts are not being serviced. Each pass of the mainline routine services a different input/output channel pair. Accordingly, four passes through the mainline routine are required to service all four channel pairs. The mainline routine initiates data transfers from INBUFs 48 to RBUFs 49 and from OUTBUFs 28 to the associated output devices.

-24-

Appendix A also includes the FIRQ and IRQ interrupt service routines for processing the previously-mentioned FIRQ and RIQ interrupts.

Appendix A further includes a number of self-test and diagnostic routines which are provided for testing the integrity of the memory devices, timers, and input/output ports included in the communications interface.

It is believed that Appendix A, together with the many explanatory comments embedded therein, will enable those skilled in the art to understand the firmware programming.

III (c). Data Transfer From Host Computer to Output Device

The TRDY flags maintained in TCSRs 12 may be used by microprocessor 24 to signal the host computer that it may output a data character via the associated output channel. The host computer may be operating with its interrupts enabled or disabled. (TCSRs 12 also include the transmit interrupt enable flags for each channel.) If the host computer interrupts are enabled then operation of the host computer is interrupted if any of the four TRDY flags are set.

The host computer, when interrupted, transfers control of the host computer operations to an appropriate interrupt service routine which determines whether any data is available for output to the channel associated with the TRDY flag which caused the interupt and, if so, outputs a data character to that channel. If the host computer interrupts are disabled then the host computer must periodically examine the TRDY flags maintained in TCSRs 12 to determine whether or not a data character may be output to a particular channel.

Data is output by the host computer on its data lines D00-D07. Addressing information identifying the particular communications interface, output channel, and register for which the data is intended is output by the host computer on its address lines A01-A17. The address information is passed through line receivers 50 (FIG. 5) to address decoder 20 which is programmed to decode the information so as to identify one of the three possible types of data output operations. These are:

      1.    Output of a normal data character.

      2.    Output of data attribute information.

      3.    Output of channel control information.

III (c)(i).  <u>Output of Normal Data Character</u>

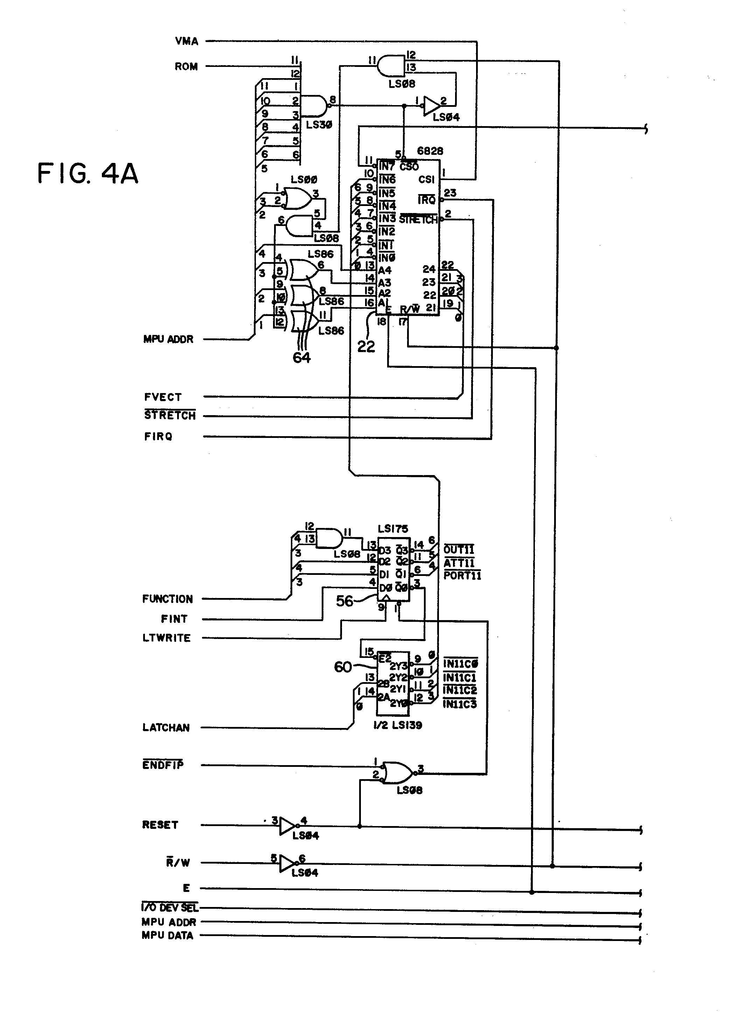

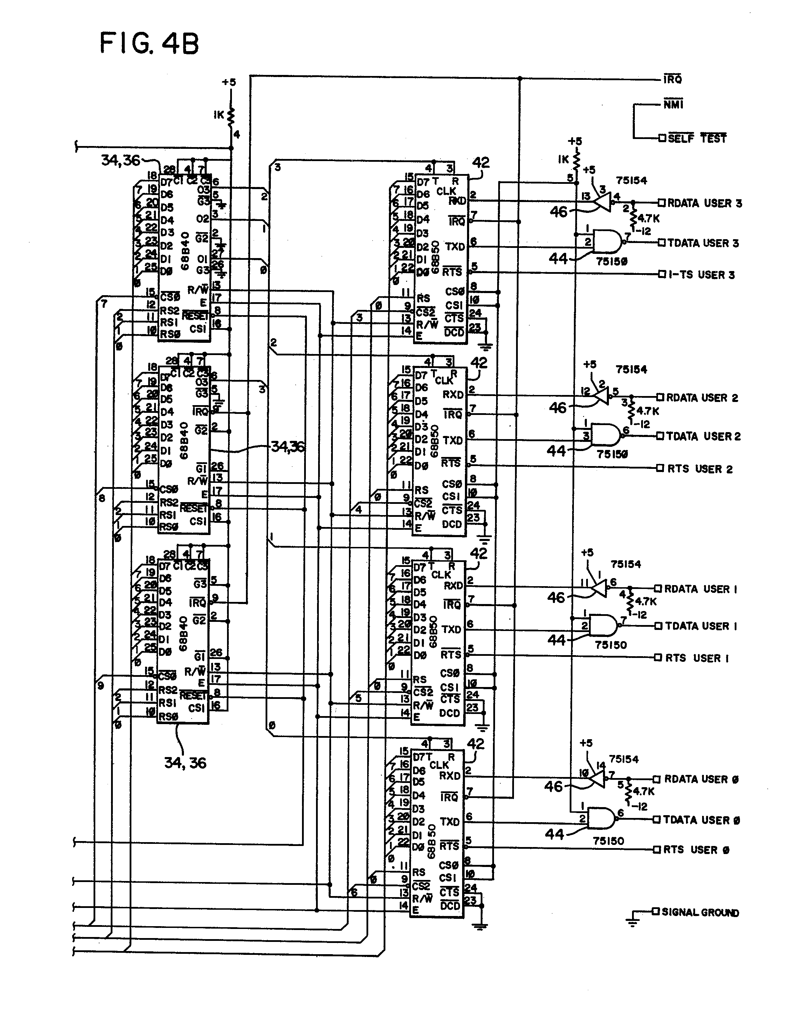

If a normal data character output operation is detected by address decoder 20 then its output lines TBUFA and TBUFB are both set high. After presenting the data and address information, the host computer issues a MSYN strobe pulse to indicate that the information on the data and address lines has stabilized and may be latched into a register. The MSYN strobe pulse causes the data character to be latched from transceivers 84 into TBUF 18. At the same time the TBUFA and TBUFB outputs of address decoder 20 are latched into flip-flop 56 (FIG. 4) which outputs, on lines $\overline{OUT11}$, $\overline{ATT11}$, and $\overline{PORT11}$, a one-of-three signal uniquely identifying which of the three possible data output operations is in progress. The $\overline{OUT11}$ line is low if a normal data character output operation is in progress. The $\overline{ATT11}$ line is low if an attribute code output operation is in progress. The $\overline{PORT11}$ line is low if a channel control information output operation is in progress.

The $\overline{OUT11}$, $\overline{ATT11}$, and $\overline{PORT11}$ output signals of flip-flop 56 are fed into interrupt controller 22. Latching of these signals into interrupt controller 22 causes the $\overline{IRQ}$ output line of interrupt controller 22 to go low which, in turn, signals an FIRQ interrupt request to microprocessor 24. Microprocessor 24 then transfers control to an appropriate firmware FIRQ interrupt service routine.

Interrupt controller 22 is conventionally used to generate "IRQ" type interrupt requests. However, in the preferred embodiment, interrupt controller 22 is adapted so as to generate "FIRQ" type interrupt requests. EPROM 38 (FIG. 2) contains tables of pointers to IRQ and FIRQ interrupt service routines. The lower four bits of the base address of the table of IRQ interrupt service routine addresses are conventionally fed directly into interrupt controller 22 (FIG. 4) which offsets those address bits to point into the table at the location containing the address of the appropriate IRQ interrupt service routine. Exclusive OR gates 64 perform an additional, preliminary offset of those address bits so that the base address presented to interrupt controller 22 points to the beginning of the table of addresses of FIRQ interrupt service routines, not to the beginning of the table of addresses of IRQ interrupt service routines. Interrupt controller 22 thus presents microprocessor 24 with a vector which points to the address of the appropriate FIRQ interrupt service routine.

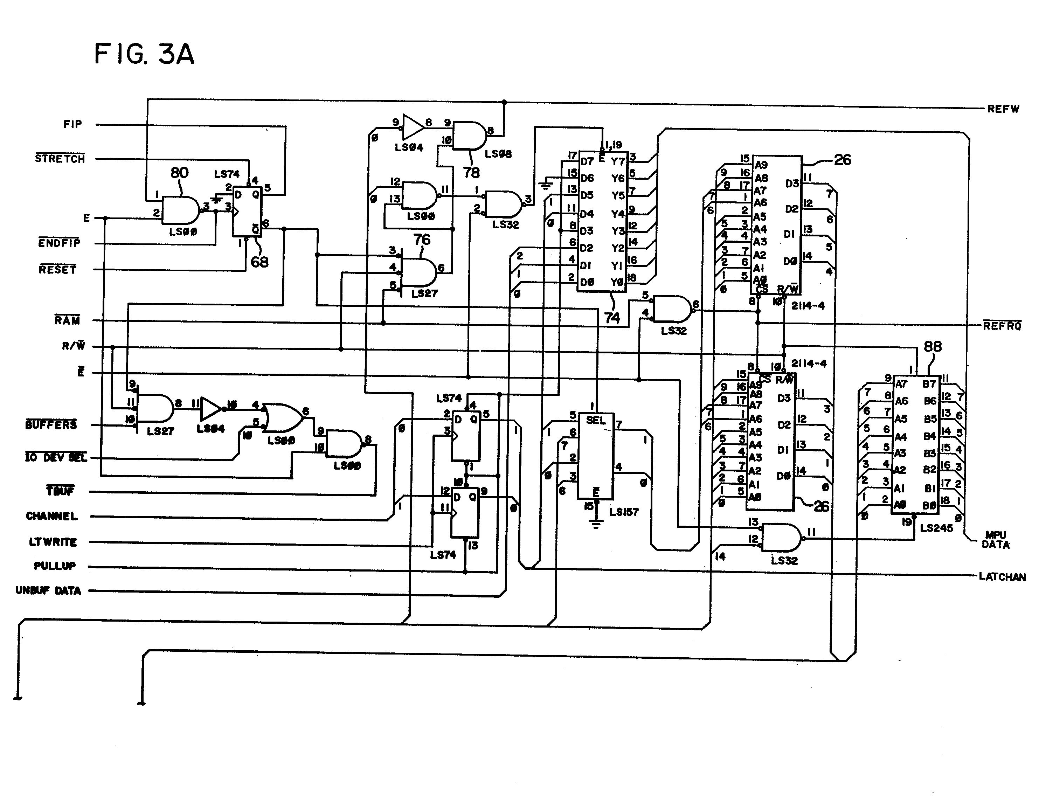

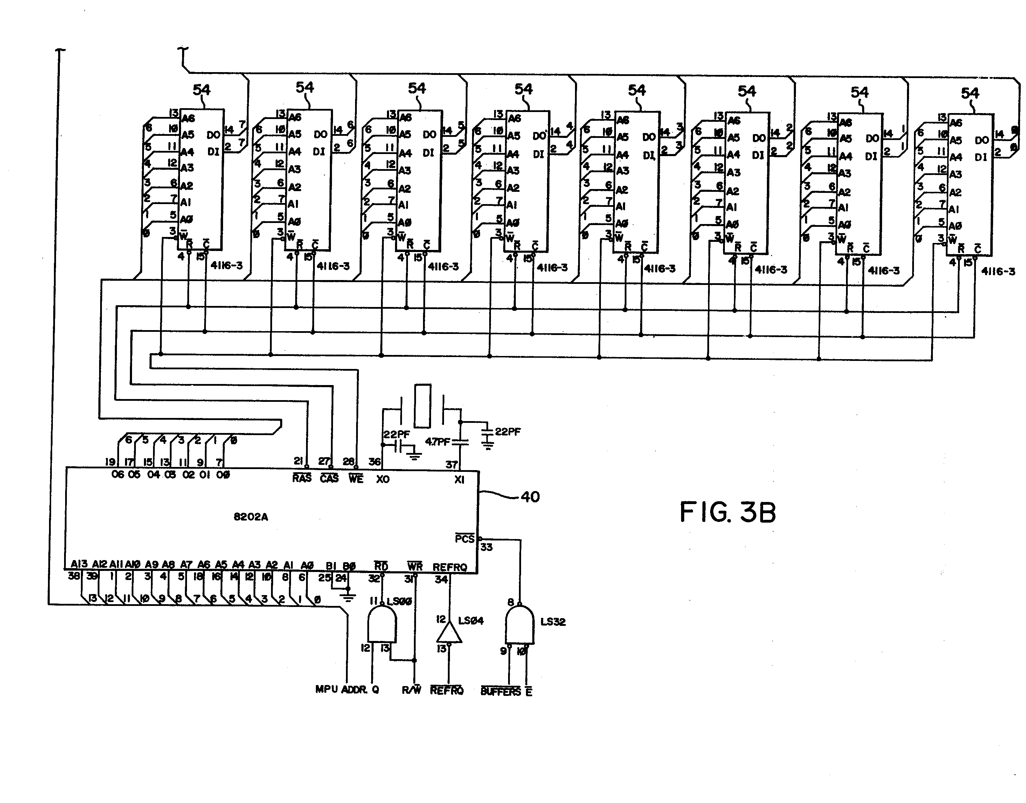

As microprocessor 24 signals its readiness to service the FIRQ interrupt, the $\overline{\text{STRETCH}}$ output line of interrupt controller 22 goes low, causing flip-flop 68 (FIG. 3) to be set. When set, flip-flop 68 indicates that an FIRQ interrupt is in progress.

RAM 26 contains tables of addresses which point to the next available sequential storage locations in each of OUTBUFs 28, the location of the "oldest" data character in each of OUTBUFs 28 which has not yet been outputed to the associated output device, and corresponding pointers to each of INBUFs buffers 48. The microprocessor firmware FIRQ interrupt service routine to which control is transferred by microprocessor 24 obtains from RAM 26 the output buffer address of the next available sequential storage location which is to receive the data character held in TBUF 18. The A6 and A7 address lines of RAM 26 receive a two-bit signal which indicates which of the four output channels serviced by the communications interface is to receive the data character. An immediate offset into the proper output channel address pointer table within RAM 26 is thus obtained. Microprocessor 24 then attempts to write a data character into the addressed output buffer location. However, octal bus transceiver 72 (FIG. 2), which controls the transmission of data from microprocessor 24 onto the microprocessor bus, is disabled while an FIRQ interrupt is in progress. Thus, although microprocessor 24 attempts to write a data character into the output buffer, that character is not actually written into the output buffer. Instead, TBUF register 18 is enabled and the data character therein is transferred directly onto the microprocessor bus and into the output buffer storage location addressed by microprocessor 24. The hardware just described eliminates the need for intermediate read/write operations in transferring the data character from TBUF 18 into the appropriate output buffer storage location. Thus, a single flip-flop (18) and a single FIRQ interrupt service routine suffice to service the four output channels.

The microprocessor firmware FIRQ interrupt service routine then increments the output buffer address pointer by two so that the pointer points to the next sequentially available data storage location in the output buffer. (As previously explained, an attribute code is stored in the output buffer with each data character. Thus, two output buffer storage locations are consumed for each data character and the pointer must therefore be incremented by two.) Two write operations are required to place the incremented pointer in RAM 26 (because the address is 16 bits long, but may be written only eight bits at a time). Before the upper eight bits of the address pointer are written into RAM 26, they are adjusted by octal bus driver 74 to point back to the beginning of the output buffer, if the pointer has been incremented beyond the address of the last available sequential storage location in the output buffer. This may be accomplished because OUTBUFs 28 are located in known portions of microprocessor 24's address space. In the preferred embodiment, octal bus driver 74 substitutes "10CC1XXX" (binary) for the upper eight bits of the address pointer before those bits are written into RAM 26. The letters "CC" denote the number of the output channel currently being serviced by the communications interface and the letters "XXX" denote the lower three bits of the address, which remain unchanged.

The lower eight bits of the address pointer are then written "as is" into RAM 26. As the lower eight bits are written, flip-flop 68 is cleared to signal completion of the FIRQ interrupt. The completion signal is produced by AND gates 76 and 78 and NAND gate 80. Specifically, the output of AND gate 76 is high when flip-flop 68 is set (i.e. an FIRQ interrupt is in progress), a data output operation is in progress (i.e. the R/$\overline{W}$ line is low) and information is being written into RAM 26 (i.e. line $\overline{RAM}$ is low). The output of AND gate 76 is fed into AND gate 78. The other input of AND gate 78 is an inversion of bit 0 of the microprocessor address line. Thus, if the location of RAM 26 addressed by microprocessor 24 is even, the output of AND gate 78 will be high. The output of AND gate 78 is in turn fed into NAND gate 80 which is strobed by microprocessor 24, thereby turning off flip-flop 68 which, in turn, turns off AND gate 76 to prevent resetting of flip-flop 68.

OUTBUFs 28 are cyclical, and, in the preferred embodiment, each comprise 2,048 bytes of contiguous address space within dynamic RAM 54. The address pointer tables stored in static RAM 26 include pointers to the address of the next sequentially available storage location in each output buffer (i.e. the buffer "start" address) and to the address of the "oldest" data character stored in each output buffer which has not yet been output to the output device serviced by the channel associated with the particular output buffer (i.e. the buffer "end" address). The "end" address pointer is incremented by two each time a character stored in an output buffer is transmitted to its associated output device, thereby indicating that an output buffer data storage location has been freed to accept a fresh data character.

As previously described, octal bus driver 74 ensures that the output buffer address pointers stored in RAM 26 "wrap around" to point back to the beginning of the buffer if the pointer address is incremented beyond the address of the last data storage location in the output buffer. However, care must also be taken to ensure that the output buffers are not overflowed by storing new data in buffer storage locations which contain data that has not yet been transferred to an output device. This is accomplished with the aid of ripple counters 32 (Fig. 5).

The firmware which controls the operation of microprocessor 24 may, by comparing the output buffer "start" and "end" address pointers stored in RAM 26, determine whether a particular output buffer has enough room to store at least 128 additional data characters. If the buffer has room for 128 additional data characters then the ripple counter associated with that buffer is cleared. Otherwise, the counter (which is clocked by decoder 82 each time a data character is stored in TBUF 18) is allowed to continue counting. The counter overflows if the count reaches 128. The counter output constitutes the TRDY flag, which is cleared if the counter overflows, to signal the host computer that additional data characters should not be transmitted to the associated output channel. The firmware controlling the operation of microprocessor 24 does not clear counter 32 (thereby raising the TRDY flag to signal the host computer that fresh data may be output to the associated channel) until at least 128 locations in the associated output buffer have been freed.

Microprocessor 24 transfers the data from OUTBUFs 28 to the output devices associated therewith in routine fashion via a conventional IRQ firmware interrupt service routine. Specifically, microprocessor 24 transfers a data character from RAM 54 (in which the output buffers are maintained) to whichever of ACIAs 42 is associated with the output device which is to receive the data character. Octal bus transceiver 88 (FIG. 3) boosts the output drive capability of RAM 54. ACIA 42 converts the data character from parallel to serial format for subsequent transmission to the output device via line driver 44 which converts the data to RS232C levels.

III (c)(ii). Output of Data Attribute Information

Each data character output by the host computer may be preceded by a one-byte attribute code. Before the data character is transferred to the output device, the attribute code is deciphered by the microprocessor firmware, which then takes appropriate action. Typical attributes may include, for example, time delay codes to specify that microprocessor 24 should wait some selected time interval before transmitting the next data character to the output device, a data repeat code to indicate that the particular data character should be repeatedly transmitted to the output device, etc. Appendix A particularizes the attribute codes utilized in the preferred embodiment.

Address decoder 20 signals that a data attribute write operation is in progress by setting its TBUFB output line high and its TBUFA output line low.

The attribute code is then latched into TBUF 18 as though it were a normal data character. The $\overline{ATT11}$ output of flip-flop 56 is set low to signal interrupt controller 22 that an attribute write operation is in progress. Interrupt controller 22 then causes an FIRQ interrupt of microprocessor 24 and provides it with a vector address to an appropriate FIRQ interrupt service routine. The FIRQ interrupt service routine obtains from RAM 26 the address of the output buffer location which is to receive the attribute code and then stores the attribute code in that location by direct transfer from TBUF 18 as described above.

The output buffer address pointer in RAM 26 is not updated after the attribute code has been stored in the output buffer. The reason is that the host computer transmits the attribute code before transmitting the data character associated with the attribute code. The output buffer address pointer in RAM 26 must therefore not be updated until after the data character has been received from the host computer and stored in the output buffer.

To signal completion of the FIRQ interrupt, the FIRQ interrupt service routine does a dummy write operation into an even-addressed scratch location of RAM 26, thereby causing AND gates 76 and 78 and NAND gate 80 to reset flip-flop 68 as previously described, clearing the FIRQ interrupt status.

Programmable timers 34 (FIG. 4) are used by the microprocessor firmware to time the delay of any data output which may be specified via the attribute code. The timers are started by loading them with a delay code specified in the attribute code. When the timers time out, operation of microprocessor 24 is interrupted and the next data character may be outputed.

III (c)(iii).  Output of Channel Control Information

The third type of data output operation is the transmission, by the host computer, of channel

-32-

control information. Such information is interpreted by the microprocessor firmware which may, in turn, adjust the characteristics of the particular channel in some appropriate fashion. Typical channel characteristics which might be controlled could include the channel data transmission rates (which, in the preferred embodiment, may be varied between 150 baud and 19,200 baud), a capability to clear the contents of the input and/or output buffers, and a "flagged input" facility for terminating input device data transmission if the associated INBUF 48 is full. Appendix A particularizes the channel characteristics which may be controlled in the preferred embodiment.

Address decoder 20 signals that the host computer is transmitting channel control information by setting its output line TBUFB low and its output line TBUFA high. One byte of channel control information transmitted by the host computer is then latched into TBUF 18. As previously described, flip-flop 56 sets its $\overline{\text{PORT11}}$ output line low, thereby signaling interrupt controller 22 that a channel control data output operation is in progress. Interrupt controller 22, in turn, causes a vectored FIRQ interrupt whereby microprocessor 24 transfers control to an appropriate firmware interrupt service routine. That interrupt service routine disables the FIRQ hardware (thereby disabling further FIRQ interrupts) and then directly reads the contents of TBUF 18 to obtain the channel control information, decodes the information, and executes the appropriate channel control commands as defined by the firmware programming. The FIRQ hardware is then re-enabled and the interrupt service routine terminates.

Programmable timers 36 are the same devices as timers 34 which enable delayed output of successive data characters. Timers 36 are loaded with predefined codes (supplied by the host computer via the PCTR registers) which control the frequency of a square wave output by the timer. The square wave is used to clock to associated ACIA 42, thereby determining the rate at which data is transferred by the particular input/ output channel.

III (d). Data Input From Input Device to Host Computer

Up to four input devices may be serviced by the communications interface of the preferred embodiment. The input devices present input data in serial fashion via line receivers 46 (one per input channel) which convert from RS232C to TTL voltage levels and transmit the data into the associated ACIAs 42. The receiving ACIA converts the serial input data to parallel form and generates an IRQ interrupt signal to interrupt the operation of microprocessor 24. Microprocessor 24 then polls each of ACIAs 42 to determine which of those four devices caused the interrupt (i.e. to determine which channel received the data character). Once that determination has been made microprocessor 24 obtains from RAM 26 the address of the next sequentially available input buffer storage location which is to receive the input character, stores the input character into that address and then increments the address pointer in RAM 26. If the input buffer is full then the data character is discarded and bit 5 of the associated PSTAT 14 is set for interrogation by the host computer, thereby informing the host computer that the data character has been lost.

Microprocessor 24 regularly examines the input buffer address pointers to determine whether there is any data in any of INBUFs 48 awaiting transmission to the host computer. If a non-empty input buffer is detected then the "oldest" data character in that buffer which has not yet been transmitted to the host computer is extracted from the buffer and written into the associated RBUF 49. RBUF 49 comprises two microcircuit registers (49) which together provide four eight-bit registers, one for each of the four input channels. Presentation of input data to the host computer via RBUFs 49 ensures that the host computer does not have to wait for the input character to be retrieved from the storage buffer when the host is eventually signaled that input data is waiting. The host computer may rapidly extract the data character from RBUFs 49 via bi-directional transceivers 84, thereby minimizing the time taken to complete the data input operation.

When a data character is stored in a particular RBUF 49, the RRDY flat associated therewith is set to signal the host computer that the data character is waiting in RBUF 49 and may be read therefrom by the host computer.

If the host computer receiver interrupts are enabled for a particular input channel, then setting of the RRDY flag for that channel automatically interrupts the host computer, which then transfers control to an appropriate interrupt service routine which reads the data character from RBUF 49. If the host computer receiver interrupts are disabled then the host computer must periodically examine the RRDY flags maintained in RCSRs 10 to determine that a data character is waiting in RBUF 49 for input to the host computer.

Address decoder 20 determines that the host computer has read the data character from RBUF 49 by detecting the RBUF register address presented by the host computer. Upon such detection, decoder 20 clears the associated RRDY flag by clearing one of the four latches comprising quad latch 70. The four output lines of latch 70 constitute inversions of the RRDY flags for each input channel.

Address decoder 20 also sets its $\overline{RBUFR}$ output line low to signal that the host computer has read the data character from RBUF 49. The $\overline{RBUFR}$ signal causes the FINT input of flip-flop 56 (FIG. 4) to go high which, in turn, enables two-to-four line decoder 60 which then provides a one-of-four signal to interrupt controller 22 representative of the particular channel from which the input character was initially received. Interrupt controller 22 then generates an FIRQ interrupt, causing microprocessor 24 to vector to an appropriate firmware interrupt service routine. That routine clears a firmware replica RRDY flag which is maintained at an even address in RAM 26. Therefore updating of the replica RRDY flag terminates the FIRQ servicing mode by causing flip-flop 68 to reset as previously explained.

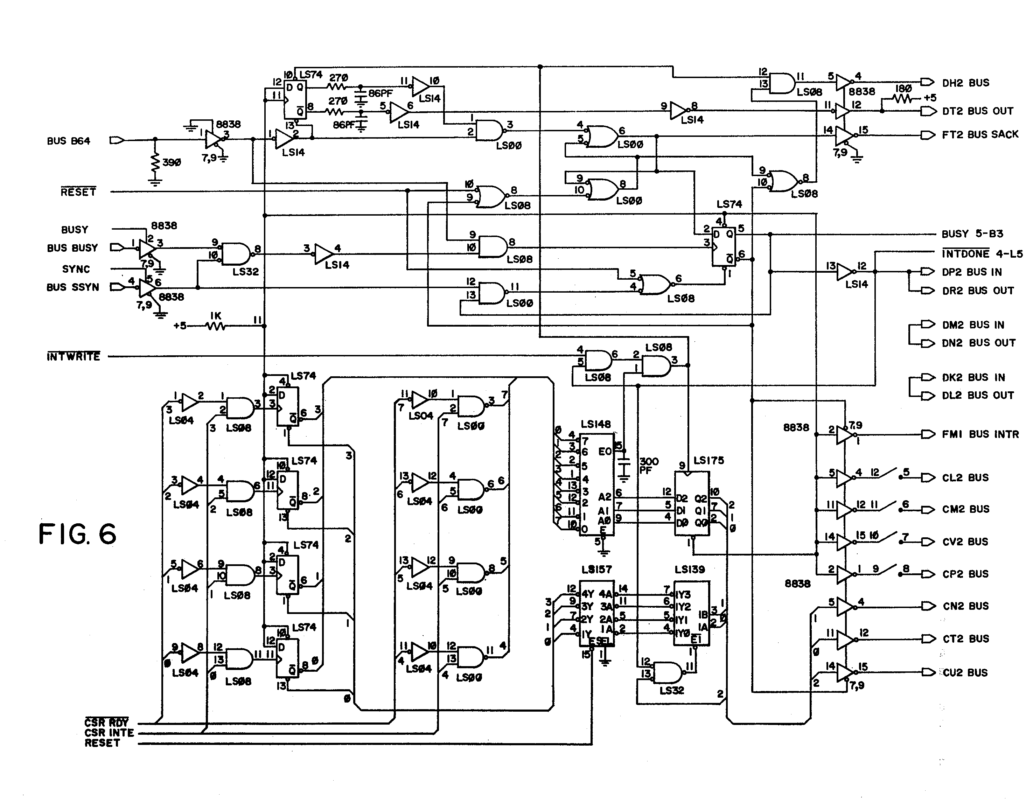

Component values for the microcircuitry and other electronic components included in the communications interface of the preferred embodiment are specified in FIGS. 2-6.

Appendix B is a listing of the microcode which programs the operation of address decoder 20 (a field programmable ROM patch microcircuit) in the preferred embodiment.

As will be apparent to those skilled in the art, the preferred embodiment hereinbefore described is merely representative of one particular way in which the invention may be reduced to practice. Those skilled in the art may prefer alternate microcircuitry configurations for achieving the objects of the invention. Similarly, the firmware which programs the operation of microprocessor 24 may be adapted in many ways to suit the needs of any particular environment in a manner which is well understood by those skilled in the art. Thus, the foregoing description of the preferred embodiment is not to be taken as limiting the invention defined in the appended claims.

0134115

.TITLE LTDRIV LT-11 QUAD COMMUNICATIONS INTERFACE DR
.IDENT /V6.0/    ; (SAME AS 'IDENT'.'MOD' BELOW)  25-MAY-82

; WRITTEN BY LANNIE J. TIERNEY
; .IDENT AND 'IDENT'.'MOD' CONTAINS THE CURRENT VERSION NUMB
; THE VERSION IS DISPLAYED DYNAMICALLY IN SELF TEST START-UP

; VERSION 5.0 WAS THE FIRST OFFICIALLY RELEASED VERSION OF T
; FIRMWARE (11-NOV-81)

; VERSION 5.1 CONTAINED THE FOLLOWING ENHANCEMENTS:
;        HOLD MODE              ALLOWS BLOCK MOVES OF INPUT
;        RELOAD HOST INPUT      RELOADS LAST VALID HOST INPU
;        FLAGGED INPUT          XON/XOFF CONTROL TO PREVENT
;        LOCAL ECHO             REMOVED
;        TERMINAL INPUT STATUS  IS NOW CLEARED AFTER INPUT R
;        BREAK GENERATION       ADDED

; VERSIONS 5.2 - 5.9 CLEANED UP PROBLEMS WITH VERSION 5.1
; VERSION 6.0 CHANGED THE PORT CONTROL REQUEST PROTOCOL


; THIS IS THE SYSTEM FIRMWARE FOR THE LT-11 QUAD COMMUNICATI
; FACE, RESIDING IN A SINGLE ROM ON THE BOARD.  MOST OF THE
; SPENT SERVICING INTERRUPTS.   HOST DATA TRANSFERS ARE DONE
; VIA FIRQ INTERRUPT ROUTINES, ALONG WITH SPECIAL EXPEDITING
; TERMINAL I/O IS DONE THROUGH IRQ INTERRUPT ROUTINES.  THE
; IS USED TO START EVENTS.  A 2K BYTE INPUT BUFFER AND A 2K
; OUTPUT/ATTRIBUTE BUFFER FOR EACH OF THE FOUR CHANNELS IS U
; STORING INPUT AND OUTPUT CHARACTERS.

; SPECIAL HARDWARE CONSIDERATIONS:
; THE BUFFER MEMORY IS MADE UP OF 16K OF DYNAMIC RAM.  TO IN
; READ/WRITE ACCESS IS NOT MADE DURING A REFRESH CYCLE, A RE
; MUST BE REQUESTED IMMEDIATELY PRIOR TO READING OR WRITING.
; DONE BY DOING A SCRATCH RAM (ADDRESSES 0000-03FF) ACCESS.
; BUFFER READ/WRITE REQUEST MUST BE MADE WITHIN 20 USEC FOLL
; THIS REQUIREMENT ALLOWED FOR A SIMPLER HARDWARE DESIGN WIT
; SIGNIFICANT PERFORMANCE DEGRADATION.

; ALSO, A BUFFER MEMORY READ/WRITE REQUEST MAY TAKE LONGER T
; CYCLE, SO 16 BIT READ/WRITES TO BUFFER MEMORY ARE NOT PERF
; LDD, STD, LDX, STX).   OTHER INSTRUCTIONS THAT DO READ/MODI
; OPERATIONS, SUCH AS NEG, COM, CLR, ETC. CAN CAUSE AMBIGUOU
; PROBLEMS AND ARE AVOIDED WHEN READING OR WRITING BUFFER ME

```
;ASSEMBLY INSTRUCTIONS UNDER RT-11
;        R 6809
;        LTDRIV=LTDRIV
;        ^C
;        R CLNK
;        LTDRIV=LTDRIV/L
;        ^C
;        R PROMPV
;        LTDRIV.ROM/M/C:4096./L:4096.=LTDRIV.LDA      (RSTS RT-1
;        LTDRIV.ROM/M/C!4096/L!4096=LTDRIV.LDA        (RT-11 V2B
;        ^C


        .RADIX 16

        .ASECT

        .SBTTL SPECIAL CONSTANTS
        IDENT=6           ;PROGRAM VERSION NUMBER
        MOD=0             ;PROGRAM MODIFICATION LEVEL

        IMASK=10          ;IRQ INTERRUPT MASK
        FMASK=40          ;FIRQ INTERRUPT MASK
        IFMASK=50         ;IRQ/FIRQ INTERRUPT MASK
        MRESET=3          ;ACIA MASTER RESET CONSTANT
        TXON=OB5          ;TERMINAL TRANSMIT INTERRUPTS ENABLE CONSTAN
                          ;8 BITS + 1 STOP BIT, RECEIVE AND TRANSMIT I
                        - ;RTS=LOW
        TXOFF=95          ;TERMINAL TRANSMIT INTERRUPTS DISABLE CONSTA
                          ;8 BITS + 1 STOP BIT, RECEIVE INTERRUPT ON,
                          ;TRANSMIT INTERRUPT OFF, RTS=LOW
        TXROFF=15         ;TERMINAL TRANSMIT/RECEIVE INTERRUPTS CONSTA
                          ;8 BITS DATA + 1 STOP BIT, NO INTERRUPTS, RT
        BREAK=OF5         ;BREAK GENERATION/RECEIVE INTERRUPTS CONSTAN
                          ;8 BITS DATA + 1 STOP BIT, RECEIVE INTERRUPT
        FSHOT=82          ;PTM CONTINUOUS TIMER OUTPUT CONSTANT
        SSHOT=OE2         ;PTM SINGLE-SHOT TIMER OUTPUT CONSTANT
        MSHOT=00          ;PTM MASKED INTERRUPT CONSTANT
        MAXRM=20          ;MAXIMUM SPACE IN INPUT BUFFER BEFORE SENDIN

        ;ASCII CONTROL CHARACTER DEFINITIONS
        NUL=00            ;NULL
        SOH=01            ;CTRL A
        ETX=03            ;CTRL C
        LF=OA             ;LINEFEED
        CR=OD             ;CARRIAGE RETURN
        SI=OF             ;CTRL O
        XON=11            ;CTRL Q
        XOFF=13           ;CTRL S
        CAN=18            ;CTRL X
        ESC=O1B           ;ESCAPE
        SPACE=20          ;SPACE

        .SBTTL BAUD RATE CONSTANTS
        ;FOR PTM SETTING
        B150=OFF          ;150   BAUD
        B300=7F           ;300   BAUD
```

```
B600=3F            ;600    BAUD
B1200=1F           ;1200   BAUD
B2400=0F           ;2400   BAUD
B4800=07           ;4800   BAUD
B9600=03           ;9600   BAUD
B19200=01          ;19200  BAUD


.SBTTL HARDWARE ADDRESSES
PTM0=4202          ;CHANNEL 0 PROGRAMMABLE INTERRUPT TIMER LATC
CLOCK0=4602        ;CHANNEL 0 TERMINAL BAUD RATE LATCH ADDRESS
ACIA0=4800         ;CHANNEL 0 TERMINAL PORT
HWCLR0=5000        ;CHANNEL 0 TRANSMIT COUNTER CLEAR
PSTR0=6000         ;CHANNEL 0 PORT STATUS REGISTER
RBUF0=7000         ;CHANNEL 0 HOST INPUT REGISTER

PTM1=4204          ;CHANNEL 1 PROGRAMMABLE INTERRUPT TIMER LATC
CLOCK1=4604        ;CHANNEL 1 TERMINAL BAUD RATE LATCH ADDRESS
ACIA1=4A00         ;CHANNEL 1 TERMINAL PORT
HWCLR1=5001        ;CHANNEL 1 TRANSMIT COUNTER CLEAR
PSTR1=6001         ;CHANNEL 1 PORT STATUS REGISTER
RBUF1=7001         ;CHANNEL 1 HOST INPUT REGISTER

PTM2=4402          ;CHANNEL 2 PROGRAMMABLE INTERRUPT TIMER LATC
CLOCK2=4606        ;CHANNEL 2 TERMINAL BAUD RATE LATCH ADDRESS
ACIA2=4C00         ;CHANNEL 2 TERMINAL PORT
HWCLR2=5002        ;CHANNEL 2 TRANSMIT COUNTER CLEAR
PSTR2=6002         ;CHANNEL 2 PORT STATUS REGISTER
RBUF2=7002         ;CHANNEL 2 HOST INPUT REGISTER

PTM3=4404          ;CHANNEL 3 PROGRAMMABLE INTERRUPT TIMER LATC
CLOCK3=4406        ;CHANNEL 3 TERMINAL BAUD RATE LATCH ADDRESS
ACIA3=4E00         ;CHANNEL 3 TERMINAL PORT
HWCLR3=5003        ;CHANNEL 3 TRANSMIT COUNTER CLEAR
PSTR3=6003         ;CHANNEL 3 PORT STATUS REGISTER
RBUF3=7003         ;CHANNEL 3 HOST INPUT REGISTER

PICON=0FFE0        ;PROGRAMMABLE INTERRUPT CONTROLLER ENABLE AD
PICOFF=0FFFE       ;PROGRAMMABLE INTERRUPT CONTROLLER DISABLE A
TBUF=4000          ;HOST OUTPUT REGISTER
```

0134115

```
        . SBTTL  RAM  AREA

.SBTTL   CHANNEL  O  POINTER  TABLE
;CONTAINS  BUFFER  POINTERS,  HARDWARE  POINTERS,  AND  FLAGS

;SPECIAL  NOTES:
;STATO  MUST  BE  THE  FIRST  ENTRY  IN  THE  TABLE
;THE  TOP  BYTE  OF  PUSHOO  MUST  BE  AT  AN  ODD  ADDRESS
;INFLGO  AND  HOLDO  MUST  BE  AT  EVEN  ADDRESSES
;THESE  RESTRICTIONS  ARE  DUE  TO  SPECIAL  FIRQ  HARDWARE

.=0000
STATO:    .BLKB  1          ;PORT  TERMINAL  INPUT  STATUS  BYTE
PUSHOO:  .BLKB  2          ;OUTPUT  BUFFER  WRITE  POINTER
POPOO:    .BLKB  2          ;OUTPUT  BUFFER  READ  POINTER
PUSHIO:  .BLKB  2          ;INPUT  BUFFER  WRITE  POINTER
POPIO:    .BLKB  2          ;INPUT  BUFFER  READ  POINTER
OTFLGO:  .BLKB  1          ;OUTPUT  IN  PROGRESS  FLAG  (NOT  ZERO=T
INFLGO:  .BLKB  1          ;INPUT  WAITING  FOR  HOST  FLAG  (NOT  ZE
```

```
CCFLGO: .BLKB 1          ;CONTROL C RECEIVED FLAG (NOT ZERO=T
HOLDO:  .BLKB 1          ;HOLD MODE FLAG (NOT ZERO=TRUE, MINU
LOOPO:  .BLKB 2          ;REPEAT MODE LOOP STARTING ADDRESS A
GOFLGO: .BLKB 1          ;FLAG FOR ENABLING OUTPUT TO TERMINA
TPORTO: .BLKB 2          ;TERMINAL PORT ADDRESS
TTCSRO: .BLKB 2          ;TERMINAL PORT CONTROL/STATUS REGIST
INPUTO: .BLKB 2          ;CONTAINS POINTER TO TERMINAL INPUT
OUTPTO: .BLKB 2          ;CONTAINS POINTER TO TERMINAL OUTPUT
HRBUFO: .BLKB 2          ;HOST INPUT REGISTER ADDRESS
PSTATO: .BLKB 2          ;PORT STATUS REGISTER ADDRESS
TTCLRO: .BLKB 2          ;TRANSMIT COUNTER CLEAR ADDRESS
PTCTLO: .BLKB 2          ;INTERRUPT TIMER CONTROL REGISTER AD
TIMERO: .BLKB 2          ;INTERRUPT TIMER ADDRESS
PTMONO: .BLKB 1          ;INTERRUPT TIMER ENABLE CONSTANT
PTMSKO: .BLKB 1          ;INTERRUPT TIMER DISABLE CONSTANT
RATEO:  .BLKB 2          ;TERMINAL BAUD RATE LATCH ADDRESS
POINTO: .BLKB 2          ;POINTER TABLE STARTING ADDRESS
ATTRO:  .BLKB 1          ;LAST READ OUTPUT ATTRIBUTES
RLOADO: .BLKB 1          ;INTERRUPT TIMER RELOAD COUNT
KILLIO: .BLKB 2          ;KILL INPUT BUFFER FLAG/ADDRESS (MIN
KILLOO: .BLKB 2          ;KILL OUTPUT BUFFER FLAG/ADDRESS (MI
QUEUEO: .BLKB 1          ;QUEUED PORT CONTROL REQUEST (NOT ZE
SPEEDO: .BLKB 1          ;TERMINAL BAUD RATE VALUE
MARKO:  .BLKB 1          ;CONTAINS CHANNEL INDICATOR BIT IN L
PRIVO:  .BLKB 1          ;PRIVILEGED USER FLAG (NOT ZERO=TRUE
OBOTO:  .BLKB 2          ;CONTAINS POINTER TO START OF OUTPUT
NSFLGO: .BLKB 1          ;NON-TERMINAL INPUT STATUS IN HW STA
FROZO:  .BLKB 1          ;XOFF SENT TO TERMINAL FLAG (NOT ZER
SHIFTO: .BLKB 1          ;ROTATING BIT PATTERN FOR HOST-INITI
ECHOO:  .BLKB 1          ;ECHO-BACK FLAG FOR SELF TEST (NOT Z
FLAGDO: .BLKB 1          ;FLAGGED INPUT MODE FLAG (NOT ZERO=T
CLONEO: .BLKB 1          ;RELOAD HOST INPUT DATA FLAG (NOT ZE
OLDINO: .BLKB 1          ;LAST VALID HOST INPUT DATA
LASTO:  .BLKB 1          ;LAST VALID TERMINAL INPUT STATUS WR

.=003E
NOFIPO: .BLKB 1          ;DUMMY LOCATION FOR ENDFIP


.SBTTL   CHANNEL 1 POINTER TABLE
;CONTAINS BUFFER POINTERS, HARDWARE POINTERS, AND FLAGS

;SPECIAL NOTES:
;STAT1 MUST BE THE FIRST ENTRY IN THE TABLE
;THE TOP BYTE OF PUSHO1 MUST BE AT AN ODD ADDRESS
;INFLG1 AND HOLD1 MUST BE AT EVEN ADDRESSES
;THESE RESTRICTIONS ARE DUE TO SPECIAL FIRQ HARDWARE

.=0040
STAT1:   .BLKB 1          ;PORT TERMINAL INPUT STATUS BYTE
PUSHO1:  .BLKB 2          ;OUTPUT BUFFER WRITE POINTER
POPO1:   .BLKB 2          ;OUTPUT BUFFER READ POINTER
PUSHI1:  .BLKB 2          ;INPUT BUFFER WRITE POINTER
POPI1:   .BLKB 2          ;INPUT BUFFER READ POINTER
OTFLG1:  .BLKB 1          ;OUTPUT IN PROGRESS FLAG (NOT ZERO=T
INFLG1:  .BLKB 1          ;INPUT WAITING FOR HOST FLAG (NOT ZE
CCFLG1:  .BLKB 1          ;CONTROL C RECEIVED FLAG (NOT ZERO=T
HOLD1:   .BLKB 1          ;HOLD MODE FLAG (NOT ZERO=TRUE, MINU
```

```
LOOP1:   . BLKB 2          ;REPEAT MODE LOOP STARTING ADDRESS A
GOFLG1:  . BLKB 1          ;FLAG FOR ENABLING OUTPUT TO TERMINA
TPORT1:  . BLKB 2          ;TERMINAL PORT ADDRESS
TTCSR1:  . BLKB 2          ;TERMINAL PORT CONTROL/STATUS REGIST
INPUT1:  . BLKB 2          ;CONTAINS POINTER TO TERMINAL INPUT
OUTPT1:  . BLKB 2          ;CONTAINS POINTER TO TERMINAL OUTPUT
HRBUF1:  . BLKB 2          ;HOST INPUT REGISTER ADDRESS
PSTAT1:  . BLKB 2          ;PORT STATUS REGISTER ADDRESS
TTCLR1:  . BLKB 2          ;TRANSMIT COUNTER CLEAR ADDRESS
PTCTL1:  . BLKB 2          ;INTERRUPT TIMER CONTROL REGISTER AD
TIMER1:  . BLKB 2          ;INTERRUPT TIMER ADDRESS
PTMON1:  . BLKB 1          ;INTERRUPT TIMER ENABLE CONSTANT
PTMSK1:  . BLKB 1          ;INTERRUPT TIMER DISABLE CONSTANT
RATE1:   . BLKB 2          ;TERMINAL BAUD RATE LATCH ADDRESS
POINT1:  . BLKB 2          ;POINTER TABLE STARTING ADDRESS
ATTR1:   . BLKB 1          ;LAST READ OUTPUT ATTRIBUTES
RLOAD1:  . BLKB 1          ;INTERRUPT TIMER RELOAD COUNT
KILLI1:  . BLKB 2          ;KILL INPUT BUFFER FLAG/ADDRESS (MIN
KILLO1:  . BLKB 2          ;KILL OUTPUT BUFFER FLAG/ADDRESS (MI
QUEUE1:  . BLKB 1          ;QUEUED PORT CONTROL REQUEST (NOT ZE
SPEED1:  . BLKB 1          ;TERMINAL BAUD RATE VALUE
MARK1:   . BLKB 1          ;CONTAINS CHANNEL INDICATOR BIT IN L
PRIV1:   . BLKB 1          ;PRIVILEGED USER FLAG (NOT ZERO=TRUE
OBOT1:   . BLKB 2          ;CONTAINS POINTER TO START OF OUTPUT
NSFLG1:  . BLKB 1          ;NON-TERMINAL INPUT STATUS IN HW STA
FROZ1:   . BLKB 1          ;XOFF SENT TO TERMINAL FLAG (NOT ZER
SHIFT1:  . BLKB 1          ;ROTATING BIT PATTERN FOR HOST-INITI
ECHO1:   . BLKB 1          ;ECHO-BACK FLAG FOR SELF TEST (NOT Z
FLAGD1:  . BLKB 1          ;FLAGGED INPUT MODE FLAG (NOT ZERO=T
CLONE1:  . BLKB 1          ;RELOAD HOST INPUT DATA FLAG (NOT ZE
OLDIN1:  . BLKB 1          ;LAST VALID HOST INPUT DATA
LAST1:   . BLKB 1          ;LAST VALID TERMINAL INPUT STATUS WR

. =007E
NOFIP1:  . BLKB 1          ;DUMMY LOCATION FOR ENDFIP
```

```
        .SBTTL   CHANNEL 2 POINTER TABLE
;CONTAINS BUFFER POINTERS, HARDWARE POINTERS, AND FLAGS

;SPECIAL NOTES:
;STAT2 MUST BE THE FIRST ENTRY IN THE TABLE
;THE TOP BYTE OF PUSHO2 MUST BE AT AN ODD ADDRESS
;INFLG2 AND HOLD2 MUST BE AT EVEN ADDRESSES
;THESE RESTRICTIONS ARE DUE TO SPECIAL FIRQ HARDWARE

.=0080
STAT2:  .BLKB 1                 ;PORT TERMINAL INPUT STATUS BYTE
PUSHO2: .BLKB 2                 ;OUTPUT BUFFER WRITE POINTER
POPO2:  .BLKB 2                 ;OUTPUT BUFFER READ POINTER
PUSHI2: .BLKB 2                 ;INPUT BUFFER WRITE POINTER
POPI2:  .BLKB 2                 ;INPUT BUFFER READ POINTER
OTFLG2: .BLKB 1                 ;OUTPUT IN PROGRESS FLAG (NOT ZERO=T
INFLG2: .BLKB 1                 ;INPUT WAITING FOR HOST FLAG (NOT ZE
CCFLG2: .BLKB 1                 ;CONTROL C RECEIVED FLAG (NOT ZERO=T
HOLD2:  .BLKB 1                 ;HOLD MODE FLAG (NOT ZERO=TRUE, MINU
LOOP2:  .BLKB 2                 ;REPEAT MODE LOOP STARTING ADDRESS A
GOFLG2: .BLKB 1                 ;FLAG FOR ENABLING OUTPUT TO TERMINA
TPORT2: .BLKB 2                 ;TERMINAL PORT ADDRESS
TTCSR2: .BLKB 2                 ;TERMINAL PORT CONTROL/STATUS REGIST
```

```
INPUT2: .BLKB 2          ;CONTAINS POINTER TO TERMINAL INPUT
OUTPT2: .BLKB 2          ;CONTAINS POINTER TO TERMINAL OUTPUT
HRBUF2: .BLKB 2          ;HOST INPUT REGISTER ADDRESS
PSTAT2: .BLKB 2          ;PORT STATUS REGISTER ADDRESS
TTCLR2: .BLKB 2          ;TRANSMIT COUNTER CLEAR ADDRESS
PTCTL2: .BLKB 2          ;INTERRUPT TIMER CONTROL REGISTER AD
TIMER2: .BLKB 2          ;INTERRUPT TIMER ADDRESS
PTMON2: .BLKB 1          ;INTERRUPT TIMER ENABLE CONSTANT
PTMSK2: .BLKB 1          ;INTERRUPT TIMER DISABLE CONSTANT
RATE2:  .BLKB 2          ;TERMINAL BAUD RATE LATCH ADDRESS
POINT2: .BLKB 2          ;POINTER TABLE STARTING ADDRESS
ATTR2:  .BLKB 1          ;LAST READ OUTPUT ATTRIBUTES
RLOAD2: .BLKB 1          ;INTERRUPT TIMER RELOAD COUNT
KILLI2: .BLKB 2          ;KILL INPUT BUFFER FLAG/ADDRESS (MIN
KILLO2: .BLKB 2          ;KILL OUTPUT BUFFER FLAG/ADDRESS (MI
QUEUE2: .BLKB 1          ;QUEUED PORT CONTROL REQUEST (NOT ZE
SPEED2: .BLKB 1          ;TERMINAL BAUD RATE VALUE
MARK2:  .BLKB 1          ;CONTAINS CHANNEL INDICATOR BIT IN L
PRIV2:  .BLKB 1          ;PRIVILEGED USER FLAG (NOT ZERO=TRUE
OBOT2:  .BLKB 2          ;CONTAINS POINTER TO START OF OUTPUT
NSFLG2: .BLKB 1          ;NON-TERMINAL INPUT STATUS IN HW STA
FROZ2:  .BLKB 1          ;XOFF SENT TO TERMINAL FLAG (NOT ZER
SHIFT2: .BLKB 1          ;ROTATING BIT PATTERN FOR HOST-INITI
ECHO2:  .BLKB 1          ;ECHO-BACK FLAG FOR SELF TEST (NOT Z
FLAGD2: .BLKB 1          ;FLAGGED INPUT MODE FLAG (NOT ZERO=T
CLONE2: .BLKB 1          ;RELOAD HOST INPUT DATA FLAG (NOT ZE
OLDIN2: .BLKB 1          ;LAST VALID HOST INPUT DATA
LAST2:  .BLKB 1          ;LAST VALID TERMINAL INPUT STATUS WR

        .=00BE
NOFIP2: .BLKB 1          ;DUMMY LOCATION FOR ENDFIP


        .SBTTL  CHANNEL 3 POINTER TABLE
        ;CONTAINS BUFFER POINTERS, HARDWARE POINTERS, AND FLAGS

        ;SPECIAL NOTES:
        ;STAT3 MUST BE THE FIRST ENTRY IN THE TABLE
        ;THE TOP BYTE OF PUSHO3 MUST BE AT AN ODD ADDRESS
        ;INFLG3 AND HOLD3 MUST BE AT EVEN ADDRESSES
        ;THESE RESTRICTIONS ARE DUE TO SPECIAL FIRQ HARDWARE

        .=00C0
STAT3:  .BLKB 1          ;PORT TERMINAL INPUT STATUS BYTE
PUSHO3: .BLKB 2          ;OUTPUT BUFFER WRITE POINTER
POPO3:  .BLKB 2          ;OUTPUT BUFFER READ POINTER
PUSHI3: .BLKB 2          ;INPUT BUFFER WRITE POINTER
POPI3:  .BLKB 2          ;INPUT BUFFER READ POINTER
OTFLG3: .BLKB 1          ;OUTPUT IN PROGRESS FLAG (NOT ZERO=T
INFLG3: .BLKB 1          ;INPUT WAITING FOR HOST FLAG (NOT ZE
CCFLG3: .BLKB 1          ;CONTROL C RECEIVED FLAG (NOT ZERO=T
HOLD3:  .BLKB 1          ;HOLD MODE FLAG (NOT ZERO=TRUE, MINU
LOOP3:  .BLKB 2          ;REPEAT MODE LOOP STARTING ADDRESS A
GOFLG3: .BLKB 1          ;FLAG FOR ENABLING OUTPUT TO TERMINA
TPORT3: .BLKB 2          ;TERMINAL PORT ADDRESS
TTCSR3: .BLKB 2          ;TERMINAL PORT CONTROL/STATUS REGIST
INPUT3: .BLKB 2          ;CONTAINS POINTER TO TERMINAL INPUT
OUTPT3: .BLKB 2          ;CONTAINS POINTER TO TERMINAL OUTPUT
```

```
HRBUF3: .BLKB 2          ;HOST INPUT REGISTER ADDRESS
PSTAT3: .BLKB 2          ;PORT STATUS REGISTER ADDRESS
TTCLR3: .BLKB 2          ;TRANSMIT COUNTER CLEAR ADDRESS
PTCTL3: .BLKB 2          ;INTERRUPT TIMER CONTROL REGISTER AD
TIMER3: .BLKB 2          ;INTERRUPT TIMER ADDRESS
PTMON3: .BLKB 1          ;INTERRUPT TIMER ENABLE CONSTANT
PTMSK3: .BLKB 1          ;INTERRUPT TIMER DISABLE CONSTANT
RATE3:  .BLKB 2          ;TERMINAL BAUD RATE LATCH ADDRESS
POINT3: .BLKB 2          ;POINTER TABLE STARTING ADDRESS
ATTR3:  .BLKB 1          ;LAST READ OUTPUT ATTRIBUTES
RLOAD3: .BLKB 1          ;INTERRUPT TIMER RELOAD COUNT
KILLI3: .BLKB 2          ;KILL INPUT BUFFER FLAG/ADDRESS (MIN
KILLO3: .BLKB 2          ;KILL OUTPUT BUFFER FLAG/ADDRESS (MI
QUEUE3: .BLKB 1          ;QUEUED PORT CONTROL REQUEST (NOT ZE
SPEED3: .BLKB 1          ;TERMINAL BAUD RATE VALUE
MARK3:  .BLKB 1          ;CONTAINS CHANNEL INDICATOR BIT IN L
PRIV3:  .BLKB 1          ;PRIVILEGED USER FLAG (NOT ZERO=TRUE
OBOT3:  .BLKB 2          ;CONTAINS POINTER TO START OF OUTPUT
NSFLG3: .BLKB 1          ;NON-TERMINAL INPUT STATUS IN HW STA
FROZ3:  .BLKB 1          ;XOFF SENT TO TERMINAL FLAG (NOT ZER
SHIFT3: .BLKB 1          ;ROTATING BIT PATTERN FOR HOST-INITI
ECHO3:  .BLKB 1          ;ECHO-BACK FLAG FOR SELF TEST (NOT Z
FLAGD3: .BLKB 1          ;FLAGGED INPUT MODE FLAG (NOT ZERO=T
CLONE3: .BLKB 1          ;RELOAD HOST INPUT DATA FLAG (NOT ZE
OLDIN3: .BLKB 1          ;LAST VALID HOST INPUT DATA
LAST3:  .BLKB 1          ;LAST VALID TERMINAL INPUT STATUS WR

.SBTTL  SPECIAL STORAGE LOCATIONS
.=OOFC
ENDFIP: .BLKB 1          ;DUMMY LOCATION, WHEN WRITTEN TO, CA
                        ;SPECIAL INTERRUPT HARDWARE.  THIS LOCATION
                        ;MUST RESIDE AT AN EVEN ADDRESS
```

```
        .SBTTL   SCRATCH LOCATIONS FOR OPEN MODE AND SELF TES
.=0100
IORATE:
                 ;SELF TEST TERMINAL BAUD COUNT FOR ERRORS
OPEFLG: .BLKB 1          ;OPEN MODE LOCATION OPEN FLAG (NOT Z
OPEPNT:
                 ;OPEN MODE INPUT BUFFER POINTER OFFSET
CLKPNT: .BLKB 2          ;CONTAINS POINTER TO NEXT BAUD RATE
TRACE:
                 ;CONTAINS IRQ INTERRUPT STATUS FOR SELF TEST
OPEBUF: .BLKB 2          ;OPEN MODE INPUT BUFFER FOR ADDRESS
EXPDAT:
                 ;CONTAINS EXPECTED DATA FOR SELF TEST
BLANK:  .BLKB 1          ;OPEN MODE SCRATCH LOCATION FOR INPU
RECDAT:
                 ;CONTAINS RECEIVED DATA FOR SELF TEST
OPEDAT: .BLKB 1          ;OPEN MODE INPUT BUFFER FOR DATA SPE
IOCHAN: .BLKB 1          ;CURRENT CHANNEL BEING TESTED FOR SE
IOATT:  .BLKB 1          ;ATTRIBUTE STORAGE FOR SELF TEST I/O
ERRFMT: .BLKB 1          ;ERROR FORMAT FOR SELF TEST I/O ERRO
ENDRAM=.

.SBTTL   STACK
.=0400
STACK:  .BLKB 1          ;STACK MOVES TOWARDS LOW MEMORY FROM
```

```
.SBTTL POINTER TABLE OFFSETS
STATX=STATO-STATO               ;POINTS TO PORT TERMINAL INPUT STATU
PUSHOX=PUSHOO-STATO             ;POINTS TO OUTPUT BUFFER WRITE POINT
POPOX=POPOO-STATO               ;POINTS TO OUTPUT BUFFER READ POINTE
PUSHIX=PUSHIO-STATO             ;POINTS TO INPUT BUFFER WRITE POINTE
POPIX=POPIO-STATO               ;POINTS TO INPUT BUFFER READ POINTER
OTFLGX=OTFLGO-STATO             ;POINTS TO OUTPUT IN PROGRESS FLAG
INFLGX=INFLGO-STATO             ;POINTS TO INPUT WAITING FOR HOST FL
CCFLGX=CCFLGO-STATO             ;POINTS TO CONTROL C RECEIVED FLAG
HOLDX=HOLDO-STATO               ;POINTS TO HOLD MODE FLAG
LOOPX=LOOPO-STATO               ;POINTS TO REPEAT MODE LOOP STARTING
GOFLGX=GOFLGO-STATO             ;POINTS TO TERMINAL ENABLE OUTPUT FL
TPORTX=TPORTO-STATO             ;POINTS TO ADDRESS OF TERMINAL PORT
TTCSRX=TTCSRO-STATO             ;POINTS TO ADDRESS OF TERMINAL CONTR
INPUTX=INPUTO-STATO             ;POINTS TO TERMINAL INPUT SERVICE RO
OUTPTX=OUTPTO-STATO             ;POINTS TO TERMINAL OUTPUT SERVICE R
HRBUFX=HRBUFO-STATO             ;POINTS TO ADDRESS OF HOST INPUT REG
PSTATX=PSTATO-STATO             ;POINTS TO ADDRESS OF PORT STATUS RE
TTCLRX=TTCLRO-STATO             ;POINTS TO ADDRESS OF TRANSMIT COUNT
PTCTLX=PTCTLO-STATO             ;POINTS TO TIMER CONTROL REGISTER AD
TIMERX=TIMERO-STATO             ;POINTS TO ADDRESS OF INTERRUPT TIME
PTMONX=PTMONO-STATO             ;POINTS TO INTERRUPT TIMER ENABLE CO
PTMSKX=PTMSKO-STATO             ;POINTS TO INTERRUPT TIMER DISABLE C
RATEX=RATEO-STATO               ;POINTS TO ADDRESS OF TERMINAL BAUD
POINTX=POINTO-STATO             ;POINTS TO START OF TABLE POINTER AD
ATTRX=ATTRO-STATO               ;POINTS TO LAST READ OUTPUT ATTRIBUT
RLOADX=RLOADO-STATO             ;POINTS TO INTERRUPT TIMER RELOAD CO
KILLIX=KILLIO-STATO             ;POINTS TO KILL INPUT BUFFER FLAG/AD
KILLOX=KILLOO-STATO             ;POINTS TO KILL OUTPUT BUFFER FLAG/A
QUEUEX=QUEUEO-STATO             ;POINTS TO QUEUED PORT CONTROL REQUE
SPEEDX=SPEEDO-STATO             ;POINTS TO TERMINAL BAUD RATE VALUE
MARKX=MARKO-STATO               ;POINTS TO CHANNEL INDICATOR
PRIVX=PRIVO-STATO               ;POINTS TO PRIVILEGED USER FLAG
OBOTX=OBOTO-STATO               ;POINTS TO START OF OUTPUT BUFFER PO
NSFLGX=NSFLGO-STATO             ;POINTS TO HW STATUS HOLDS NON-TERMI
FROZX=FROZO-STATO               ;POINTS TO XOFF SENT TO TERMINAL FLA
SHIFTX=SHIFTO-STATO             ;POINTS TO ROTATING BIT PATTERN FOR
ECHOX=ECHOO-STATO               ;POINTS TO SELF TEST ECHO-BACK FLAG
FLAGDX=FLAGDO-STATO             ;POINTS TO FLAGGED INPUT MODE FLAG
CLONEX=CLONEO-STATO             ;POINTS TO RELOAD HOST INPUT DATA FL
OLDINX=OLDINO-STATO             ;POINTS TO LAST VALID HOST INPUT DAT
LASTX=LASTO-STATO               ;POINTS TO LAST VALID TERMINAL INPUT

.SBTTL MISCELLANEOUS OFFSETS
CLKMAX=MAXTBL-CLKTBL            ;POINTS TO CORRECT POSITION IN BAUD
CLKMIN=MINTBL-CLKTBL            ;POINTS TO CORRECT POSITION IN BAUD
```

```
        .SBTTL INPUT AND OUTPUT BUFFERS
;ALL BUFFERS ARE CIRCULAR
.=8000
INBUFO: .BLKB 800           ;CHANNEL 0 INPUT BUFFER
OTBUFO: .BLKB 800           ;CHANNEL 0 OUTPUT BUFFER

;9000
INBUF1: .BLKB 800           ;CHANNEL 1 INPUT BUFFER
OTBUF1: .BLKB 800           ;CHANNEL 1 OUTPUT BUFFER

;0A000
```

0134115

```
INBUF2: .BLKB 800          ;CHANNEL 2 INPUT BUFFER
OTBUF2: .BLKB 800          ;CHANNEL 2 OUTPUT BUFFER

;0B000
INBUF3: .BLKB 800          ;CHANNEL 3 INPUT BUFFER
OTBUF3: .BLKB 800          ;CHANNEL 3 OUTPUT BUFFER
```

0134115

```
          . =OFOOO
;THIS WORD CONTAINS THE CHECKSUM FOR THE ENTIRE ROM
;PROMPV PUTS IT HERE


VERIFY:
.WORD O              ;CHECKSUM FOR THIS ROM


.SBTTL PROGRAM STARTING POINT
;THE POINTER TABLE FOR EACH CHANNEL IS INITIALIZED IN TURN,
;ALONG WITH ACIA'S AND PTM'S

;SWI2 INTERRUPT COMES HERE TOO


START:
LDS #STACK           ;INITIALIZE STACK POINTER FOR NMI RECOGNITIO
STA PICOFF           ;DISABLE PROGRAMMABLE INTERRUPT CONTROLLER
LBSR INIT            ;INITIALIZE POINTER TABLE AND HARDWARE REGIS

RSTART:
STA PICON            ;DUMMY WRITE TO ENABLE PROGRAMMABLE INTERRUP


.SBTTL MAINLINE
;THE MAINLINE IS USED MAINLY FOR STARTING EVENTS AND IS NOT
;FOR REAL TIME EVENT CONTROL.   THIS SECTION RUNS ONLY WHEN I
;ARE NOT BEING SERVICED.

;IT TAKES 4 COMPLETE PASSES OF THE MAINLINE IN ORDER TO SERV
;ALL 4 CHANNELS (ONE PASS PER CHANNEL)


PATROL:
LDX #STAT3           ;PRESET CHANNEL TABLE POINTER

NEXTCH:
TFR X,D              ;MOVE POINTER TO CHANNEL TABLE POINTER TO AC
ADDB #40             ;AND POINT TO NEXT CHANNEL TO BE SERVICED
TFR D,X              ;RETURN VALUE TO X

ACTIVE:
TST \QUEUEX,X        ;ANY PORT CONTROL REQUEST WAITING?
LBNE COMPLY          ;YES, SERVICE IT
LDY \KILLIX,X        ;HAS KILL INPUT BUFFER REQUEST BEEN MADE?
BPL ENABLE           ;NO, GO ON
STY \\POPIX,X        ;YES, STORE NEW INPUT BUFFER READ POINTER
CLR \\INFLGX,X       ;IGNORE ANY CURRENTLY WAITING CHAR
CLR \KILLIX,X        ;ACKNOWLEDGE KILL INPUT REQUEST

;SECTION TO ENABLE SUSPENDED TERMINAL TO HOST INPUT

ENABLE:
TST \FROZX,X         ;IS TERMINAL INPUT SUSPENDED?
BLE PROMPT           ;NO, TAKE NO ACTION (MINUS=QUEUED)
LDD \\POPIX,X        ;YES, LOAD INPUT BUFFER READ POINTER
```

```
SUBD \\PUSHIX,X ;DETERMINE NUMBER OF FREE INPUT BUFFER LOCAT
ANDA #7          ;ONLY LOOK AT 11 BITS (2K)
CMPD #<MAXRM*2> ;RE-ENABLE INPUT?
BLS PROMPT       ;NO, MAYBE LATER
LDA #XON!80      ;YES, QUEUE XON
STA \FROZX,X

;SECTION TO CONTROL HOLD MODE
;WARNING - USE OF DELAY BITS IN ATTRIBUTE BYTE (HOST OUTPUT)
;          CAN CAUSE UNPREDICTABLE EVENTS TO OCCUR

PROMPT:
LDB \\HOLDX,X   ;IS HOLD MODE IN EFFECT?
BEQ INCHEK       ;NO, USE NORMAL INPUT PROCESSING
BPL 1$           ;YES, FIRST CHARACTER IS ALREADY IN
LDY \\PUSHIX,X  ;HAS FIRST CHARACTER ARRIVED?
CMPY \\POPIX,X
BEQ PRIMER       ;NO, CHECK AGAIN LATER
ANDB #0F         ;YES, INDICATE
STB \\HOLDX,X   ;BY CLEARING MSB
ANDB #3          ;ONLY LOOK AT COUNTDOWN TIME BITS
BEQ INCHEK       ;NO DELAY REQUESTED, SWITCH TO NORMAL INPUT
LBSR SETOFF      ;START COUNTDOWN
BRA ACTIVE       ;CHECK FOR MORE ACTIVITY FOR THIS CHANNEL

1$:
BITB #3          ;IS TIMEOUT HOLD MODE IN EFFECT?
BEQ INCHEK       ;NO, PROCESS INPUT
TST \RLOADX,X    ;IS COUNTDOWN TIMER ARMED?
BNE PRIMER       ;YES, INPUT IS STILL ACTIVE

;SECTION TO PROCESS NORMAL INPUT BETWEEN INPUT BUFFER AND
;HOST INPUT REGISTER

INCHEK:
TST \CLONEX,X    ;RELOAD HOST INPUT DATA?
BNE 2$           ;YES, DO IT
TST \\INFLGX,X  ;NO, IS THERE INPUT WAITING FOR HOST?
BNE PRIMER       ;YES, GO ON
CLR \LASTX,X     ;ASSUME OLD STATUS ALREADY READ
LDY \\POPIX,X   ;DOES INPUT READ POINTER EQUAL WRITE?
CMPY \\PUSHIX,X
BEQ PRIMER       ;YES, INPUT BUFFER IS EMPTY
TST \NSFLGX,X    ;IS NON-TERMINAL INPUT STATUS IN HW STATUS R
BNE 1$           ;YES, DON'T CHANGE HW PORT STATUS
ORCC #IMASK      ;MAKE SURE STATUS DOESN'T CHANGE
LDA \\STATX,X   ;GET LATEST STATUS
STA \LASTX,X     ;SAVE AS LAST VALID PORT STATUS REFLECTED TO
STA [\PSTATX,X] ;AND TRANSFER TO HW PORT STATUS REGISTER
CLR \\STATX,X   ;START ON NEW STATUS
ANDCC #^CIMASK   ;RE-ENABLE IRQ INTERRUPTS

1$:
CLR \NSFLGX,X    ;MAKE SURE THAT NEXT READ REFLECTS TERMINAL
LDA ,Y+          ;FETCH NEXT CHAR TO INPUT TO HOST
STA \OLDINX,X    ;SAVE AS LAST LOADED HOST INPUT DATA
TFR Y,D          ;MOVE UPDATED READ POINTER TO AC
ANDA #^C8        ;TAKE CARE OF ANY WRAP-AROUND
```

```
        STD \\POPIX,X    ;SAVE NEW POINTER

2$:
        INC \\INFLGX,X   ;SET INPUT WAITING FOR HOST FLAG
        LDA \OLDINX,X    ;LOAD DATA
        STA [\HRBUFX,X]  ;AND MOVE TO HARDWARE REGISTER
        CLR \CLONEX,X    ;ASSUME RELOAD COMPLETE
        LBRA ACTIVE      ;CHECK FOR MORE ACTION ON THIS CHANNEL

PRIMER:
        LDY \\PUSHOX,X   ;SAVE CURRENT OUTPUT WRITE POINTER FOR LATER
        LDD \\POPOX,X    ;TIME TO CLEAR HARDWARE CHAR COUNTER?
        SUBD \\PUSHOX,X
        BEQ 1$           ;ZERO MEANS LOTS OF ROOM
        ANDA #7          ;ONLY LOOK AT LOWER 11 BITS OF DIFFERENCE (2
        CMPD #200        ;ROOM FOR MORE THAN 512 BYTES?
        BHI 1$           ;YES, RESET HARDWARE COUNTER
        CMPD #104        ;NO, ROOM FOR MORE THAN 256 BYTES (POSSIBLY
        BLS 2$           ;NO, GO ON
        ORCC #IFMASK     ;NO INTERRUPTIONS FOR THIS STEP
        CMPY \\PUSHOX,X  ;HAVE WE HAD HOST OUTPUT VERY RECENTLY?
        BNE 2$           ;YES, MAYBE WE SHOULD RE-EVALUATE...LATER

1$:
        STA [\TTCLRX,X]  ;RESET HARDWARE OUTPUT COUNTER

2$:
        ANDCC #^CIFMASK  ;RE-ENABLE INTERRUPTS
        TST \\OTFLGX,X   ;IS THERE OUTPUT IN PROGRESS?
        LBNE NEXTCH      ;YES, SERVICE NEXT CHANNEL
        LDY \\POPOX,X    ;NO, FETCH BUFFER READ POINTER
        LDD \KILLOX,X    ;HAS KILL OUTPUT BUFFER REQUEST BEEN MADE?
        BPL 5$           ;NO, GO ON
        STD \\POPOX,X    ;YES, UPDATE BUFFER READ POINTER
        CLRA             ;CLEAR DATA TO BE USED
        TST \\LOOPX,X    ;IS LOOP MODE ENABLED?
        BPL 3$           ;NO, USE CURRENT READ POINTER AND PLAY CATCH
        LDY \\LOOPX,X    ;YES, USE START OF LOOP POINTER
        CLR \\LOOPX,X    ;CLEAR LOOP MODE FLAG

3$:
        TST \STATO       ;DUMMY READ TO REFRESH BUFFER MEMORY
        STA \\1,Y        ;CLEAR ATTRIBUTE LOCATION
        CMPY \KILLOX,X   ;CLEARED ALL ATTRIBUTE LOCATIONS?
        BEQ 4$           ;YES, GO ON
        EXG Y,D          ;NO, UPDATE POINTER
        ANDA #^C8        ;MAKE ROOM FOR ANY OVERFLOW
        ADDD #2          ;2 BYTES TO NEXT ATTRIBUTE
        ORA #8           ;RESTORE BUFFER ADDRESS BIT
        EXG D,Y          ;MOVE BACK TO Y
        BRA 3$           ;CLEAR NEXT LOCATION

4$:
        CLR \KILLOX,X    ;ACKNOWLEDGE KILL OUTPUT BUFFER REQUEST

5$:
        CMPY \\PUSHOX,X  ;IS OUTPUT BUFFER EMPTY?
        BNE 6$           ;NO, INITIATE OUTPUT
```

```
TST \FROZX,X     ; IS XON QUEUED?
LBPL NEXTCH      ; NO,  SERVICE NEXT CHANNEL

6$:
TST \\GOFLGX,X   ; IS TERMINAL OUTPUT INHIBITED?
LBNE NEXTCH      ; YES,  SERVICE NEXT CHANNEL

SEND:
LDA #TXON        ; ENABLE OUTPUT INTERRUPTS
STA \\OTFLGX,X   ; SET OUTPUT IN PROGRESS FLAG
STA [\TTCSRX,X]  ; REST IS AUTOMATIC
LBRA ACTIVE      ; CHECK FOR MORE ACTION ON THIS CHANNEL
```

```
;SECTION TO SERVICE QUEUED PORT CONTROL REQUESTS
;THE MOST SIGNIFICANT BIT OF THE HW PORT STATUS REGISTER IS
;COMPLETION (EXCEPT FOR RETURN TERMINAL INPUT STATUS)
;THE 'PORT11' ROUTINE EXPLAINS REQUESTS IN DETAIL

COMPLY:
CLRB                  ;PREPARE FOR REQUEST CLEAR
ORCC #IFMASK          ;NO INTERRUPTIONS FOR NEXT STEP
LDA \QUEUEX,X         ;FETCH QUEUED REQUEST
STB \QUEUEX,X         ;CLEAR QUEUE REQUEST FLAG ('STB' IS FASTER T
ANDCC #^CIFMASK       ;RESTORE INTERRUPT MONITORING
CMPA #1A              ;RETURN TERMINAL INPUT STATUS?
BNE 1$                ;NO, GO ON
LDB \\STATX,X         ;LOAD VERY LATEST STATUS
ANDB #40              ;BUT, ONLY DOUBLE <CTRL C> BIT FOR NOW
ORB \LASTX,X          ;ADD IN LAST REFLECTED TERMINAL INPUT STATUS
BRA SIGNAL            ;COPY TO PORT STATUS REGISTER

1$:
LDB #80               ;PRESET FINAL DATA FOR HW STATUS REGISTER
CMPA #0D0             ;IS SPECIAL MODE REQUEST?
BHS MODE              ;YES, TAKE CARE OF IT
TSTA                  ;KILL BUFFER REQUEST?
BMI ZERO              ;YES, PROCESS
ASLA                  ;IS BUFFER EMPTY REQUEST?
LBMI UPDATE           ;YES, GO DO IT
ANDA #<7*2>           ;ONLY LOOK AT BAUD BITS
LDY #CLKTBL           ;POINT TO START OF BAUD RATE TABLE
LDY A,Y               ;FETCH NEW BAUD RATE
STY [\RATEX,X]        ;AND TRANSFER TO HARDWARE
ASLA                  ;MOVE BAUD BITS TO UPPER HALF OF BYTE
ASLA
ASLA
STA \SPEEDX,X         ;AND STORE INTO POINTER TABLE
BRA SIGNAL            ;INDICATE REQUEST COMPLETED

;THIS SECTION HANDLES SPECIAL MODE SELECTIONS
;SUCH AS BINARY, PRIVILEGED USER, HOLD, RELOAD HOST INPUT DA
;AND FLAGGED INPUT MODES
;THIS IS PART OF THE 'COMPLY' SECTION

MODE:
CMPA #0DE             ;BINARY/NON-BINARY INPUT MODE REQUEST?
BHS CHANGE            ;YES, GO ON
BITA #8               ;IS THIS A HOLD MODE REQUEST?
BEQ 4$                ;NO, GO ON
```

```
BITA #4              ;CANCEL HOLD MODE?
BNE 2$               ;YES, DO IT
TST \\INFLGX,X       ;NO, IS FIRST CHARACTER ALREADY WAITING?
BEQ 1$               ;NO, GO ON
LDA #40              ;YES, INDICATE BY CLEARING MSB AND COUNTDOWN

1$:
STA \\HOLDX,X        ;SET HOLD MODE
BRA SIGNAL           ;REQUEST SERVICED

2$:
LDA \\HOLDX,X        ;IS TIMEOUT HOLD MODE IN EFFECT?
BITA #3
BEQ 3$               ;NO, LEAVE TIMER ALONE
LDA \PTMSKX,X        ;LOAD MASK TO STOP TIMER (WHETHER OR NOT STA
STA [\PTCTLX,X]      ;AND STOP IT
CLR \RLOADX,X        ;INDICATE COUNTDOWN COMPLETE

3$:
CLR \\HOLDX,X        ;INDICATE HOLD MODE CANCELED
CLR \\INFLGX,X       ;IGNORE ANY WAITING INPUT
BRA SIGNAL           ;REQUEST SERVICED

4$:
BITA #4              ;RELOAD HOST INPUT DATA?
BEQ 5$               ;NO, GO ON
STA \CLONEX,X        ;YES, QUEUE
BRA SIGNAL           ;REQUEST SERVICED

5$:
BITA #2              ;FLAGGED INPUT REQUEST?
BEQ 6$               ;NO, MUST BE PRIVILEGED USER REQUEST
ANDA #1              ;REVEAL INDICATED STATE
STA \FLAGDX,X        ;AND SAVE
BRA SIGNAL           ;REQUEST SERVICED

6$:
ANDA #1              ;REVEAL INDICATED PRIVILEGED USER STATE
STA \PRIVX,X         ;AND SAVE
BRA SIGNAL           ;REQUEST SERVICED

CHANGE:
LDY #HOSTIN          ;DEFAULT INPUT ROUTINE FOR NON-BINARY MODE
BITA #1              ;SET BINARY INPUT MODE?
BNE 1$               ;NO, NON-BINARY
CLR \\GOFLGX,X       ;YES, MAKE SURE OUTPUT CONTROL FLAG IS CLEAR
LDY #LTREAD          ;CHANGE TO BINARY INPUT ROUTINE

1$:
STY \INPUTX,X        ;SAVE INPUT ROUTINE POINTER

SIGNAL:
STB \NSFLGX,X        ;SAVE NON-TERMINAL INPUT STATUS IN HW STATUS
STB [\PSTATX,X]      ;INDICATE REQUEST COMPLETED
LBRA ACTIVE          ;AND CHECK FOR MORE ACTION

;SECTION TO KILL INPUT AND/OR OUTPUT BUFFER
;THIS IS PART OF THE 'COMPLY' SECTION
```

```
;BIT 3 OF REQUEST BYTE SET, ZEROES THE OUTPUT BUFFER
;BIT 2 OF REQUEST BYTE SET, ZEROES THE INPUT BUFFER
;BIT 1 OF REQUEST BYTE SET, ZEROES THE TERMINAL INPUT STATUS

;SPECIAL NOTE:   THE HOST INPUT REGISTER MAY CONTAIN A WAITIN
;                EVEN THOUGH THE INPUT BUFFER IS ZEROED

ZERO:
BITA #8             ;KILL OUTPUT BUFFER?
BEQ 1$              ;NO, MAYBE INPUT BUFFER
ORCC #IMASK         ;NO IRQ INTERRUPTS FOR NEXT STEP
LDY \\PUSHOX,X      ;FETCH OUTPUT WRITE POINTER
STY \\POPOX,X       ;AND STORE AS NEW OUTPUT READ POINTER
ANDCC #^CIMASK      ;RE-ENABLE IRQ INTERRUPT MONITORING
LBSR CLRATT         ;MAKE SURE THAT ALL ATTRIBUTE BYTES ARE CLEA

1$:
BITA #4             ;KILL INPUT BUFFER?
BEQ 2$              ;NO, PROBABLY ZERO TERMINAL INPUT STATUS
ORCC #IMASK         ;NO IRQ INTERRUPTS FOR NEXT STEP
LDY \\PUSHIX,X      ;FETCH CURRENT INPUT BUFFER WRITE POINTER
STY \\POPIX,X       ;AND SAVE AS NEW INPUT BUFFER READ POINTER
ANDCC #^CIMASK      ;RE-ENABLE IRQ INTERRUPT MONITORING

2$:
BITA #2             ;ZERO TERMINAL INPUT STATUS?
BEQ SIGNAL          ;NO, REQUEST COMPLETE
ORCC #IMASK         ;YES, DON'T LET STATUS CHANGE
CLR \\STATX,X       ;ZERO LATEST STATUS
CLR \LASTX,X        ;AND THAT LAST REFLECTED
ANDCC #^CIMASK      ;RE-ENABLE INTERRUPTS
BRA SIGNAL          ;ALL DONE

;SECTION TO RETURN LT-11 STATUS
;BIT 3 OF REQUEST BYTE SET, RETURNS BUFFER EMPTY STATUS IN B
;        6 AND 7 OF THE HARDWARE PORT STATUS REGISTER ('PSTR')
;        PRIVILEGE STATUS IN BIT 5.
;BIT 1 SET, WITH BITS 2 AND 3 CLEARED, RETURNS THE CURRENT P
;        TO THE HARDWARE PORT STATUS REGISTER
;BIT 0 SET, WITH BITS 1, 2, AND 3 CLEARED, RETURNS THE CURRE
;        NUMBER TO THE HOST INPUT REGISTER
;THIS IS PART OF THE 'COMPLY' SECTION

UPDATE:
BITA #<8*2>         ;BUFFER EMPTY STATUS REQUEST?
BEQ BAUD            ;NO, GO ON
TST \PRIVX,X        ;IS USER PRIVILEGED?
BEQ 1$              ;NO, NON-PRIVILEGED
ORB #10             ;YES, INDICATE

1$:
LDY \\PUSHOX,X      ;FETCH OUTPUT BUFFER WRITE POINTER
CMPY \\POPOX,X      ;IS OUTPUT BUFFER EMPTY?
BNE 2$              ;NO, CHECK INPUT BUFFER
TST \\OTFLGX,X      ;MAYBE, IS CHAR IN PROGRESS?
BNE 2$              ;YES, BUFFER IS NOT EMPTY
TST \KILLOX,X       ;IS KILL OUTPUT BUFFER REQUEST STILL QUEUED?
BMI 2$              ;YES, BUFFER IS NOT EMPTY
```

```
ORB #40            ; INDICATE OUTPUT BUFFER EMPTY

2$:
LDY \\PUSHIX,X    ;FETCH INPUT BUFFER WRITE POINTER
CMPY \\POPIX,X    ;IS INPUT BUFFER EMPTY?
BNE SIGNAL        ;NO, WRITE TO HARDWARE
TST \\INFLGX,X    ;MAYBE, IS CHAR WAITING FOR HOST?
BNE SIGNAL        ;YES, INPUT IS NOT EMPTY
ORB #20           ; INDICATE INPUT BUFFER EMPTY
BRA SIGNAL        ; COPY TO HARDWARE STATUS REGISTER

BAUD:
BITA #<1*2>       ;RETURN FIRMWARE VERSION NUMBER?
BNE FWVER         ;YES, DO IT
ORB \SPEEDX,X     ;FETCH BAUD RATE FOR THIS PORT
BRA SIGNAL        ;AND WRITE TO HARDWARE PORT STATUS REGISTER

FWVER:
LDA #<<IDENT*10>+MOD>;YES, LOAD FIRMWARE VERSION NUMBER
INC \\INFLGX,X    ;SET CHARACTER WAITING FOR HOST FLAG
STA [\HRBUFX,X]   ;AND WRITE TO RECEIVER REGISTER
BRA SIGNAL        ;DONE
```

. SBTTL FIRQ INTERRUPT SERVICE ROUTINES

. SBTTL  HOST DATA INPUT INTERRUPT SERVICE ROUTINE
; PROGRAM CONTROL COMES HERE AFTER THE HOST READS A CHARACTER
; HOST INPUT REGISTER (176XX2)
; THIS ROUTINE IS COMMON FOR ALL FOUR CHANNELS
; THE HARDWARE AUTOMATICALLY REFERENCES THE CORRECT POINTER T

```
IN11:
TST \HOLDO         ; IS HOLD MODE IN EFFECT?
BEQ 1$             ; NO, GO ON
CLR \HOLDO         ; INDICATE HOLD MODE COMPLETE AND CANCEL SPEC
RTI                ; AND RETURN

1$:
CLR \INFLGO        ; CLEAR INPUT FLAG AND CANCEL SPECIAL HARDWAR
RTI                ; AND RETURN
```

. SBTTL  HOST DATA OUTPUT INTERRUPT SERVICE ROUTINE
; THIS ROUTINE IS COMMON FOR ALL FOUR CHANNELS
; THE HARDWARE AUTOMATICALLY TAKES CARE OF STORING CHARACTER
; AND HANDLES WRAP-AROUND OF NEW BUFFER WRITE POINTER
; CONTROL COMES HERE ON WRITE TO ADDRESS 176XX6
; REGISTER U IS RESERVED FOR FIRQ INTERRUPTS AND SELF TEST ST

```
OUT11:
LDU \PUSHOO        ; FETCH OUTPUT BUFFER WRITE POINTER
STA ,U++           ; LET HARDWARE TRANSFER DATA TO OUTPUT BUFFER
STU \PUSHOO        ; SAVE NEW POINTER
RTI                ; HARDWARE DESERVES MOST OF CREDIT
```

. SBTTL  HOST DATA ATTRIBUTE OUTPUT INTERRUPT SERVICE ROUTINE
; THIS ROUTINE IS COMMON FOR ALL FOUR CHANNELS
; THE HARDWARE AUTOMATICALLY STORES BYTE PROPERLY
; REGISTER U IS RESERVED FOR FIRQ INTERRUPTS AND SELF TEST ST
;        76543210              FUNCTION                HEX

```
;       00100000        NO OPERATION                      [20]
;       XX10X001        2   MSEC DELAY                    [21]
;       XX10X010        4   MSEC DELAY                    [22]
;       XX10X011        50  MSEC DELAY                    [23]
;       XX10X100        500 MSEC DELAY                    [24]
;       XX10X101        1   SEC DELAY                     [25]
;       XX10X110        2   SEC DELAY                     [26]
;       XX10X111        5   SEC DELAY                     [27]
;       XX101XXX        INHIBIT OUTPUT                    [28]
;       X110XXXX        END OF HW REPEAT                  [60]
;       1X10XXXX        START OF HW REPEAT                [A0]
;       11101000        BREAK OUTPUT OF FEW USEC          [E8]
;       11101001        BREAK OUTPUT OF 2    MSEC         [E9]
;       11101010        BREAK OUTPUT OF 4    MSEC         [EA]
;       11101011        BREAK OUTPUT OF 50   MSEC         [EB]
;       11101100        BREAK OUTPUT OF 500  MSEC         [EC]
;       11101101        BREAK OUTPUT OF 1    SEC          [ED]
;       11101110        BREAK OUTPUT OF 2    SEC          [EE]
;       11101111        BREAK OUTPUT OF 5    SEC          [EF]
;BIT 5 IS ALWAYS SET
;BIT 4 IS ALWAYS CLEARED
;BITS MAY BE OR'D TO ALLOW MULTIPLE REQUESTS (EXCEPT FOR BRE

;** CAUTION *************************************************
;    THE CHARACTER IN THE BUFFER IMMEDIATELY FOLLOWING A BRE
;    BE LOST, UNLESS DELAY BITS ARE SPECIFIED FOR THAT CHARA
;***********************************************************

;CONTROL COMES HERE ON WRITE TO ADDRESS 176XX4 (IF DATA BIT


ATT11:
LDU \PUSHOO     ;FETCH OUTPUT BUFFER WRITE POINTER
STA \\1,U       ;LET HARDWARE STORE DATA ATTRIBUTES INTO BUF
STA \ENDFIP     ;CANCEL SPECIAL HARDWARE
RTI             ;DONE
```

```
        .SBTTL  HOST PORT CONTROL INTERRUPT SERVICE ROUTINE
;THIS ROUTINE IS COMMON FOR ALL FOUR CHANNELS
;REGISTER U IS RESERVED FOR FIRQ INTERRUPTS AND SELF TEST ST

;PORT CONTROL REQUESTS ARE AS FOLLOWS:
;       76543210                FUNCTION                    HEX
;       00010000        150   BAUD                          [10]
;       00010001        300   BAUD                          [11]
;       00010010        600   BAUD                          [12]
;       00010011        1200  BAUD                          [13]
;       00010100        2400  BAUD                          [14]
;       00010101        4800  BAUD                          [15]
;       00010110        9600  BAUD                          [16]
;       00010111        19200 BAUD                          [17]
;       00011010        RETURN TERMINAL INPUT STATUS        [1A]
;       00011011        VIRTUAL SELF TEST                   [1B]
;       00011100        DOWNLOAD MODE                       [1C]
;       00011101        OPEN LOCATION MODE                  [1D]
;       00011110        SELF TEST MODE                      [1E]
;       00011111        RESTART                             [1F]
;       010100X1        RETURN FIRMWARE VERSION NUMBER      [51]
;       01010010        RETURN CURRENT BAUD RATE            [52]
```

```
;          01011XXX            RETURN BUFFER EMPTY STATUS        [58]
;          100100XX            NO OPERATION (EXCEPT DONE)        [90]
;          1001XX1X            CLEAR TERMINAL INPUT STATUS       [92]
;          1001X1XX            KILL INPUT BUFFER                 [94]
;          1001X11X            KILL INPUT BUFFER AND STATUS      [96]
;          10011XXX            KILL OUTPUT BUFFER                [98]
;          100111XX            KILL OUTPUT AND INPUT BUFFERS     [9C]
;          1001111X            KILL BOTH BUFFERS AND STATUS      [9E]
;          11010000            SET NON-PRIV. USER STATUS         [D0]
;          11010001            SET PRIVILEGED USER STATUS        [D1]
;          11010010            CLEAR FLAGGED INPUT MODE          [D2]
;          11010011            SET FLAGGED INPUT MODE            [D3]
;          110101XX            RELOAD HOST INPUT DATA            [D4]
;          11011000            HOLD MODE, NO COUNTDOWN           [D8]
;          11011001            HOLD MODE, 2   MSEC COUNTDOWN     [D9]
;          11011010            HOLD MODE, 4   MSEC COUNTDOWN     [DA]
;          11011011            HOLD MODE, 50  MSEC COUNTDOWN     [DB]
;          11011100            CLEAR HOLD MODE                  [DC]
;          11011110            BINARY INPUT MODE                 [DE]
;          11011111            NON-BINARY INPUT MODE             [DF]
;BIT 5 IS ALWAYS CLEARED
;BIT 4 IS ALWAYS SET
;RETURNS (EXCEPT FIRMWARE VERSION NUMBER) ARE VIA THE UPPER
;PORT STATUS REGISTER ('PSTR').


;NORMAL INPUT STATUS INFORMATION RETURNED IN HARDWARE PORT S
;          76543210            STATUS          HEX     OCTAL   DECIM
;          00001111            NO ERRORS       [0F]    ( 17)   < 15
;          0XX11111            FRAMING ERROR   [1F]    ( 37)   < 31
;          0X1X1111            INPUT OVERRUN   [2F]    ( 57)   < 47
;          01XX1111            2 CTRL C'S      [4F]    (117)   < 79
;          BIT 7 IS CLEARED
;          BIT 6 SET, INDICATES THAT 2 CTRL C'S IN SUCCESSION W
;          BIT 5 SET, INDICATES THAT A DATA OVERRUN WAS DETECTE
;          BIT 4 SET, INDICATES THAT A FRAMING ERROR WAS DETECT
;          BITS 3,2,1, AND 0 ARE ALWAYS SET
;          BITS MAY BE OR'D FOR MULTIPLE INDICATION

;          ** CAUTION ********************************************
;              TERMINAL INPUT STATUS IS ONLY VALID IMMEDIATELY
;              OF THE HOST INPUT REGISTER
;          **************************************************

;BUFFER EMPTY STATUS INFORMATION RETURNED IN HARDWARE PORT S
;          76543210            STATUS          HEX     OCTAL   DECIM
;          100X1111            NONE TRUE       [8F]    (217)   <143
;          1XX11111            PRIV. USER      [9F]    (257)   <175
;          1X1X1111            INPUT EMPTY     [AF]    (257)   <175
;          11XX1111            OUTPUT EMPTY    [CF]    (317)   <207
;          BIT 7 IS SET
;          BIT 6 SET, INDICATES THAT THE INPUT BUFFER IS EMPTY
;          BIT 5 SET, INDICATES THAT THE OUTPUT BUFFER IS EMPTY
;          BIT 4 SET, INDICATES THAT USER IS PRIVILEGED
;          BITS 3,2,1 AND 0 ARE ALWAYS SET
;          BITS MAY BE OR'D FOR MULTIPLE INDICATION
```

```
;CURRENT BAUD RATE INFORMATION RETURNED IN HARDWARE PORT STA
;        76543210          RATE          HEX     OCTAL   DECIM
;        10001111      150   BAUD        [FF]    (217)   <143
;        10011111      300   BAUD        [9F]    (237)   <159
;        10101111      600   BAUD        [AF]    (257)   <175
;        10111111     1200   BAUD        [BF]    (277)   <191
;        11001111     2400   BAUD        [CF]    (317)   <207
;        11011111     4800   BAUD        [DF]    (337)   <223
;        11101111     9600   BAUD        [EF]    (357)   <239
;        11111111    19200   BAUD        [FF]    (377)   <255

;THE FIRMWARE VERSION NUMBER IS RETURNED IN THE HOST INPUT (
;OF THE PORT STATUS REGISTER.   THE UPPER 4 BITS OF THE DATA
;IDENTIFICATION NUMBER ('IDENT') AND THE LOW 4 BITS CONTAINS
;LEVEL ('MOD').   ANY DATA CURRENTLY RESIDING IN THE HOST INP

;DOWNLOAD MODE, OPEN MODE, SELF TEST MODE, RESTART, RETURN T
;STATUS, AND VIRTUAL SELF TEST REQUESTS ARE SERVICED IMMEDIA
;REQUESTS ARE ONLY QUEUED, AND ARE SERVICED BY THE MAINLINE

;THE MOST SIGNIFICANT BIT OF THE CHANNEL'S HW PORT STATUS RE
;UPON COMPLETION OF QUEUED REQUESTS


;INTENDED APPLICATION OF THIS ROUTINE FOR QUEUED REQUESTS IS
;        1) HOST CHECKS THAT MSB OF PORT STATUS IS ZERO
;        2) IF NOT ZERO, THEN HOST REQUESTS RETURN TERMINAL I
;           AND TESTS MSB OF HW PORT STATUS REGISTER UNTIL BI
;        3) HOST MAKES REQUEST
;        4) HOST PROGRAM TESTS MSB OF HW PORT STATUS REGISTER
;        5) HOST PROGRAM READS PERTINENT STATUS BITS OF REGIS
;        6) HOST PROGRAM ISSUES A RETURN TERMINAL INPUT STATU
;        7) HOST PROGRAM TESTS MSB OF HW PORT STATUS REGISTER


;BINARY/NON-BINARY INPUT MODES:
;        BINARY INPUT MODE PASSES ALL 8 BITS OF INCOMING CHAR
;        TERMINAL) TO HOST.
;        NON-BINARY INPUT MODE SUPPORTS XON/XOFF TO CONTROL O
;        KILLS THE INPUT BUFFER, AND <CTRL C> AND <CTRL O> KI
;        BUFFER


;FLAGGED INPUT MODE:
;        ALLOWS XON/XOFF CONTROL OF INPUT.   WHEN INPUT BUFFER
;        XOFF IS SENT TO THE TERMINAL TO STOP INPUT.   XON IS
;        SPACE IS MADE AVAILABLE.


;RELOAD HOST INPUT DATA:
;        THE MOST RECENT CHARACTER LOADED INTO THE HOST INPUT
;        IN CONJUNCTION WITH HOLD MODE, THIS CAN BE USED TO O
;        AN INPUT CHARACTER IS WAITING.   THE SAME CHARACTER B
;        TWICE, CAN BE IGNORED ON THE FIRST READ.   THE WAIT F
;        IS THUS REDUCED.
```

```
;           INTENDED APPLICATION:
;           1) THE HOST PROGRAM DISABLES RECEIVER INTERRUPTS
;           2) THE HOST PROGRAM REQUESTS HOLD MODE ·
;           3) THE HOST PROGRAM ENABLES RECEIVER INTERRUPTS
;           4) THE FIRST CHARACTER RECEIVED IS LOADED INTO THE H
;              REGISTER AND INTERRUPTS THE HOST COMPUTER
;           .5) THE HOST READS THE CHARACTER.  (THE FOLLOWING CHA
;              LOADED INTO THE HOST INPUT REGISTER UNTIL THE HOS
;              IS AGAIN READ, UNLESS A RELOAD REQUEST IS MADE.)
;           6) THE HOST MAKES A RELOAD REQUEST.   THIS RELOADS TH
;              THOUGH FOR THE FIRST TIME.

;           NOTE: HOLD MODE IS AUTOMATICALLY RESET AFTER READING
;                 HOWEVER, THE FIRMWARE THINKS THAT THE FIRST CH
;                 BE READ, UNLESS A RELOAD IS REQUESTED.


;HOLD MODE:
;           THIS MODE PROVIDES THE CAPABILITY OF BLOCK INPUT REA
;           INTERRUPTING THE HOST COMPUTER FOR EVERY CHARACTER.
;           INPUT BURDEN IS REDUCED.



;           INTENDED APPLICATION:
;           1) THE HOST DISABLES RECEIVER INTERRUPTS
;           2) THE HOST REQUESTS HOLD MODE WITH SPECIFIED COUNTD
;           3) THE HOST ENABLES RECEIVER INTERRUPTS
;           4) THE FIRST CHARACTER RECEIVED IS LOADED INTO THE H
;              REGISTER AND INTERRUPTS THE HOST COMPUTER
;           5) THE HOST READS THE CHARACTER.  (THE FOLLOWING CHA
;              LOADED INTO THE HOST INPUT REGISTER UNTIL THE HOS
;              IS AGAIN READ (BLINDLY THIS TIME).)
;           6) THE HOST DISABLES RECEIVER INTERRUPTS AND WAITS A
;              BEFORE DOING THE BLIND READ.   (THE FIRST CHARACTE
;              BE AVAILABLE DURING THE BLIND READ.)
;           7) THE HOST THEN DOES NORMAL READS WITH INTERRUPTS D
;              THE INPUT BUFFER IS EMPTIED

;           NOTE: HOLD MODE IS AUTOMATICALLY RESET AFTER READING
;                 HOWEVER, THE FIRMWARE THINKS THAT THE FIRST CH
;                 BE READ.

;           OPTIONALLY, THE FIRST CHARACTER INTERRUPT MAY BE HEL
;                       NO INPUT IS RECEIVED FOR UP TO 50 MSEC 0
;                       BUFFER FILLS.   THIS WOULD ALLOW A STEADY
;                       SAY, 2000 CHARACTERS TO BE INPUT BEFORE
;                       INTERRUPTED.   THIS IS DONE BY SPECIFYING
;                       (TIMEOUT) VALUE.

;WARNING - USE OF DELAY BITS IN ATTRIBUTE BYTE (HOST OUTPUT)
;          CAN CAUSE UNPREDICTABLE EVENTS TO OCCUR, SINCE BO
;          HARDWARE TIMER

;CONTROL COMES HERE ON WRITE TO ADDRESS 176XX4 (IF DATA BIT
;IRQ AND FIRQ INTERRUPTS ARE DISABLED FOR THIS ENTIRE ROUTIN


PORT11:
```

```
        LDU \POINTO        ;POINT TO START OF CHANNEL POINTER TABLE
        STA \ENDFIP        ;CANCEL SPECIAL HARDWARE
        PSHS A             ;MAKE SOME WORKING SPACE
        LDA TBUF           ;INPUT PORT CONTROL
        CMPA #1B           ;PORT CONTROL REQUEST?
        BLO 1$             ;YES, QUEUE IT
        LBEQ TESTME        ;NO, START VIRTUAL SELF TEST
        CMPA #1F           ;PORT CONTROL MODE REQUEST?
        BHI 1$             ;YES, QUEUE IT
        LBEQ START         ;NO, RESTART
        CMPA #1C           ;ENTER DOWNLOAD MODE?
        BEQ DOWNLD         ;YES, ENTER DOWNLOAD MODE
        CMPA #1D           ;OPEN MODE REQUEST?
        LBEQ OPEN          ;YES, ENTER OPEN MODE
        LBRA QUERY         ;MUST BE NORMAL SELF TEST MODE REQUEST

1$:
        STA \QUEUEX,U      ;QUEUE REQUEST

DONE11:
        PULS A             ;RESTORE A
        RTI                ;AND RETURN
```

```
            .SBTTL  DOWNLOAD MODE SECTION
;THIS SECTION ALLOWS DOWNLOADING AND EXECUTION OF HOST PROGR
;DIAGNOSTICS MAY BE DOWNLOADED AS CAN SPECIAL APPLICATION PR
;LOCATIONS 0000-03F0 ARE AVAILABLE AS DOWNLOAD RUNABLE SPACE
;IN ADDITION, BUFFER MEMORY LOCATIONS 8000-BFFF MAY BE USED
;TABLE AREA (NON-RUNABLE DUE TO REFRESH MEMORY RESTRICTIONS)
;PROGRAMS STARTING AT 'ENDRAM' OR HIGHER WILL NOT DISTURB PO
;OR OPEN LOCATION MODE STORAGE LOCATIONS.
;'INPUTX' AND 'OUTPTX' ENTRIES IN POINTER TABLE MAY BE USED
;PROGRAM TO INTERCEPT TERMINAL I/O INTERRUPTS
;DOWNLOAD FORMAT IS DEC PDP-11 .LDA FORMAT
;THE DATA IS EXPECTED TO BE IN THE LOW 4 BITS OF THE PORT CO
;OF THE CHANNEL WHICH INITIATED THE DOWNLOAD.  IT TAKES TWO
;BYTES TO RECONSTRUCT THE 8 BIT .LDA DATA BYTE.  THE FIRST P
;CONTAINS THE LOW 4 BITS OF THE .LDA DATA BYTE, AND THE SECO
;BYTE CONTAINS THE HIGH 4 BITS OF THE .LDA DATA BYTE.


;PORT CONTROL BIT VALUES ARE AS FOLLOWS:
;        BIT 7 SET, INDICATES THAT DATA NIBBLE IS HIGH 4 BITS
;        BIT 6 SET, INDICATES THAT DATA NIBBLE IS LOW 4 BITS
;        BIT 5 IS ALWAYS CLEARED
;        BIT 4 IS ALWAYS SET
;        BITS 3-0 CONTAIN DATA NIBBLE


;IN ADDITION, THE FOLLOWING PORT CONTROL COMMANDS ARE STILL
;        76543210              FUNCTION              HEX    OCTA
;        00011011       VIRTUAL SELF TEST            [1B]   (033
;        00011100       DOWNLOAD MODE                [1C]   (034
;        00011101       OPEN LOCATION MODE           [1D]   (035
;        00011110       SELF TEST MODE               [1E]   (036
;        00011111       RESTART                      [1F]   (037

;WHEN A PORT CONTROL BYTE IS WRITTEN, THE PORT STATUS REGIST
;AFTER THE BYTE HAS BEEN PROCESSED, BIT 7 OF THE PORT STATUS
```

```
;SET AND BITS 6-4 CONTAIN SUCCESS/FAIL INDICATION.   THE HOST
;READ AND DECODE THE SUCCESS/FAIL INDICATION PRIOR TO WRITIN
;CONTROL BYTE.


;SUCCESS/FAIL STATUS IS AS FOLLOWS:
;        76543210              INDICATION             HEX    OCTA
;        00001111       DATA BEING PROCESSED         [OF]    ( 17
;        10001111       VALID DATA                   [8F]    (217
;        10011111       SUCCESSFUL DOWNLOAD          [9F]    (237
;        11001111       BAD CHECKSUM                 [CF]    (317
;        11011111       BAD DATA NIBBLE              [DF]    (337
;        11101111       DATA TIMEOUT                 [EF]    (357
;        11111111       BAD .LDA FORMAT              [FF]    (377

;NO RETURN IS MADE IF AN ERROR OCCURS (FIRQ INTERRUPTS ARE E
;THE SUCCESSFULLY DOWNLOADED PROGRAM IS AUTOMATICALLY STARTE
;THE ADDRESS AT WHICH IT IS STARTED IS DETERMINED BY ADDRESS
;THE '.END NNNN' STATEMENT AT THE END OF THE SOURCE CODE.
;FOR EXAMPLE, IF 'START' IS THE LABEL THAT INDICATES THE STA
;              OF THE PROGRAM, THEN THE PROGRAM SHOULD END WI


;.LDA FORMAT:
;        1ST BYTE OF EACH BLOCK = 01
;        2ND BYTE = 00
;        3RD BYTE = BLOCK BYTECOUNT
;        4TH BYTE = 00
;        5TH BYTE = LOW BITS LOADING ADDRESS
;        6TH BYTE = HIGH BITS LOADING ADDRESS
;        7TH THROUGH BYTECOUNT-6 = DATA
;        LAST BYTE = CHECKSUM (NEGATED SUM OF ALL BYTES)

;        IF BYTECOUNT = 6 THEN NO MORE BLOCKS WILL
;        FOLLOW, AND LOADING ADDRESS BECOMES STARTING ADDRESS


DOWNLD:
LDS #STACK        ;ZERO STACK
ANDCC #^CFMASK    ;ENABLE FIRQ INTERRUPTS

1$:
BSR WAIT8         ;FETCH INPUT
BEQ 1$            ;IGNORE NULLS BETWEEN BLOCKS
CMPA #SOH         ;IS START OF BLOCK?
BNE BADF          ;NO, BAD FORMAT ERROR
LDY #0000         ;INITIALIZE CHECKSUM TO ZERO
BSR WAIT8         ;FETCH NEXT BYTE
BNE BADF          ;IF NOT ZERO, THEN BAD FORMAT
BSR WAIT8         ;FETCH BYTECOUNT
PSHS A            ;SAVE FOR LAST BLOCK CHECK
TFR A,B           ;MOVE TO B
SUBB #5           ;SUBTRACT HEADER BYTECOUNT BUT NOT CHECKSUM
PSHS B            ;SAVE AS DATA BYTECOUNT
BSR WAIT8         ;FETCH NEXT BYTE
BNE BADF          ;IF NOT ZERO, THEN BAD FORMAT
BSR WAIT8         ;GET LOW BYTE OF STARTING ADDRESS
TFR A,B           ;TEMP SAVE
```

```
        BSR WAIT8        ;GET HIGH BYTE OF STARTING ADDRESS
        TFR D,X          ;MOVE STARTING ADDRESS TO X
        PULS B           ;RESTORE DATA BYTECOUNT

2$:
        BSR WAIT8        ;FETCH DATA BYTE
        DEC B            ;END OF THIS BLOCK?
        BEQ 3$           ;YES, CHECK CHECKSUM
        STA ,X           ;NO, STORE IT
        LDA ,X+          ;AND READ BACK TO CHECK IT
        BRA 2$           ;GET REST OF BLOCK

3$:
        LEAY A,Y         ;TEST CHECKSUM
        TFR Y,D
        TSTB             ;LOW BYTE SHOULD BE OO
        BNE BADC         ;BAD CHECKSUM
        PULS A           ;RESTORE INITIAL BYTECOUNT
        CMPA #6          ;WAS 6?
        BNE 1$           ;NO, READY FOR NEXT BLOCK
        LDA #90          ;INDICATE SUCCESSFUL DOWNLOAD
        BRA REPLY        ;AND WRITE TO PORT STATUS REGISTER

BADF:
        LDA #OFO         ;LOAD ERROR TYPE FOR BAD FORMAT
        BRA LDAERR       ;AND WRITE TO HOST INPUT REGISTER

BADC:
        LDA #OCO        -  ;LOAD ERROR TYPE FOR BAD CHECKSUM

LDAERR:
        LDX #HALT        ;LOAD JUMP ADDRESS FOR FATAL ERROR

REPLY:
        STA [\PSTATX,U] ;SEND RESULTS TO PORT STATUS REGISTER

HALT:
        JMP ,X           ;JUMP TO START OF NEWLY LOADED PROGRAM

;ROUTINE TO GET INPUT FOR DOWNLOAD
;CHECKSUM IN REGISTER Y IS UPDATED
;REGISTER A CONTAINS PREVIOUSLY RECEIVED BYTE
;REGISTER A WILL CONTAIN NEW INPUT
;IF NO INPUT IS RECEIVED WITHIN APPROX. 10 SECONDS, A TIMEOU
;NO OTHER REGISTERS ARE AFFECTED

WAIT8:
        LEAY A,Y         ;ADD PREVIOUS BYTE TO CHECKSUM
        PSHS X,Y,B       ;TEMP SAVE X,Y, AND B

1$:
        CLR \QUEUEX,U    ;CLEAR FUTURE DATA BYTE
        LDA #80          ;INDICATE READY FOR NEXT DOWNLOAD BYTE
        STA [\PSTATX,U]
        LDA #OA          ;PRESET MAX. COUNT FOR TIMEOUT
        LDX #0000        ;CLEAR X FOR TIMEOUT

2$:
```

```
        LDB \QUEUEX,U    ;ANY HOST INPUT?
        BNE 3$           ;YES, PROCESS
        LEAX \\-1,X       ;NO, INNER LOOP TIMEOUT (1.12 SEC.)?
        BNE 2$           ;NO, CONTINUE
        DEC A            ;YES, MAX. TIMEOUT?
        BNE 2$           ;NO, CONTINUE
        LDA #0EO         ;LOAD TIMEOUT (EXPIRATION) ERROR
        BRA LDAERR       ;AND DISPLAY ERROR INDICATION

3$:
        BMI 6$           ;HIGH NIBBLE, GO ON
        BITB #40         ;CORRECT LOW NIBBLE INDICATION?
        BNE 5$           ;YES, PROCESS

4$:
        LDA #0BO         ;NO, INDICATE ERROR
        BRA LDAERR

5$:
        ANDB #OF         ;MASK OFF ALL BUT DATA NIBBLE
        TFR D,Y          ;AND SAVE FOR LATER
        BRA 1$           ;READY FOR HIGH NIBBLE

6$:
        BITB #40         ;CORRECT HIGH NIBBLE INDICATION?
        BNE 4$           ;NO, ERROR
        ASLB             ;MOVE DATA NIBBLE TO UPPER BITS
        ASLB
        ASLB
        ASLB
        LEAY B,Y         ;AND ADD TO LOW NIBBLE
        TFR Y,D          ;MOVE TO A
        TFR B,A
        PULS B,Y,X       ;RESTORE B,Y, AND X
        TSTA             ;CONDITION CODES SHOULD REFLECT DATA
        RTS              ;RETURN
```

```
        .SBTTL   OPEN LOCATION MODE SECTION
;THIS SECTION ALLOWS MEMORY LOCATIONS TO BE OPENED FOR EXAMI
;AND DEPOSIT OF NEW CONTENTS
;SLASH ('/') WITH A VALID ADDRESS PRECEDING, OPENS THAT LOCA
;SLASH ONLY, OPENS THE CURRENT LOCATION
;RETURN CLOSES THE CURRENT LOCATION
;LINEFEED CLOSES THE CURRENT LOCATION AND OPENS THE NEXT
;UP-ARROW ('^') CLOSES THE CURRENT LOCATION AND OPENS PREVIO
;'G' LOADS THE PROGRAM COUNTER WITH THE CURRENT ADDRESS AND
;IRQ AND FIRQ INTERRUPT MONITORING IS DISABLED THROUGHOUT TH
;ESCAPE OR CTRL C EXIT OPEN LOCATION MODE

;START AND MAINLINE OF THE OPEN MODE SECTION

OPEN:
PSHS B,X          ;INCREASE WORKING SPACE
LDX #0000         ;DEFAULT TO ADDRESS 0

NEWLOC:
CLR OPEBUF        ;CLEAR INPUT ADDRESS BUFFER
CLR OPEBUF+1
CLR OPEFLG        ;CLEAR LOCATION OPEN FLAG
```

```
      CLR OPEPNT         ;CLEAR OFFSET LOCATION
      LBSR CRLF          ;PRINT CR/LF

FETCH:
      LBSR GETC          ;GET INPUT FROM TERMINAL
      CMPB #ESC          ;IS INPUT AN ESCAPE?
      BEQ WINDUP         ;YES, EXIT OPEN MODE
      CMPB #ETX          ;NO, IS INPUT A CTRL C?
      BEQ WINDUP         ;YES, EXIT OPEN MODE
      CMPB #CR           ;NO, IS INPUT A RETURN?
      BEQ OPERET         ;YES, TAKE CARE OF IT
      CMPB #LF           ;NO, IS INPUT A LINEFEED?
      BEQ OPELF          ;YES, TAKE CARE OF IT
      CMPB #'^           ;NO, IS INPUT AN UP-ARROW?
      LBEQ ARROW         ;YES, TAKE CARE OF IT
      CMPB #SPACE        ;NO, IS LESS THAN A SPACE?
      BLO FETCH          ;YES, IGNORE IT
      LBSR PUTC          ;NO, ECHO IT
      CMPB #'/           ;IS INPUT A SLASH?
      LBEQ SLASH         ;YES, TAKE CARE OF IT
      CMPB #'G           ;NO, IS A 'G'?
      LBEQ GOMAN         ;YES, PROCEED TO EXECUTION MODE
      SUBB #30           ;NO, IS LESS THAN '0'?
      LBLO OPERR         ;YES, ERROR
      CMPB #9            ;IS BETWEEN '0' AND '9'?
      BLS 1$             ;YES, GOOD DIGIT
      SUBB #11           ;NO, IS LESS THAN 'A'?
      LBLO OPERR         ;YES, ERROR
      CMPB #5            ;NO, IS BETWEEN 'A' AND 'F'?
      LBHI OPERR         ;NO, ERROR
      ADDB #0A           ;YES, MAKE INTO A HEX NUMBER

1$:
      LDA OPEPNT         ;FETCH INPUT POINTER OFFSET
      TST OPEFLG         ;IS LOCATION OPEN?
      BNE 2$             ;YES, MUST BE DATA
      CMPA #4            ;NO, ADDRESS BUFFER OVERFLOW?
      LBEQ OPERR         ;YES, ERROR
      PSHS X             ;NO, SAVE CONTENTS OF X
      LDX #OPEBUF        ;POINT TO START OF ADDRESS BUFFER
      BRA PACK           ;AND STORE INPUT

2$:
      CMPA #6            ;DATA BUFFER OVERFLOW?
      LBEQ OPERR         ;YES, ERROR
      PSHS X             ;NO, SAVE CONTENTS OF X
      LDX #OPEDAT-1      ;POINT TO START OF DATA BUFFER-1
      CMPA #4            ;IS THIS THE FIRST DIGIT OF DATA?
      BNE PACK           ;NO, GO ON
      CLR OPEDAT         ;YES, ZERO DATA IN CASE ONLY 1 DIGIT

PACK:
      LDA #4             ;4 SHIFTS TO DO

1$:
      ASL \\1,X          ;SHIFT LOW ORDER BYTE LEFT
      ROL ,X             ;MOVE ANY OVERFLOW INTO HIGH ORDER BYTE
      DECA               ;DONE SHIFTING?
```

```
BNE 1$              ; NO
ORB \\1,X           ; OR IN LATEST NUMBER FROM KEYBOARD
STB \\1,X           ; AND STORE INTO LOW ORDER BYTE
PULS X              ; RESTORE X
INC OPEPNT          ; INCREMENT INPUT POINTER OFFSET
BRA FETCH           ; READY FOR MORE INPUT WINDUP:
LBSR CRLF           ; SEND FINAL CR/LF
PULS X,B            ; RESTORE X AND B
LBRA DONE11         ; ALL DONE, RETURN TO NORMAL

; SECTION TO HANDLE CARRIAGE RETURN FOR OPEN MODE
; CARRIAGE RETURN WRITES OUT THE CURRENT DATA AND CLOSES LOCA OPERET:
LBSR CLOSE          ; CLOSE LOCATION, IF OPEN
LBRA NEWLOC         ; DONE

; SECTION TO HANDLE LINEFEED FOR OPEN MODE
; LINEFEED WRITES OUT THE CURRENT DATA, CLOSES THE CURRENT LO
; AND OPENS THE NEXT LOCATION OPELF:
LBSR CLOSE          ; CLOSE CURRENT LOCATION, IF OPEN
LEAX \\1,X          ; INCREMENT ADDRESS COUNTER OPELOC:
CLR OPEFLG     -    ; INDICATE LOCATION NOT YET OPEN
LBSR CRLF           ; PRINT CR/LF
TFR X,D             ; FETCH NEW ADDRESS
PSHS B              ; SAVE B FOR LATER
LBSR UNPACK         ; PRINT LEADING 2 DIGITS
PULS A              ; RESTORE LOWER 2 DIGITS
LBSR UNPACK         ; AND PRINT
LDB #'/             ; LOAD A SLASH
BSR PUTC            ; AND PRINT
LDB #SPACE          ; LOAD A SPACE
BSR PUTC            ; AND PRINT AND REFRESH BUFFER MEMORY
LDA ,X              ; FETCH CURRENT DATA
STA OPEDAT          ; STORE IN POINTER TABLE
BSR UNPACK          ; AND PRINT
LDB #SPACE          ; LOAD ANOTHER SPACE
BSR PUTC            ; AND PRINT
LDB #4              ; LOAD OFFSET POINTER FOR READING DATA
STB OPEPNT
STB OPEFLG          ; INDICATE THAT LOCATION IS OPEN
LBRA FETCH          ; DONE, GET NEXT INPUT

; SECTION TO HANDLE UP-ARROW FOR OPEN MODE
; UP-ARROW WRITES OUT THE CURRENT DATA, CLOSES THE CURRENT LO
; AND OPENS THE PREVIOUS LOCATION ARROW:
LBSR CLOSE          ; CLOSE CURRENT LOCATION IF OPEN
LEAX \\-1,X         ; DECREMENT ADDRESS COUNTER
BRA OPELOC          ; AND OPEN NEW LOCATION
```

```
; SECTION TO HANDLE SLASH FOR OPEN MODE
; SLASH OPENS THE CURRENT LOCATION
; IF THE LOCATION IS ALREADY OPEN, IT IS CLOSED FIRST

SLASH:
TST OPEFLG        ; IS LOCATION OPEN?
BEQ 1$            ; NO, GO ON
BSR CLOSE         ; YES, CLOSE
BRA 2$            ; AND REOPEN LOCATION

1$:
LDA OPEPNT        ; FETCH INPUT OFFSET
BEQ 2$            ; NO CHANGE IN ADDRESS, SO OPEN AS IS
LDX OPEBUF        ; LOAD NEW ADDRESS

2$:
BRA OPELOC        ; OPEN LOCATION

; SECTION TO START EXECUTION FROM CURRENT ADDRESS
; STACK IS ZEROED AND FIRQ INTERRUPTS ARE ENABLED PRIOR TO EX

GOMAN:
TST OPEFLG        ; IS LOCATION OPEN?
BNE OPERR         ; YES, NOT ALLOWED!
LDB #NUL          ; PRINT EXTRA CHAR TO FLUSH OUTPUT BUFFER
BSR PUTC          ; SO THAT 'G' IS ECHOED
BSR PUTC          ; (OUTPUT IS DOUBLE-BUFFERED)
LDS #STACK        ; ZERO STACK TO REDUCE CHANCE OF STACK OVERFL
TST OPEPNT        ; USE CONTENTS OF X AS STARTING ADDRESS?
BEQ 1$            ; NO CHANGE IN ADDRESS, SO USE X
LDX OPEBUF        ; LOAD NEW STARTING ADDRESS

1$:
ANDCC #^CFMASK    ; RE-ENABLE FIRQ INTERRUPTS
JMP , X           ; START EXECUTION

; SECTION TO HANDLE INVALID INPUT FROM TERMINAL
; A '?' IS PRINTED AND THE CURRENT ADDRESS AND DATA IS IGNORE
; IF A LOCATION IS ALREADY OPEN, IT IS CLOSED AND REOPENED

OPERR:
LDB #'?           ; LOAD A '?'
BSR PUTC          ; AND PRINT
TST OPEFLG        ; IS LOCATION OPEN?
BNE OPELOC        ; YES, REOPEN
LBRA NEWLOC       ; NO, IGNORE COMMAND

; ROUTINE TO GET INPUT FROM TERMINAL FOR OPEN MODE
; REGISTER U POINTS TO THE RELEVANT POINTER TABLE
; REGISTER B WILL CONTAIN THE INPUT CHARACTER ON RETURN

GETC:
LDB [\TTCSRX,U]   ; FETCH ACIA STATUS
BITB #1           ; INPUT?
BEQ GETC          ; NO, NOT YET
LDB [\TPORTX,U]   ; YES, READ CHARACTER
ANDB #7F          ; MASK OFF BIT 8
RTS
```

```
;ROUTINE TO OUTPUT TO TERMINAL FOR OPEN MODE
;REGISTER U POINTS TO THE RELEVANT POINTER TABLE
;REGISTER B CONTAINS THE CHARACTER TO BE OUTPUT

PUTC:
PSHS B              ;TEMP SAVE CHARACTER TO BE OUTPUT

1$:
LDB [\TTCSRX,U]     ;FETCH ACIA STATUS
BITB #2             ;OK TO OUTPUT?
BEQ 1$              ;NO, CHECK AGAIN
PULS B              ;YES, RESTORE OUTPUT CHAR
STB [\TPORTX,U]     ;AND OUTPUT
RTS

;ROUTINE TO PRINT CARRIAGE RETURN/LINEFEED FOR OPEN MODE
;THE CONTENTS OF REGISTER B IS DESTROYED

CRLF:
LDB #CR             ;LOAD CARRIAGE RETURN
BSR PUTC            ;AND OUTPUT
LDB #LF             ;LOAD LINEFEED
BSR PUTC            ;AND OUTPUT
RTS

;ROUTINE TO OUTPUT CONTENTS OF REGISTER A AS TWO HEX DIGITS
;THE CONTENTS OF REGISTER B IS DESTROYED
;FOR OPEN LOCATION MODE

UNPACK:
TFR A,B             ;DUPLICATE
LSRB                ;SHIFT TO GET FIRST DIGIT
LSRB
LSRB
LSRB
ADDB #'0            ;MAKE INTO A NUMBER
CMPB #'9            ;IS GREATER THAN '9'?
BLS 1$              ;NO, LEAVE AS IS
ADDB #'A-'9-1       ;YES, MAKE INTO A LETTER 'A'-'F'

1$:
BSR PUTC            ;AND PRINT
TFR A,B             ;NOW FOR SECOND DIGIT
ANDB #0F            ;MASK OFF UPPER BITS
ADDB #'0            ;MAKE INTO A NUMBER
CMPB #'9            ;IS GREATER THAN '9'?
BLS 2$              ;NO, LEAVE AS IS
ADDB #'A-'9-1       ;YES, MAKE INTO A LETTER 'A'-'F'

2$:
BSR PUTC            ;AND PRINT
RTS                 ;DONE

;ROUTINE TO CLOSE CURRENT LOCATION IF OPEN
;DATA IS NOT WRITTEN IF NO NEW DATA WAS SPECIFIED
;REGISTERS A AND B ARE USED AS SCRATCH
```

```
CLOSE:
TST OPEFLG       ; IS LOCATION OPEN?
BEQ 1$           ; NO, RETURN
LDA OPEDAT       ; GET ANY NEW DATA
LDB OPEPNT       ; IS THERE ANY NEW DATA?
CMPB #4
BLS 1$           ; NO, SKIP IT
STA ,X           ; YES, WRITE NEW DATA

1$:
RTS              ; RETURN
```

```
            .SBTTL   SELF TEST SECTION
;SELF TEST MAY BE USER-INITIATED OR HOST-INITIATED.
;USER-INITIATED SELF TEST IS VIA NMI (NONmMASKABLE INTERRUPT
;SELF TEST REQUEST BY HOST.
;HOST-INITIATED SELF TEST IS VIA PORT CONTROL (ADDRESS 176XX
;A COMPLETE SELF TEST REQUIRES HOST ASSISTANCE.  HOWEVER, MA
;BE CHECKED OUT WITHOUT AID OF A HOST - SUCH AS ROM INTEGRIT

.SBTTL            HOST-ASSISTED SECTION
;IT TAKES 4 COMPLETE PASSES OF THE MAINLINE IN ORDER TO SERV
;(ONE PASS PER CHANNEL)
;NORMAL FIRQ INTERRUPT ROUTINES ARE USED
;IRQ INTERRUPTS ARE NOT ENABLED
;SPECIAL HOST CONTROL COMMANDS ARE STORED IN THE 'QUEUE' ENT

;POINTER TABLE AND ARE AS FOLLOWS:
;         BIT 7 SET, INITIATES UNAIDED SELF TEST (ROM, RAM, I/
;         BIT 6 IS ALWAYS SET
;         BIT 5 IS ALWAYS CLEARED
;         BIT 4 IS ALWAYS SET
;         BIT 3 SET, ZEROES CHANNEL BUFFERS AND SPECIAL FLAGS
;         BIT 2 SET, ENABLES ECHO-BACK
;         BIT 1 SET, DISABLES ECHO-BACK
;         BIT 0 SET, SHIFTS BIT ONE POSITIONS LEFT IN UPPER 4
;               REGISTER.
;MULTIPLE REQUESTS MAY BE PROCESSED (IN ABOVE ORDER) IN ONE
;WRITE, ALONG AS BIT 7 IS CLEARED.
;UNAIDED SELF TEST MAY ALSO BE STARTED VIA HOST REQUEST, BUT
;REQUEST (VIRTUAL SELF TEST).


;COMMAND SUMMARY:
;         76543210          FUNCTION           HEX    OCTA
;         0101XXX1     SHIFT PORT STATUS BIT   [51]   (121
;         0101XX1X     DISABLE ECHO-BACK       [52]   (122
;         0101X10X     ENABLE ECHO-BACK        [54]   (124
;         01011XX0     CLEAR TRANSMIT COUNTER  [58]   (130
;         01011XX1     ZERO BUFFERS AND FLAGS  [59]   (131
;         1101XXXX     UNAIDED SELF TEST       [D0]   (320


; IN ADDITION, THE FOLLOWING PORT CONTROL COMMANDS ARE STILL
;         76543210          FUNCTION           HEX    OCTA
;         00011011     VIRTUAL SELF TEST       [1B]   (033
;         00011100     DOWNLOAD MODE           [1C]   (034
;         00011101     OPEN LOCATION MODE      [1D]   (035
;         00011110     SELF TEST MODE          [1E]   (036
```

```
;       00011111        RESTART                [1F]      (037

;IF ECHO-BACK IS ENABLED, THE FOLLOWING IS TRUE:
;          1) THE LOWER FOUR BITS OF ANY ATTRIBUTE BYTE WILL BE
;             FOUR BITS OF THE HARDWARE STATUS REGISTER OF THE
;          2) IF THE INPUT BUFFER CONTAINS ANY CHARACTERS (STOR
;             DISABLE), THEN THESE ARE AVAILABLE FOR READING UN
;             OR A HOST DATA OUTPUT OCCURS.  EACH CHARACTER MUS
;             THE NEXT ONE IS MADE AVAILABLE.
;          3) EACH CHARACTER OUTPUT BY THE HOST IS COPIED TO TH
;             ('RBUF') WITHOUT REGARD TO THE CURRENT DATA READY
;          4) THE TRANSMIT COUNTER ('HWCLR') IS CLEARED AFTER E


;IF ECHO-BACK IS DISABLED, THE FOLLOWING IS TRUE:
;          1) EACH CHARACTER OUTPUT BY THE HOST IS STORED IN TH
;          2) THE UPPER BYTE OF THE OUTPUT BUFFER WRITE POINTER
;             CHANNEL 0 HOST INPUT REGISTER ('RBUF0') FOLLOWING
;          3) THE LOWER BYTE OF THE OUTPUT BUFFER WRITE POINTER
;             CHANNEL 1 HOST INPUT REGISTER ('RBUF1') FOLLOWING
;          4) THE UPPER BYTE OF THE INPUT BUFFER WRITE POINTER
;             CHANNEL 2 HOST INPUT REGISTER ('RBUF2') FOLLOWING
;          5) THE LOWER BYTE OF THE INPUT BUFFER WRITE POINTER
;             CHANNEL 3 HOST INPUT REGISTER ('RBUF3') FOLLOWING
;          6) THE TRANSMIT COUNTER ('HWCLR') IS NEVER CLEARED.


QUERY:
LDS #STACK        ;ZERO STACK
LBSR INIT         ;INITIALIZE POINTER TABLES

HOSTED:
STA PICON         ;DUMMY WRITE TO ENABLE PROGRAMMABLE INTERRUP
LDX #STAT3        ;PRESET CHANNEL POINTER TABLE POINTER

ADJUST:
TFR X,D           ;MOVE CHANNEL TABLE POINTER TO AC
ADDB #40          ;AND POINT TO NEXT CHANNEL TO BE SERVICED
TFR D,X           ;RETURN VALUE TO X

LOCKON:
ANDCC #^CFMASK    ;ENABLE FIRQ INTERRUPT MONITORING
LDA \QUEUEX,X     ;LOAD LATEST PORT CONTROL REQUEST
BEQ ECOBAK        ;NOTHING, CHECK ON ECHO-BACK/NO ECHO-BACK
ORCC #FMASK       ;DISABLE INTERRUPT MONITORING
BPL 1$            ;NOT UNAIDED SELF TEST REQUEST, GO ON
LDU #4080         ;INDICATE ROM TEST AND HOST-INITIATED
LBRA GUIDE        ;START UNAIDED SELF TEST

1$:
CLR \QUEUEX,X     ;CLEAR REQUEST
ANDA #0F          ;ONLY LOOK AT LOW 4 BITS
BITA #8           ;ZERO BUFFERS AND SPECIAL FLAGS (OR TRANSMIT
BEQ 2$            ;NO, GO ON
STA [\TTCLRX,X]   ;RESET TRANSMIT COUNTER
BITA #1           ;CLEAR ONLY TRANSMIT COUNTER?
BEQ LOCKON        ;YES, CHECK FOR MORE ACTION ON THIS CHANNEL
```

```
        LDD \OBOTX,X      ;LOAD POINTER TO START OF OUTPUT BUFFER
        STD \\PUSHOX,X    ;AND STORE AS NEW OUTPUT BUFFER WRITE POINTE
        STD \\POPOX,X     ;AND SAVE AS NEW OUTPUT BUFFER READ POINTER
        STD RBUFO         ;AND COPY TO CHANNEL O AND 1 HOST INPUT REGI
        ANDA #^C8         ;CONVERT TO START OF INPUT BUFFER POINTER
        STD \\PUSHIX,X    ;AND STORE AS NEW INPUT BUFFER WRITE POINTER
        STD \\POPIX,X     ;AND STORE AS NEW INPUT BUFFER READ POINTER
        STD RBUF2         ;AND COPY TO CHANNEL 2 AND 3 HOST INPUT REGI
        LBSR CLRATT       ;CLEAR ALL ATTRIBUTE BYTES IN OUTPUT BUFFER
        CLR \\INFLGX,X    ;CLEAR INPUT WAITING FOR HOST FLAG
        CLR \ECHOX,X      ;CLEAR ECHO-BACK INDICATION
        BRA NEWBIT        ;INITIALIZE ROTATING STATUS

2$:
        BITA #4           ;ENABLE ECHO-BACK?
        BEQ 3$            ;NO, GO ON
        LDA #80           ;YES, MARK
        STA \ECHOX,X

3$:
        BITA #2           ;DISABLE ECHO-BACK?
        BEQ 4$            ;NO, GO ON
        ANDA #^C80        ;CLEAR ANY ECHO-BACK ENABLE INDICATION
        STA \ECHOX,X      ;MARK

4$:
        BITA #1           ;ROTATING STATUS REQUEST?
        BEQ LOCKON        ;NO, CHECK FOR MORE ACTION

ROTATE:
        ASL \SHIFTX,X     ;SHIFT CURRENT ROTATING STATUS
        LDA \SHIFTX,X     ;AND FETCH
        BCC OLDBIT        ;OK AS IS

NEWBIT:
        LDA #8            ;RE-INITIALIZE ROTATING STATUS
        STA \SHIFTX,X     ;AND SAVE FOR NEXT TIME

OLDBIT:
        STA [\PSTATX,X]   ;COPY UPPER 4 BITS TO PORT STATUS REGISTER
        BRA LOCKON        ;CHECK FOR MORE ACTION ON THIS CHANNEL

ECOBAK:
        TST \ECHOX,X      ;IS ECHO-BACK ENABLED OR DISABLED?
        BEQ ADJUST        ;NEITHER, TRY NEXT CHANNEL
        BPL QUIET         ;DISABLED, GO ON
        LDY \\POPOX,X     ;LOAD OUTPUT BUFFER READ POINTER
        LDA \\1,Y         ;HAS ATTRIBUTE BYTE BEEN WRITTEN?
        BEQ 1$            ;NO, CHECK FOR INPUT
        ASLA              ;YES, MOVE LOW 4 BITS TO UPPER 4 BITS
        ASLA
        ASLA
        ASLA
        STA [\PSTATX,X]   ;AND WRITE TO HARDWARE PORT STATUS REGISTER
        CLRA              ;CLEAR ATTRIBUTE BYTE
        STA \\1,Y         ;CLR INSTRUCTION IS NOT ALLOWED!
        BRA LOCKON        ;CHECK FOR MORE ACTION ON THIS CHANNEL
```

```
1$:
TST \\INFLGX,X   ; IS INPUT ALREADY WAITING FOR HOST?
BNE 2$           ; YES, GO ON
LDY \\POPIX,X    ; LOAD INPUT BUFFER READ POINTER
CMPY \\PUSHIX,X  ; IS INPUT BUFFER EMPTY?
BEQ 2$           ; YES, GO ON
LDA ,Y+          ; FETCH NEXT INPUT CHARACTER
INC \\INFLGX,X   ; SET INPUT WAITING FOR HOST FLAG
STA [\HRBUFX,X]  ; AND COPY CHARACTER TO HARDWARE REGISTER
TFR Y,D          ; MOVE READ POINTER TO AC
ANDA #^C8        ; TAKE CARE OF ANY WRAP-AROUND
STD \\POPIX,X    ; SAVE NEW POINTER
LBRA LOCKON      ; CHECK FOR MORE ACTION ON THIS CHANNEL

2$:
LDY \\POPOX,X    ; LOAD OUTPUT BUFFER READ POINTER
CMPY \\PUSHOX,X  ; IS OUTPUT BUFFER EMPTY?
LBEQ ADJUST      ; YES, CHECK NEXT CHANNEL
LDA ,Y           ; FETCH OUTPUT CHARACTER
STA [\HRBUFX,X]  ; COPY IMMEDIATELY TO HARDWARE RECEIVER REGIS
TFR Y,D          ; MOVE POINTER TO AC FOR UPDATING
ANDA #^C8        ; MAKE ROOM FOR ANY OVERFLOW
ADDD #2          ; 2 BYTES PER OUTPUT
ORA #8           ; RESTORE BUFFER ADDRESS BIT
STD \\POPOX,X    ; STORE NEW OUTPUT BUFFER READ POINTER
STA [\TTCLRX,X]  ; RESET TRANSMIT COUNTER
LDY \\PUSHIX,X   ; KILL INPUT BUFFER
STY \\POPIX,X
CLR \\INFLGX,X   ; CLEAR INPUT WAITING FOR HOST FLAG
LBRA LOCKON      ; CHECK FOR MORE ACTION ON THIS CHANNEL

QUIET:
LDY \\POPOX,X    ; LOAD OUTPUT BUFFER READ POINTER
CMPY \\PUSHOX,X  ; IS OUTPUT BUFFER EMPTY?
LBEQ ADJUST      ; YES, CHECK NEXT CHANNEL
LDA ,Y           ; FETCH OUTPUT CHARACTER
PSHS A           ; TEMP SAVE
TFR Y,D          ; MOVE POINTER TO AC FOR UPDATING
ANDA #^C8        ; MAKE ROOM FOR ANY OVERFLOW
ADDD #2          ; 2 BYTES PER OUTPUT
ORA #8           ; RESTORE BUFFER ADDRESS BIT
STD \\POPOX,X    ; STORE NEW OUTPUT POINTER
LDY \\PUSHIX,X   ; LOAD INPUT BUFFER WRITE POINTER
PULS A           ; RESTORE OUTPUT CHARACTER
STA ,Y+          ; AND STORE IN INPUT BUFFER
TFR Y,D          ; MOVE POINTER TO AC
ANDA #^C8        ; CLEAR ANY OVERFLOW
STD \\PUSHIX,X   ; SAVE NEW POINTER
STY RBUF2        ; AND COPY TO CHANNEL 2 AND 3 HOST INPUT REGI
LDY \\PUSHOX,X   ; LOAD OUTPUT BUFFER WRITE POINTER
STY RBUF0        ; AND COPY TO CHANNEL 0 AND 1 HOST INPUT REGI
LBRA LOCKON      ; CHECK FOR MORE ACTION ON THIS CHANNEL
```

```
        .SBTTL          UNAIDED SELF TEST SECTION
;TEST MESSAGES AND ERRORS ARE PRINTED THROUGH CHANNEL O TERM
;AT 2400 BAUD IF THE SELF TEST WAS USER-INITIATED.
;THE RAM AND ROM TESTS ARE WRITTEN SUCH THAT NO SCRATCH RAM
;IS REQUIRED.   THIS MAKES THE TEST RESULTS SOMEWHAT RELIABLE
;THE RAM UNDER TEST IS NOT USED IN THE TESTING AND REPORTING
```

```
;REGISTER U IS USED FOR SELF TEST STATUS AS FOLLOWS:
;       BIT 15 SET, INDICATES THAT UNAIDED SELF TEST IS FINI
;       BIT 14 SET, INDICATES THAT A ROM ERROR OCCURRED (OR
;       BIT 13 SET, INDICATES THAT A RAM ERROR OCCURRED (OR
;       BIT 12 SET, INDICATES THAT AN I/O ERROR OCCURRED (OR
;       BIT  7 SET, INDICATES THAT SELF TEST WAS HOST INITIA
;                   OR VIRTUAL SELF TEST REQUEST (VIA HOST)
;       BIT  3 SET, INDICATES THAT A CHANNEL 3 I/O ERROR OCC
;       BIT  2 SET, INDICATES THAT A CHANNEL 2 I/O ERROR OCC
;       BIT  1 SET, INDICATES THAT A CHANNEL 1 I/O ERROR OCC
;       BIT  0 SET, INDICATES THAT A CHANNEL 0 I/O ERROR OCC
;AS EACH TEST IS ENTERED, THE CORRESPONDING TEST IN PROGRESS
;IT IS CLEARED AT THE END OF THE TEST, PROVIDING THAT NO ERR

;IN ADDITION, THE RAM TEST USES THE FOLLOWING REGISTER U BIT
;       BITS 11, 10, 9, AND 8 ARE USED FOR TEMPORARY RAM TES
;       BIT  6 SET, INDICATES THAT STOP ON ERROR IS IN EFFEC
;       BIT  5 SET, INDICATES THAT LOOP MODE IS IN EFFECT
;THE GLOBAL STATUS BITS 12-15 ARE COPIED INTO THE CHANNEL 0
;AT THE BEGINNING OF EACH UNAIDED TEST AND UPON COMPLETION O
;OF SELF TEST.
;THE TERMINAL I/O TEST STATUS BITS 0-3 ARE COPIED INTO THE C
;REGISTER ('PSTR1') UPON COMPLETION OF THE UNAIDED PORTION O

;ENTRY POINT FOR USER INITIATED SELF TEST (SWI3 OR NMI INTER

TESTME:
ORCC #IFMASK      ;MAKE SURE THAT INTERRUPT MONITORING IS DISA
LDU #4000         ;INDICATE ROM TEST, USER-INITIATED SELF TEST
LDA #1            ;POINT TO CHANNEL 0 PTM CONTROL REGISTER
STA CLOCKO-1
LDA #FSHOT        ;LOAD PTM CONTROL FOR BAUD GENERATION
STA CLOCKO-2      ;WRITE BAUD CLOCK GENERATION CONTROL
LDX DEFALT        ;FETCH DEFAULT BAUD RATE CONSTANT (2400)
STX CLOCKO        ;AND WRITE TO TIMER LATCHES
LDA #MRESET       ;RESET CHANNEL 0 ACIA
STA ACIA0
LDA #TXROFF       ;SET ACIA PARAMETERS - NO INTERRUPTS
STA ACIA0

;SECTION TO CONTROL SELF TEST

GUIDE:
STA PICOFF        ;DUMMY WRITE TO DISABLE PROGRAMMABLE INTERRU
TFR U,D           ;FETCH CURRENT STATUS BITS
STA PSTRO         ;AND COPY TO CHANNEL 0 HW REGISTER
CLR PSTR1         ;INDICATE NO I/O ERRORS
LDY #MESG1        ;POINT TO START OF INITIAL MESSAGE
LDS #TEST1        ;LOAD RETURN ADDRESS
LBRA WRITEM       ;WRITE MESSAGE

TEST1:
LDS #TEST2A       ;LOAD RETURN ADDRESS FOR ROM TEST
LBRA ROMTST       ;AND TEST ROM

TEST2A:
TFR U,D           ;FETCH CURRENT SELF TEST STATUS
```

```
        EORA #60          ;REFLECT ACTUAL ROM TEST ERROR STATUS AND EN
        TFR D,U           ;RE-STORE U
        STA PSTRO         ;COPY CURRENT STATUS TO CHANNEL O HW REGISTE
        LDY #MESG2A       ;POINT TO "RAM" MESSAGE

LOOPT2:
        LDS #MPART2       ;LOAD RETURN ADDRESS
        LBRA WRITEM       ;AND PRINT FIRST PART OF MESSAGE

MPART2:
        LDY #MESG2B       ;POINT TO "[0000-03FF]" MESSAGE
        LDX #0000         ;POINT TO START OF SCRATCH RAM
        LDS #RAMTST       ;LOAD RETURN ADDRESS
        LBRA WRITEM       ;WRITE MESSAGE AND TEST SCRATCH RAM

TEST2B:
        LDY #MESG3        ;POINT TO "[8000-BFFF]" MESSAGE
        LDX #8000         ;POINT TO START OF SCRATCH RAM
        LDS #RAMTST       ;LOAD RETURN ADDRESS
        LBRA WRITEM       ;WRITE MESSAGE AND TEST BUFFER MEMORY

END2:
        TFR U,D           ;FETCH CONTENTS OF U
        BITB #60          ;IS LOOP MODE IN EFFECT?
        BEQ TEST3         ;NO, GO ON TO NEXT TEST
        LDY #MESG4        ;POINT TO "LOOPING..." MESSAGE
        BRA LOOPT2        ;LOOP

TEST3:
        LDS #STACK        ;INITIALIZE STACK POINTER
        TFR U,D           ;FETCH CURRENT SELF TEST STATUS
        EORA #30          ;REFLECT ACTUAL RAM TEST ERROR STATUS AND EN
        TFR D,U           ;RE-STORE U
        TSTB              ;WAS SELF TEST HOST-INITIATED?
        BPL 1$            ;NO, GO ON
        BITA #60          ;YES, ANY RAM OR ROM ERRORS?
        BNE FINISH        ;YES, DON'T TRUST MEMORY - END SELF TEST

1$:
        STA PSTRO         ;COPY CURRENT SELF TEST STATUS TO CHANNEL O
        LDY #MESG6        ;POINT TO "TERMINAL I/O" MESSAGE
        LBSR PRINTM       ;PRINT
        LBSR IOTEST       ;AND TEST TERMINAL I/O

FINISH:
        LDY #MESG99       ;POINT TO START OF "TEST COMPLETE" MESSAGE
        LBSR PRINTM       ;AND PRINT
        LBSR INIT         ;INITIALIZE POINTER TABLES
        TFR U,D           ;FETCH LATEST STATUS
        EORA #90          ;REFLECT ACTUAL I/O TEST ERROR AND SELF TEST
        STA PSTRO         ;AND MOVE TO CHANNEL O HW PORT STATUS REGIST
        ASLB              ;MOVE I/O TEST ERROR STATUS TO UPPER BITS
        ASLB
        ASLB
        ASLB
        STB PSTR1         ;AND COPY TO CHANNEL 1 HW REGISTER
        TFR U,D           ;FETCH STATUS AGAIN
        TSTB              ;WAS SELF TEST HOST-INITIATED?
```

```
LBMI HOSTED    ;YES, RETURN TO HOST-INITIATED SELF TEST MAI
LDA #80        ;INDICATE NON-TERMINAL INPUT STATUS IN HW ST
STA \NSFLG0    ;CHANNEL O
STA \NSFLG1    ;CHANNEL 1
LBRA RSTART    ;RESTART LT-11 WITHOUT AFFECTING HW STATUS
```

```
            .SBTTL          ROM CHECKSUM TEST
;THIS CHECKSUM ALGORITHM WAS FIRST USED IN THE TEKTRONIX 466
;PLOTTER.  THE STORED CHECKSUM IS IN THE FIRST 2 LOCATIONS O
;THE ROM AND IS PLACED THERE BY THE ROM FORMATTER PROGRAM -

;THE ALGORITHM GOES AS FOLLOWS:
;           1) INITIALIZE CHECKSUM TO 0000 AND POINT TO FIRST RO
;          .2) READ ROM BYTE
;           3) ADD TO CHECKSUM WITH CARRY
;           4) ROTATE CHECKSUM LEFT 1 WITH CARRY
;           5) POINT TO NEXT ROM LOCATION
;           6) REPEAT STEPS 2-5 UNTIL ALL ROM LOCATIONS ARE READ
;           7) COMPARE CHECKSUM WITH STORED CHECKSUM


;EXCEPTIONS TO THE ABOVE ALGORITHM ARE AS FOLLOWS:
;           1) IF THE ADDRESS IS FFEO-FFE3, FF IS USED AS DATA
;           2) IF THE ADDRESS IS FFFO-FFF9, THEN THE DATA COMES
;           3) IF THE ADDRESS IS NOT INCLUDED IN ABOVE STEP 2, A
;              RANGE FFE4-FFFF AND EITHER ADDRESS BIT 2 OR BIT 3
;              THEN ADDRESS BITS 3, 2, AND 1 ARE COMPLEMENTED
;THESE EXCEPTIONS ARE DUE TO THE PROGRAMMABLE INTERRUPT CONT
;REGISTER S CONTAINS THE RETURN ADDRESS

ROMTST:
LDD #0000          ;INITIALIZE CHECKSUM TO 0000
LDX #START         ;POINT TO FIRST ROM LOCATION
LDY #VECLST        ;LOAD POINTER TO SUBSTITUTE DATA LIST

1$:
CMPX #OFFEO        ;DOES ADDRESS CONFLICT WITH INTERRUPT CONTRO
BLO 5$             ;NO, NO SPECIAL HANDLING
CMPX #OFFE4        ;IS IN RANGE FFEO-FFE3?
BHS 2$             ;NO, GO ON
ADDB #OFF          ;YES, USE FF AS DATA BECAUSE CAN'T READ REAL
BRA 6$

2$:
CMPX #OFFFO        ;IS ADDRESS IN THE RANGE FFFO-FFF9?
BLO 3$             ;NO, GO ON
CMPX #OFFFA        ;MAYBE, CHECK UPPER LIMIT
BHS 3$             ;NO, GO ON
ADDB ,Y+           ;YES, USE SHADOW BYTE
BRA 6$             ;AND GO ON

3$:
EXG X,D            ;MOVE ROM ADDRESS POINTER TO ACCUMULATORS
BITB #4            ;COMPLEMENT ADDRESS BITS 3, 2, AND 1?
BEQ 4$             ;YES
BITB #8            ;TEST AGAIN
BEQ 4$             ;YES, COMPLEMENT
EXG X,D            ;NO, USE ADDRESS AS IS
BRA 5$
```

```
4$:
EORB #OE         ;COMPLEMENT ADDRESS BITS 3, 2, AND 1
EXG X,D          ;RETURN X TO X AND D TO D
ADDB ,X          ;ADD ROM BYTE
EXG X,D          ;RESTORE ROM ADDRESS
EORB #OE
EXG X,D
BRA 6$           ;USE NEW DATA

5$:
ADDB ,X          ;ADD ROM BYTE

6$:
BCC 7$           ;NO CARRY, GO ON
INCA             ;ADD IN END CARRY
BNE 7$           ;NO OVERFLOW, GO ON
INCB             ;ADD IN OVERFLOW CARRY

7$:
ASLB             ;SHIFT LEFT
ROLA             ;SHIFT CARRY, IF ANY, INTO HIGH BYTE
BCC 8$           ;NO END AROUND CARRY
INCB             ;ADD END AROUND CARRY

8$:
LEAX \\1,X       ;END OF ROM?
BNE 1$           ;NO, NEXT LOCATION
CMPD VERIFY  -   ;YES, DOES CHECKSUM AGREE WITH STORED CHECKS
BEQ 9$           ;YES, NEXT TEST
EXG U,D          ;PREPARE TO REFLECT ERROR IN STATUS
ANDA #^C40       ;INDICATE ROM ERROR
EXG U,D          ;AND WRITE BACK
LDY #ERR1        ;POINT TO START OF "ROM ERROR" MESSAGE
LBRA WRITEM      ;AND WRITE MESSAGE

9$:
JMP ,S           ;RETURN TO MAINLINE
```

```
        .SBTTL              RAM TEST
;THIS IS A MODIFIED MARCH TEST WITH COMPLEMENT ADDRESSING
;SCRATCH RAM IS NOT USED BECAUSE IT IS UNDER TEST.
;RETURN ADDRESS FOR SUBROUTINE CALLS IS STORED IN REGISTER S
;(DEPENDING ON THE ROUTINE).
;9 PASSES ARE REQUIRED TO TEST ALL DATA PATTERNS

;THE ALGORITHM USED IS AS FOLLOWS:
;     STARTING WITH TEST DATA=00,
;            1) WRITE TEST DATA TO CONSOLE (CHANNEL 0) PORT
;            2) WRITE LOCATION WITH TEST DATA
;            3) COMPLEMENT ADDRESS AND WRITE WITH TEST DATA
;            4) COMPLEMENT AND INCREMENT ADDRESS AND WRITE WITH T
;            5) REPEAT STEPS 3-4 UNTIL ALL RAM LOCATIONS ARE WRIT
;            6) READ, VERIFY, AND COMPLEMENT THE DATA OF EACH OF
;               LOCATIONS IN ORDER
;            7) DELAY APPROXIMATELY 1 SECOND TO CHECK FOR DROPOUT
;            8) VERIFY THE COMPLEMENTED DATA IN EACH LOCATION WIT
;               COMPLEMENT ADDRESSING SCHEME
;            9) REPEAT STEPS 1-8 WITH TEST DATA OF 01,02,04,08,10
```

```
; AN 'S' RECEIVED FROM THE CHANNEL O PORT WILL LOOP THIS TEST
; AN 'L' RECEIVED FROM THE CHANNEL O PORT WILL LOOP THIS TEST
; AN 'E' RECEIVED FROM THE CHANNEL O PORT WILL END THIS TEST


RAMTST:
TFR U, D              ;FETCH STATUS WORD
ANDA #OFO             ;ZERO LOWER 4 BITS OF UPPER BYTE
ADDA #OA              ;INITIALIZE PASS COUNT
TFR D, U              ;RETURN TO U


LOOPR:
TFR U, D              ;FETCH PASS COUNT
DECA                  ;DONE WITH RAM TEST?
BITA #OF              ;IT'S IN THE LOWER 4 BITS OF UPPER BYTE
LBEQ ENDTST           ;YES, DETERMINE WHERE TO RETURN TO
TFR D, U              ;SAVE UPDATED PASS COUNT
ANDA #OF              ;ONLY LOOK AT PASS COUNT
LDB #80              ;NOW FIGURE OUT WHAT TO USE FOR DATA
ASLB                  ;WILL BE 80,40,20,10,08,04,02,01, OR OO


1$:
RORB                  ;DEPENDING ON PASS COUNT
DECA                  ;FINISHED?
BNE 1$                ;NO
EXG U, D              ;FETCH CURRENT STATUS
TSTB                  ;WAS HOST-INITIATED SELF TEST?
EXG U, D              ;RESTORE U AND D
BMI WRITE1            ;YES, NO TERMINAL OUTPUT
TFR D, S              ;TEMP SAVE DATA
TFR B, A              ;MOVE DATA TO A
LDY #ENDLNE           ;LOAD RETURN ADDRESS
LBRA HEXOUT           ;AND DISPLAY IN HEX


ENDLNE:
LDA ACIAO             ;OK TO SEND SPACE?
BITA #2
BEQ ENDLNE            ;NO, CHECK AGAIN
LDA #SPACE            ;YES, LOAD
STA ACIAO+1           ;AND WRITE
TFR S, D              ;RESTORE DATA


WRITE1:
TST \0000             ;REQUEST REFRESH OF BUFFER MEMORY
STB , X               ;STORE DATA
EXG X, D              ;MOVE ADDRESS POINTER TO D
COMB                  ;COMPLEMENT LOW BYTE
COMA                  ;COMPLEMENT HIGH BYTE
BPL 1$                ;BUFFER MEMORY ADDRESS, GO ON
ANDA #3               ;SCRATCH RAM IS 10 BITS ONLY
BRA 2$                ;GO ON


1$:
ANDA #03F             ;BUFFER MEMORY IS 14 BITS
ORA #80              ;MAP INTO BUFFER MEMORY SPACE


2$:
EXG X, D              ;RESTORE D AND X
```

```
WRITE2:
TST \0000        ;REQUEST REFRESH OF BUFFER MEMORY
STB ,X           ;STORE DATA
EXG X,D          ;MOVE ADDRESS POINTER TO D
COMB             ;COMPLEMENT LOW BYTE
COMA             ;COMPLEMENT HIGH BYTE
BPL 1$           ;BUFFER MEMORY ADDRESS, GO ON
ANDA #3          ;SCRATCH RAM IS 10 BITS ONLY
BRA 2$           ;GO ON

1$:
ANDA #03F        ;BUFFER MEMORY IS 14 BITS
ORA #80          ;MAP INTO BUFFER MEMORY SPACE

2$:
EXG X,D          ;RESTORE D
LEAX \\1,X       ;POINT TO NEXT ADDRESS

WRITE3:
CMPX #200        ;WRITTEN ALL SCRATCH RAM LOCATIONS?
BNE 1$           ;NO, CHECK BUFFER MEMORY
LDX #0000        ;YES, RESTORE START OF SCRATCH RAM
BRA RMW1         ;READ, MODIFY, AND WRITE DATA

1$:
CMPX #0A000      ;WRITTEN ALL BUFFER MEMORY LOCATIONS?
BNE WRITE1       ;NO, NEXT LOCATION
LDX #8000        ;YES, RESTORE START OF BUFFER MEMORY

RMW1:
TST \0000        ;REFRESH BUFFER MEMORY REQUEST
CMPB ,X          ;DOES DATA VERIFY?
BEQ ERET1        ;YES, GO ON
LDS #ERET1       ;ERROR, LOAD RETURN ADDRESS
LBRA RAMERR      ;AND PRINT ERROR MESSAGE

ERET1:
COMB             ;COMPLEMENT DATA
TST \0000        ;REFRESH BUFFER MEMORY REQUEST
STB ,X+          ;STORE COMPLEMENTED DATA
COMB             ;RESTORE DATA FOR NEXT VERIFY
CMPX #400        ;END OF SCRATCH RAM?
BNE 1$           ;NO, GO ON
LDX #0000        ;YES, RESTORE START OF SCRATCH RAM
BRA DELAY        ;AND VERIFY COMPLEMENTED DATA

1$:
CMPX #0C000      ;END OF BUFFER RAM?
BNE RMW1         ;NO, CHECK NEXT LOCATION
LDX #8000        ;YES, RESTORE START OF SCRATCH RAM

DELAY:
LDA #3           ;NUMBER OF OUTSIDE LOOPS FOR 1 SECOND DELAY
LDY #0000        ;ZERO DELAY COUNTER

1$:
LEAY \\1,Y       ;INCREMENT COUNT
BNE 1$           ;INSIDE LOOP NOT FINISHED
```

```
        DECA              ;OUTSIDE LOOP FINISHED?
        BNE 1$            ;NO
        EXG U,D           ;FETCH CURRENT STATUS
        TSTB              ;WAS HOST-INITIATED SELF TEST?
        EXG U,D           ;RESTORE U AND D
        BMI FLIP          ;YES, NO TERMINAL OUTPUT
        LDS #FLIP         ;LOAD RETURN ADDRESS
        CLRA              ;INDICATE COMING FROM 'RAMTST'
        LBRA CHECK        ;CHECK FOR KEYBOARD INPUT

        FLIP:
        COMB              ;COMPLEMENT DATA FOR VERIFY

        READ1:
        TST \0000         ;REFRESH BUFFER MEMORY REQUEST
        CMPB ,X           ;DOES DATA VERIFY?
        BEQ ERET2         ;YES, GO ON
        LDS #ERET2        ;ERROR, LOAD RETURN ADDRESS
        BRA RAMERR        ;AND PRINT ERROR MESSAGE

        ERET2:
        EXG X,D           ;MOVE ADDRESS POINTER TO D
        COMB              ;COMPLEMENT LOW BYTE
        COMA              ;COMPLEMENT HIGH BYTE
        BPL 1$            ;BUFFER MEMORY ADDRESS, GO ON
        ANDA #3           ;SCRATCH RAM IS 10 BITS ONLY
        BRA 2$            ;GO ON

        1$:
        ANDA #03F         ;BUFFER MEMORY IS 14 BITS
        ORA #80           ;MAP INTO BUFFER MEMORY SPACE

        2$:
        EXG X,D           ;RESTORE D

        READ2:
        TST \0000         ;REFRESH BUFFER MEMORY REQUEST
        CMPB ,X           ;DOES DATA VERIFY?
        BEQ ERET3         ;YES, GO ON
        LDS #ERET3        ;LOAD RETURN ADDRESS
        BRA RAMERR        ;AND PRINT ERROR MESSAGE

        ERET3:
        EXG X,D           ;MOVE ADDRESS POINTER TO D
        COMB              ;COMPLEMENT LOW BYTE
        COMA              ;COMPLEMENT HIGH BYTE
        BPL 1$            ;BUFFER MEMORY ADDRESS, GO ON
        ANDA #3           ;SCRATCH RAM IS 10 BITS ONLY
        BRA 2$            ;GO ON

        1$:
        ANDA #03F         ;BUFFER MEMORY IS 14 BITS
        ORA #80           ;MAP INTO BUFFER MEMORY SPACE

        2$:
        EXG X,D           ;RESTORE D
        LEAX \\1,X        ;POINT TO NEXT RAM ADDRESS
        CMPX #200         ;VERIFIED ALL SCRATCH RAM LOCATIONS?
```

```
          BNE 3$             ;NO, GO ON
          LDX #0000          ;YES, RESTORE START OF SCRATCH RAM POINTER
          BRA 4$             ;AND START NEXT PASS

3$:
          CMPX #0A000        ;VERIFIED ALL BUFFER RAM LOCATIONS?
          BNE READ1          ;NO, CHECK NEXT LOCATION
          LDX #8000          ;YES, RESTORE START OF BUFFER RAM POINTER

4$:
          LBRA LOOPR         ;START NEXT PASS

ENDTST:
          CMPX #0000         ;JUST FINISH TESTING SCRATCH RAM?
          LBEQ TEST2B        ;YES, RETURN TO CONTROL

GOBACK:
          LBRA END2          ;JUST FINISHED BUFFER MEMORY

ABORT:
          LBRA TEST3         ;ABORT RAM TEST
```

```
;ERROR ROUTINE FOR RAM ERRORS

;THE ERROR MESSAGE IS IN THE FORM:
;   ** RAM ERROR AT ADDRESS XXXX  EX:XX  RE:XX **
;WHERE THE X'S ARE REPLACED BY ERROR DATA
;'EX' IS EXPECTED DATA, 'RE' IS RECEIVED DATA
;REGISTER X POINTS TO ERROR LOCATION
;REGISTER B CONTAINS EXPECTED DATA
;REGISTER S CONTAINS THE RETURN ADDRESS
;REGISTERS A AND Y ARE SCRATCH

RAMERR:
EXG U,D              ;FETCH CURRENT STATUS
TSTB                 ;WAS HOST-INITIATED SELF TEST?
EXG U,D              ;RESTORE U AND D
LBMI SETERR          ;YES, NO TERMINAL OUTPUT
LDY #ERR2A           ;POINT TO START OF ERROR MESSAGE: "RAM ERROR

1$:
LDA ACIA0            ;OK TO PRINT CHARACTER?
BITA #2
BEQ 1$               ;NOT YET
LDA ,Y+              ;FETCH CHARACTER TO BE PRINTED
BEQ 2$               ;DONE WITH THIS PART OF ERROR MESSAGE
STA ACIA0+1          ;PRINT IT
BRA 1$               ;READY FOR NEXT CHARACTER

2$:
TFR B,DP             ;TEMP SAVE B
TFR X,D              ;FETCH ERROR ADDRESS
LDY #PRINT1          ;POINT TO RETURN ADDRESS
LBRA HEXOUT          ;AND OUTPUT UPPER BYTE IN HEX

PRINT1:
TFR X,D              ;RE-FETCH ERROR ADDRESS
TFR B,A              ;PREPARE LOWER BYTE
LDY #PRINT2          ;POINT TO RETURN ADDRESS
```

```
        LBRA HEXOUT      ;AND OUTPUT LOWER BYTE IN HEX

        PRINT2:
        LDY #ERR2B       ;POINT TO "EX:" MESSAGE

        1$:
        LDA ACIA0        ;OK TO PRINT CHARACTER?
        BITA #2
        BEQ 1$           ;NOT YET
        LDA ,Y+          ;FETCH CHARACTER TO BE PRINTED
        BEQ 2$           ;DONE WITH THIS PART OF ERROR MESSAGE
        STA ACIA0+1      ;PRINT IT
        BRA 1$           ;READY FOR NEXT CHARACTER

        2$:
        TFR DP,A         ;RESTORE EXPECTED DATA
        LDY #PRINT3      ;POINT TO RETURN ADDRESS
        LBRA HEXOUT      ;AND OUTPUT DATA IN HEX

        PRINT3:
        LDY #ERR2C       ;POINT TO "RE:" MESSAGE

        1$:
        LDA ACIA0        ;OK TO PRINT CHARACTER?
        BITA #2
        BEQ 1$           ;NOT YET
        LDA ,Y+          ;FETCH CHARACTER TO BE PRINTED
        BEQ 2$           ;DONE WITH ERROR MESSAGE
        STA ACIA0+1   -  ;PRINT IT
        BRA 1$           ;READY FOR NEXT CHARACTER

        2$:
        TST 03FF         ;REFRESH BUFFER MEMORY REQUEST
        LDA ,X           ;FETCH RECEIVED DATA
        LDY #PRINT4      ;POINT TO RETURN ADDRESS
        LBRA HEXOUT      ;AND OUTPUT DATA IN HEX

        PRINT4:
        LDY #ERR2D       ;POINT TO END OF ERROR MESSAGE ("**")

        1$:
        LDA ACIA0        ;OK TO PRINT CHARACTER?
        BITA #2
        BEQ 1$           ;NOT YET
        LDA ,Y+          ;FETCH CHARACTER TO BE PRINTED
        BEQ 2$           ;DONE WITH ERROR MESSAGE
        STA ACIA0+1      ;PRINT IT
        BRA 1$           ;READY FOR NEXT CHARACTER

        2$:
        TFR DP,B         ;RESTORE DATA
        CLRA             ;RESTORE DP
        TFR A,DP

        SETERR:
        EXG U,D          ;FETCH STATUS
        ANDA #^C20       ;INDICATE RAM ERROR
        BITB #40         ;IS STOP ON ERROR BIT SET?
```

```
                                              0134115
                          -91-

        BNE 1$             ; YES,  GO ON
        EXG U, D           ; RE-STORE U AND D
        CLRA               ; INDICATE COMING FROM 'RAMTST'
        BRA CHECK          ; CHECK FOR KEYBOARD INPUT AND RETURN

        1$:
        ORA #0A0           ; INDICATE RAM ERROR AND SELF TEST COMPLETE
        STA PSTRO          ; AND MOVE TO CHANNEL 0 HW PORT STATUS REGIST
        LDY #ERR3          ; POINT TO MESSAGE NOTIFYING USER
        LDS #STOP          ; POINT TO RETURN ADDRESS
        LBRA WRITEM        ; WRITE MESSAGE

        STOP:
        LDS #STACK         ; POINT TO VALID STACK IN CASE OF OPEN MODE R
        ANDCC #^CFMASK     ; ALLOW FIRQ INTERRUPTS TO SAVE US
        STA PICON          ; ENABLE PROGRAMMABLE INTERRUPT CONTROLLER

        HANG:
        BRA HANG           ; AND HANG

        ; SECTION TO TEST FOR KEYBOARD INPUT FOR 'RAMTST' AND 'IOTEST
        ; IF 'S' IS RECEIVED, THEN 'RAMTST' IS LOOPED WITH STOP ON ER
        ; IF 'L' IS RECEIVED, THEN 'RAMTST' IS LOOPED WITH NO STOP ON
        ; IF 'E' IS RECEIVED, THEN 'RAMTST' IS ENDED
        ; <CTRL S> TEMPORARILY STOPS OUTPUT
        ; <CTRL Q> RESTARTS OUTPUT
        ; NO KEYBOARD CHECK IS MADE IF SELF TEST WAS HOST-INITIATED
        ; REGISTER A CONTAINS ORIGINATING ROUTINE INDICATOR (PLUS='RA
        ; NO 'S', 'L', OR 'E' CHECK IS MADE IF ORIGINATING ROUTINE WA
        ; REGISTER S CONTAINS THE RETURN ADDRESS
        ; REGISTER A IS USED AS SCRATCH

        CHECK:
        EXG U, D           ; FETCH SELF TEST STATUS
        TSTB               ; WAS SELF TEST HOST INITIATED?
        EXG U, D           ; RESTORE U AND D
        BMI 6$             ; YES, NO KEYBOARD INPUT CHECK
        ASLA               ; SAVE ORIGINATING ROUTINE INDICATOR IN CARRY
        LDA ACIAO          ; ANY KEYBOARD INPUT?
        BITA #1            ; (CARRY IS IN USE)
        BEQ 6$             ; NO, RETURN
        LDA ACIAO+1        ; YES, READ INPUT
        ANDA #7F           ; MASK OFF BIT 8
        BCS 4$             ; NO 'S', 'L', OR 'E' CHECK
        CMPA #'S           ; IS INPUT AN 'S'?
        BNE 1$             ; NO, GO ON
        EXG U, D           ; YES, FETCH STATUS WORD
        ORB #60            ; AND SET STOP ON ERROR AND LOOP BITS
        EXG U, D           ; RESTORE U AND D
        BRA 2$             ; START LOOPING

        1$:
        CMPA #'L           ; IS INPUT AN 'L'?
        BNE 3$             ; NO, GO ON
        EXG U, D           ; YES, FETCH U
        ANDB #^C40         ; CLEAR STOP ON ERROR BIT
        ORB #20            ; AND SET LOOPING MODE BIT
        EXG U, D           ; RESTORE
```

```
2$:
LBRA GOBACK        ;START LOOPING


3$:
CMPA #'E           ;IS INPUT AN 'E'?
LBEQ ABORT         ;YES, END TEST


4$:
CMPA #XOFF         ;IS INPUT A <CTRL S>?
BNE 6$             ;NO, RETURN


5$:
LDA ACIA0          ;WAIT FOR MORE INPUT
LSRA
BCC 5$             ;NOTHING YET
LDA ACIA0+1        ;READ INPUT
ANDA #7F           ;MASK OFF BIT 8
CMPA #XON          ;IS <CTRL Q>?
BNE 5$             ;NO, IGNORE IT


6$:
JMP ,S             ;RETURN


;ROUTINE TO OUTPUT CONTENTS OF REGISTER A IN HEX
;REGISTER B IS USED AS SCRATCH
;REGISTER Y CONTAINS THE CALL RETURN ADDRESS
;NO OUTPUT OCCURS IF SELF TEST WAS HOST-INITIATED


HEXOUT:
EXG U,D            ;FETCH SELF TEST STATUS
TSTB               ;WAS SELF TEST HOST-INITIATED?
EXG U,D            ;RESTORE U AND D
BMI 3$             ;YES, NO OUTPUT
LDB ACIA0          ;PRINTER BUFFER EMPTY?
BITB #2
BEQ HEXOUT         ;NOT YET
TFR A,B            ;DUPLICATE
LSRA               ;MOVE UPPER 4 BITS TO LOWER
LSRA
LSRA
LSRA
ADDA #'0           ;MAKE INTO AN ASCII NUMBER
CMPA #'9           ;IS GREATER THAN '9'?
BLS 1$             ;NO, OUTPUT AS IS
ADDA #'A-'9-1      ;YES, MAKE INTO HEX NUMBER A-F


1$:
STA ACIA0+1        ;OUTPUT
ANDB #0F           ;NOW LOOK AT LOWER 4 BITS
ADDB #'0           ;MAKE INTO AN ASCII NUMBER
CMPB #'9           ;IS GREATER THAN '9'?
BLS 2$             ;NO, OUTPUT AS IS
ADDB #'A-'9-1      ;YES, MAKE INTO HEX NUMBER A-F


2$:
LDA ACIA0          ;OK TO OUTPUT?
BITA #2
```

```
BEQ 2$          ;NOT YET
STB ACIA0+1     ;YES, OUTPUT

3$:
JMP ,Y          ;RETURN TO CALLING ROUTINE
```

```
                .SBTTL          TERMINAL I/O TEST
;THE POINTER TABLES, ACIA'S, PTM'S AND HARDWARE REGISTERS AR
;THE DATA PATH TO AND FROM EACH TERMINAL IS THEN TESTED (WIT
;INSTALLED ON J50) AT ALL VALID BAUD RATES WITH INTERRUPTS E
;31 CHARACTERS ARE TRANSMITTED THROUGH EACH CHANNEL:   00-OF
;ALSO, EACH PROGRAMMABLE TIMER IS TESTED AT 3 DIFFERENT DELA
;IMMEDIATELY AFTER THE 31ST CHARACTER AT THE HIGHEST (19200)
;INTERRUPT TRACKING IS STORED IN LOCATION 'TRACE'

;BIT VALUES FOR 'TRACE' ARE AS FOLLOWS:
;        BIT 7 SET, INDICATES CHANNEL 3 TIMER INTERRUPT
;        BIT 6 SET, INDICATES CHANNEL 2 TIMER INTERRUPT
;        BIT 5 SET, INDICATES CHANNEL 1 TIMER INTERRUPT
;        BIT 4 SET, INDICATES CHANNEL O TIMER INTERRUPT
;        BIT 3 SET, INDICATES CHANNEL 3 ACIA INPUT INTERRUPT
;        BIT 2 SET, INDICATES CHANNEL 2 ACIA INPUT INTERRUPT
;        BIT 1 SET, INDICATES CHANNEL 1 ACIA INPUT INTERRUPT
;        BIT O SET, INDICATES CHANNEL O ACIA INPUT INTERRUPT
;ALL CHANNELS ARE TESTED IN HOST-INITIATED SELF TEST MODE
;ALL CHANNELS, EXCEPT CHANNEL O, ARE TESTED IN USER-INITIATE
;THERE IS NO RECOVERY FOR AN UNIDENTIFIED INTERRUPT

IOTEST:
LBSR INIT           ;INITIALIZE POINTER TABLES, ACIA'S, PTM, 'S A
TFR U,D             ;RESTORE HW STATUS REGISTER
STA PSTRO           ;DUE TO 'INIT' ROUTINE CLEAR
LDX #INSELF         ;POINT TO SELF TEST INPUT SERVICE ROUTINE
STX \INPUTO         ;SAVE FOR CHANNEL O
STX \INPUT1         ;AND CHANNEL 1
STX \INPUT2         ;INITIALIZING ALL CHANNELS EARLY
STX \INPUT3         ;IN ORDER TO MONITOR UNEXPECTED INTERRUPTS
LDX #STATO          ;POINT TO CHANNEL O POINTER TABLE
CLR IOCHAN          ;SET INITIAL CHANNEL NUMBER TO 0
TFR U,D             ;FETCH SELF TEST STATUS
TSTB                ;WAS SELF TEST HOST-INITIATED?
BMI IOPREP          ;YES, TEST ALL CHANNELS
LDA #TXROFF         ;NO, DISABLE CHANNEL O INTERRUPTS
STA [\TTCSRX,X]     ;SO THAT NORMAL PRINTING CAN BE PERFORMED
LBRA NEWCH          ;SKIP CHANNEL O PORTION OF TEST

IOPREP:
CLR IOATT           ;CLEAR THE ATTRIBUTE BYTE
LDA IOCHAN          ;FETCH CURRENT CHANNEL NUMBER
ADDA #'O            ;MAKE CHANNEL NUMBER ASCII
LBSR PRINTC         ;AND DISPLAY
LDY #CLKTBL         ;POINT TO START OF BAUD RATE TABLE
CLR IORATE          ;INITIALIZE RATE COUNT TO 0

IOLOAD:
LDD ,Y              ;LOAD NEW BAUD RATE
STD [\RATEX,X]      ;WRITE TO PTM LATCH

PTMPNT:
```

```
STY CLKPNT          ;SAVE BAUD RATE POINTER FOR LATER
CLRB                ;FIRST CHAR IS A NULL

NEWDAT:
STB EXPDAT          ;SAVE EXPECTED DATA
LDY \\PUSHOX,X      ;POINT TO NEXT BUFFER LOCATION
LDA IOATT           ;LOAD ATTRIBUTE BYTE
STA \\1,Y           ;AND STORE
STB ,Y++            ;STORE DATA AND UPDATE POINTER
STY \\PUSHOX,X      ;SAVE NEW OUTPUT POINTER (NO WRAP-AROUND TO
LDA #TXON           ;ENABLE TRANSMIT INTERRUPT
STA [\TTCSRX,X]
ANDCC #^CIMASK      ;ENABLE IRQ INTERRUPT MONITORING
LDY CLKPNT          ;LOAD BAUD RATE TABLE POINTER
LDY \CLKMAX,Y       ;FETCH TIMEOUT CONSTANT

1$:
LDB TRACE           ;FETCH LATEST INTERRUPT STATUS
BNE 3$              ;GOT INTERRUPT(S), EVALUATE
LEAY \\-1,Y         ;NOTHING, TIMED OUT?
BNE 1$              ;NO, CHECK AGAIN
ORCC #IMASK         ;DISABLE IRQ INTERRUPT MONITORING
LDB #81             ;INDICATE TIMEOUT ERROR
TST IOATT           ;TIMER TESTING?
BEQ 2$              ;NO, GO ON
ANDB #^C80          ;YES, DON'T DISPLAY EXPECTED DATA

2$:
LBSR IOERR      -   ;AND LOG
BRA 8$              ;SKIP READ

3$:
ORCC #IMASK         ;DISABLE IRQ INTERRUPT MONITORING
PSHS Y              ;TEMP SAVE Y
LDY \\PUSHIX,X      ;POINT TO INPUT CHARACTER
LDA ,Y              ;AND FETCH
PULS Y              ;RESTORE Y
LDB \MARKX,X        ;FETCH CHANNEL MARKER
TST IOATT           ;TIMER TEST?
BEQ 4$              ;NO, ACIA TEST
ASLB                ;YES, SHIFT TO UPPER BITS
ASLB
ASLB
ASLB
CLRA                ;CLEAR RECEIVED DATA FOR VERIFY

4$:
STA RECDAT          ;SAVE RECEIVED DATA
CMPB TRACE          ;ONE AND ONLY ONE INTERRUPT (AND CORRECT ONE
BEQ 5$              ;YES, GO ON
LDA EXPDAT          ;TEMP SAVE NORMALLY EXPECTED DATA
PSHS A
STB EXPDAT          ;SAVE EXPECTED INTERRUPT STATUS FOR ERROR ME
LDB TRACE           ;ALONG WITH RECEIVED INTERRUPT STATUS
STB RECDAT
LDB #0C4            ;IDENTIFY AS UNEXPECTED INTERRUPT ERROR
BRA 6$              ;AND LOG
```

```
5$:
EORB TRACE          ;ONLY CLEAR OPERATION THAT CAUSED INTERRUPT
STB TRACE           ;MONITOR INTERRUPTS BETWEEN CHARS
TFR Y,D             ;MOVE TIME SPENT WAITING FOR CHAR
LDY CLKPNT          ;LOAD BAUD RATE CLOCK REFERENCE POINTER
CMPD \CLKMIN,Y      ;WAS MINIMUM CHARACTER TIME REACHED?
BLS 7$              ;YES, CHECK FOR DATA VERIFY
LDB EXPDAT          ;SAVE EXPECTED DATA
PSHS B              ;IN ORDER TO USE COMMON CODE FOLLOWING 'IOER
LDB #OC2            ;INDICATE EARLY INPUT ERROR
TST IOATT           ;TIMER TESTING?
BEQ 6$              ;NO, GO ON
ANDB #^COCO         ;YES, OMIT RECEIVED AND EXPECTED DATA IN ERR

6$:
BSR IOERR           ;AND LOG
LDA #MRESET         ;RESET ACIA
STA [\TTCSRX,X]     ;TO RE-SYNCHRONIZE TO AVOID CAUSING MORE ERR
LDA #TXOFF          ;RESTORE DATA PARAMETERS
STA [\TTCSRX,X]
CLR TRACE           ;CLEAR INTERRUPT STATUS
PULS B              ;RESTORE EXPECTED DATA
BRA 9$              ;SKIP DATA VERIFY

7$:
LDA RECDAT          ;LOAD RECEIVED DATA
CMPA EXPDAT         ;DID INPUT=OUTPUT?
BEQ 8$              ;YES, GO ON
LDB #OCO         -  ;NO, INDICATE DATA COMPARISON ERROR
BSR IOERR           ;AND LOG

8$:
LDB EXPDAT          ;RESTORE DATA

9$:
TST IOATT           ;TIMER TESTING?
BNE NEWBOD          ;YES, NO DATA UPDATE
INCB                ;INCREMENT DATA
CMPB #10            ;INCREMENTING UPPER 4 BITS?
LBLS NEWDAT         ;NO, USE CURRENT DATA
ADDB #10-1          ;YES, INCREMENT UPPER 4 BITS
LBNE NEWDAT         ;AND OUTPUT

NEWBOD:
LDY CLKPNT          ;LOAD RATE POINTER
LEAY \\2,Y          ;POINT TO NEXT BAUD RATE
INC IORATE          ;INCREMENT RATE COUNT
LDB IORATE          ;FETCH RATE COUNT
CMPB #<<TOPCLK-CLKTBL>/2>   ;TESTED CHANNEL AT ALL BAUD RATES
LBLS IOLOAD         ;NO, ANOTHER TO GO
LDA IOATT           ;FETCH ATTRIBUTE BYTE
INCA                ;INCREMENT
ORA #8              ;INHIBIT CHARACTER OUTPUT
STA IOATT           ;SAVE NEW ATTRIBUTE BYTE
CMPA #<<<TSTMAX+4-DLYTBL>/4>!8>   ;TESTED ALL DELAY TIMES?
LBLS PTMPNT         ;NO, TEST NEXT DELAY TIME

NEWCH:
```

```
LEAX \40,X        ;POINT TO START OF NEXT CHANNEL'S POINTER TA
INC IOCHAN        ;INCREMENT CHANNEL NUMBER
LDA IOCHAN        ;FETCH CHANNEL NUMBER
CMPA #4           ;TESTED ALL CHANNELS?
LBNE IOPREP       ;NO, MORE TO DO
RTS               ;RETURN TO SELF TEST MAINLINE
```

0134115

```
;ERROR ROUTINE FOR I/O ERRORS

;THE ERROR MESSAGE IS IN THE FORM:
;   ** I/O ERROR ON CHANNEL X - RATE:XX   EX:XX   RE:XX **

;OR:
;   ** I/O ERROR ON CHANNEL X - RATE:XX   EX:XX   RE:XX - UNEXP

;OR:
;   ** I/O ERROR ON CHANNEL X - RATE:XX   EX:XX   RE:XX - EARLY

;OR:
;   ** I/O ERROR ON CHANNEL X - RATE:XX   EX:XX - NO INPUT **
;WHERE THE X'S ARE REPLACED BY ERROR DATA

;RATE IS REFLECTED AS FOLLOWS:
;         00=150    BAUD
;         01=300    BAUD
;         02=600    BAUD
;         03=1200   BAUD
;         04=2400   BAUD
;         05=4800   BAUD
;         06=9600   BAUD
;         07=19200 BAUD
;         08=2      MSEC DELAY
;         09=4      MSEC DELAY
;         0A=50     MSEC DELAY
;'EX' IS EXPECTED DATA, 'RE' IS RECEIVED DATA
;IN THE CASE OF AN UNEXPECTED INTERRUPT ERROR, 'EX' REFLECTS
;INTERRUPT PATTERN AND 'RE' REFLECTS THE RECEIVED INTERRUPT

;THE BIT VALUES FOR 'EX' AND 'RE' IN UNEXPECTED INTERRUPT ER
;         BIT 7 SET, INDICATES CHANNEL 3 ACIA INTERRUPT
;         BIT 6 SET, INDICATES CHANNEL 2 ACIA INTERRUPT
;         BIT 5 SET, INDICATES CHANNEL 1 ACIA INTERRUPT
;         BIT 4 SET, INDICATES CHANNEL 0 ACIA INTERRUPT
;         BIT 3 SET, INDICATES CHANNEL 3 TIMER INTERRUPT
;         BIT 2 SET, INDICATES CHANNEL 2 TIMER INTERRUPT
;         BIT 1 SET, INDICATES CHANNEL 1 TIMER INTERRUPT
;         BIT 0 SET, INDICATES CHANNEL 0 TIMER INTERRUPT

;REGISTER B CONTAINS ERROR PRINTOUT FORMAT INFORMATION AS FO
;         BIT 7 SET, PRINTS EXPECTED DATA
;         BIT 6 SET, PRINTS RECEIVED DATA
;         BIT 2 SET, PRINTS "UNEXPECTED INTERRUPT" ERROR MESSA
;         BIT 1 SET, PRINTS "EARLY INPUT" ERROR MESSAGE IN PLA
;         BIT 0 SET, PRINTS "NO INPUT" ERROR MESSAGE IN PLACE
;'IOCHAN' CONTAINS CURRENT CHANNEL NUMBER
;'RECDAT' CONTAINS RECEIVED DATA
;'EXPDAT' CONTAINS EXPECTED DATA
;<CTRL S> TEMPORARILY STOPS OUTPUT
;<CTRL Q> RESTARTS OUTPUT
```

```
;REGISTER X CONTAINS POINTER TO RELEVANT POINTER TABLE
;CONTENTS OF REGISTERS A AND B ARE DESTROYED
;NO OUTPUT OCCURS IF SELF TEST WAS HOST-INITIATED


IOERR:
STB ERRFMT          ;SAVE ERROR FORMAT
PSHS Y              ;SAVE REGISTER Y
LDY #ERR4A          ;POINT TO "I/O ERROR" PART OF ERROR MESSAGE
LBSR PRINTM         ;AND PRINT
LDA IOCHAN          ;LOAD CHANNEL NUMBER
ADDA #'O            ;MAKE ASCII
BSR PRINTC          ;AND PRINT
LDY #ERR4B          ;POINT TO "RATE" PART OF ERROR MESSAGE
LBSR PRINTM         ;AND PRINT
LDA IORATE          ;FETCH RATE COUNT
LDY #HEXEX          ;LOAD RETURN ADDRESS
LBRA HEXOUT         ;AND OUTPUT IN HEX


HEXEX:
ASL ERRFMT          ;PRINT EXPECTED DATA?
BCC HEXREC          ;NO, GO ON
LDY #ERR2B          ;POINT TO "EX" PART OF ERROR MESSAGE
BSR PRINTM          ;AND PRINT
LDA EXPDAT          ;LOAD EXPECTED DATA
LDY #HEXREC         ;LOAD RETURN ADDRESS
LBRA HEXOUT         ;AND PRINT IN HEX


HEXREC:
ASL ERRFMT          ;DISPLAY RECEIVED DATA?
BCC INTRUP          ;NO, GO ON
LDY #ERR2C          ;POINT TO START OF "RE" MESSAGE
BSR PRINTM          ;AND PRINT
LDA RECDAT          ;LOAD RECEIVED DATA
LDY #INTRUP         ;LOAD RETURN ADDRESS
LBRA HEXOUT         ;AND OUTPUT IN HEX


INTRUP:
LDB ERRFMT          ;FETCH UPDATED ERROR FORMAT
BITB #<4*4>         ;PRINT "UNEXPECTED INTERRUPT" ERROR MESSAGE?
BEQ EARLY           ;NO, GO ON
LDY #ERR4E          ;YES, POINT TO START OF ERROR MESSAGE
BSR PRINTM          ;AND PRINT


EARLY:
BITB #<2*4>         ;PRINT "EARLY INPUT"?
BEQ LOST            ;NO, GO ON
LDY #ERR4C          ;YES, POINT TO START OF MESSAGE
BSR PRINTM          ;AND PRINT


LOST:
BITB #<1*4>         ;PRINT "NO INPUT"?
BEQ 1$              ;NO, GO ON
LDY #ERR4D          ;YES, POINT TO START OF MESSAGE
BSR PRINTM          ;AND PRINT


1$:
LDY #ERR2D          ;POINT TO ERROR MESSAGE TERMINATION
BSR PRINTM          ;AND PRINT
```

0134115

```
EXG U,D          ;FETCH SELF TEST STATUS
ANDA #^C10       ;AND INDICATE I/O ERROR
ORB \MARKX,X     ;IDENTIFY CHANNEL FOR HOST
EXG U,D          ;RE-STORE U AND D
TFR S,Y          ;TEMP SAVE STACK POINTER
LDS #ENDERR      ;LOAD RETURN ADDRESS
LDA #80          ;INDICATE COMING FROM 'IOTEST'
LBRA CHECK       ;CHECK FOR <CTRL S>

ENDERR:
TFR Y,S          ;RESTORE STACK POINTER
PULS Y           ;RESTORE Y
RTS              ;AND RETURN
```

```
;ROUTINE TO OUTPUT CHARACTERS TO PORT O TERMINAL AFTER STAC
;REGISTER A CONTAINS THE CHARACTER TO BE OUTPUT
;NO REGISTERS ARE AFFECTED
;NO OUTPUT OCCURS IF SELF TEST WAS HOST-INITIATED

PRINTC:
EXG U,D         ;FETCH CURRENT STATUS
TSTB            ;WAS HOST-INITIATED?
EXG U,D         ;RESTORE U AND D
BMI 2$          ;YES, NO TERMINAL OUTPUT
PSHS A          ;TEMP SAVE CHARACTER TO BE OUTPUT

1$:
LDA ACIAO       ;FETCH I/O STATUS
BITA #2         ;OK TO OUTPUT?
BEQ 1$          ;NO, CHECK AGAIN
PULS A          ;YES, RESTORE OUTPUT CHAR
STA ACIAO+1     ;AND OUTPUT

2$:
RTS

;ROUTINE TO PRINT MESSAGES TO PORT O TERMINAL AFTER STACK IS
;REGISTER Y POINTS TO START OF MESSAGE
;'!' IN MESSAGE STRING SENDS CR/LF
;NULL IN MESSAGE STRING TERMINATES MESSAGE
;NO REGISTERS ARE AFFECTED
;NO OUTPUT OCCURS IF SELF TEST WAS HOST-INITIATED

PRINTM:
PSHS A,X        ;SAVE A AND X
TFR S,X         ;SAVE STACK POINTER
LDS #RETURN     ;LOAD RETURN ADDRESS
BRA WRITEM      ;AND WRITE MESSAGE

RETURN:
TFR X,S         ;RESTORE STACK POINTER
PULS X,A        ;RESTORE A AND X
RTS             ;AND RETURN

;SECTION TO OUTPUT MESSAGES FOR SELF TEST BEFORE STACK IS IN
;REGISTER Y POINTS TO START OF MESSAGE
;REGISTER A IS USED AS SCRATCH
;'!' IN MESSAGE STRING SENDS CR/LF
;NULL IN MESSAGE STRING TERMINATES MESSAGE
```

```
;REGISTER S CONTAINS THE RETURN ADDRESS
;NO OUTPUT OCCURS IF SELF TEST WAS HOST-INITIATED

WRITEM:
EXG U,D             ;FETCH CURRENT STATUS
TSTB                ;WAS HOST-INITIATED SELF TEST?
EXG U,D             ;RESTORE U AND D
BMI 4$              ;YES, NO TERMINAL OUTPUT

1$:
LDA ACIA0           ;FETCH CHAN 0 TRANSMIT STATUS
BITA #2             ;READY FOR ANOTHER CHARACTER?
BEQ 1$              ;NOT YET
LDA ,Y+             ;YES, FETCH NEXT CHARACTER
BEQ 4$              ;END OF MESSAGE, RETURN
CMPA #'!            ;IS TIME FOR CR/LF?
BNE 3$              ;NO, OUTPUT AS IS
LDA #CR             ;YES, LOAD CR
STA ACIA0+1         ;AND OUTPUT

2$:
LDA ACIA0           ;OUTPUT READY?
BITA #2
BEQ 2$              ;NO, TRY AGAIN
LDA #LF             ;YES, LOAD LF

3$:
STA ACIA0+1         ;PRINT CHARACTER
BRA 1$              ;CHECK FOR MORE CHARACTERS TO PRINT

4$:
JMP ,S              ;RETURN TO CALLING ROUTINE

;ROUTINE TO START PROGRAMMABLE TIMER
;REGISTER B CONTAINS DELAY CONSTANT
;REGISTER X POINTS TO RELEVANT POINTER TABLE
;REGISTERS A,B, AND Y ARE LOST

SETOFF:
LDY #DLYTBL-4       ;POINT TO TOP OF DELAY TABLE-4
ASLB               ;SHIFT FOR PROPER INDEXING
ASLB
LDA B,Y            ;FETCH RELOAD COUNT
STA \RLOADX,X      ;AND SAVE
INCB               ;POINT TO COUNT VALUE
LDD B,Y            ;FETCH IT
STD [\TIMERX,X]    ;AND WRITE TO HARDWARE TIMER
LDA \PTMONX,X      ;FETCH COUNTER ENABLE CONTROL BYTE
STA [\PTCTLX,X]    ;AND ENABLE COUNTER
RTS                ;RETURN
```

```
; INITIALIZATION SECTION FOR PRESETTING THE POINTER TABLES,
; AND HARDWARE REGISTERS
; OUTPUT ATTRIBUTE BYTES ARE ZEROED

INIT:
ORCC #IFMASK      ; DISABLE ANY INTERRUPT MONITORING (SWI2 OR S
LDX #ENDRAM       ; START FROM LAST (NON-STACK) SCRATCH RAM ADD
TFR X,Y           ; USE AS LOCATION COUNTER TOO
```

```
1$:
CLR ,-X          ;CLEAR LOCATION-1
LEAY \\-1,Y      ;CLEARED ALL SCRATCH RAM?
BNE 1$           ;NO, IF NOT ZERO
LDX #STAT0       ;POINT TO TOP OF FIRST CHANNEL POINTER TABLE
LDY #INBUF0      ;FETCH START OF FIRST CHANNEL INPUT BUFFER
CLRB             ;START WITH CHANNEL 0

PRESET:
STX \POINTX,X    ;STORE POINTER TABLE ADDRESS INTO POINTER TA
STY \\PUSHIX,X   ;PRESET INPUT BUFFER POINTERS
STY \\POPIX,X
LEAY 800,Y       ;LOAD THIS CHANNEL'S START OF OUTPUT BUFFER
STY \\PUSHOX,X   ;AND PRESET OUTPUT BUFFER POINTERS
STY \\POPOX,X
STY \OBOTX,X     ;AND STORE IN POINTER TABLE
LBSR CLRATT      ;CLEAR ALL ATTRIBUTE BYTES IN OUTPUT BUFFER
PSHS Y           ;TEMP SAVE Y
LDY #HOSTIN      ;POINT TO POWER-UP TERMINAL INPUT ROUTINE
STY \INPUTX,X    ;AND SAVE IN TABLE
LDY #OUTPUT      ;LOAD POINTER TO TERMINAL OUTPUT ROUTINE
STY \OUTPTX,X    ;AND SAVE IN TABLE
LDY #HWCLR0      ;POINT TO CHANNEL 0'S TRANSMIT COUNTER ADDRE
LEAY B,Y         ;NOW POINT TO CHANNEL CURRENTLY BEING INITIA
STY \TTCLRX,X    ;AND STORE HARDWARE TRANSMIT COUNTER ADDRESS
CLR ,Y           ;ALSO CLEAR COUNTER
LEAY 1000,Y      ;NOW REFLECT THE STATUS REGISTER ADDRESS
STY \PSTATX,X -  ;AND SAVE
CLR ,Y           ;ALSO CLEAR STATUS REGISTER
LEAY 1000,Y      ;NEXT IS THE HOST INPUT REGISTER ADDRESS
STY \HRBUFX,X    ;SAVE
LDY #ACIA0       ;POINT TO CHANNEL 0 TERMINAL PORT ADDRESS
CLRA             ;MAKE SURE A IS ZEROED
EXG A,B          ;UPDATE TO POINT TO CURRENT CHANNEL
ASLA
LEAY D,Y
EXG A,B          ;RESTORE A AND B
STY \TTCSRX,X    ;STORE TERMINAL CONTROL/STATUS REGISTER ADDR
LDA #MRESET      ;LOAD MASTER RESET VALUE
STA ,Y           ;AND WRITE TO ACIA
LDA #TXOFF       ;INITIALIZE TERMINAL PORT CONTROL REGISTER
STA ,Y+          ;AND REFLECT TERMINAL PORT DATA ADDRESS
STY \TPORTX,X    ;AND STORE INTO POINTER TABLE
LDY #CLOCK0      ;POINT TO CHANNEL 0'S BAUD RATE LATCH
LEAY B,Y         ;NOW POINT TO CURRENT CHANNEL'S BAUD RATE LA
LSRB             ;RESTORE B
CMPB #3          ;IS THIS CHANNEL 3?
BNE 1$           ;NO, CONTINUE
LDY #CLOCK3      ;YES, THIS ONE IS ODD

1$:
STY \RATEX,X     ;AND SAVE
LDY DEFALT       ;FETCH DEFAULT BAUD RATE CONSTANT (2400)
STY [\RATEX,X]   ;AND SEND TO BAUD GENERATOR
LDA #<<<DEFALT-CLKTBL>/2>*10>   ;MOVE DEFAULT BAUD VALUE
STA \SPEEDX,X    ;TO POINTER TABLE
LDA #SSHOT       ;FETCH TIMER INTERRUPT ENABLE CONSTANT
```

```
      BITB #1           ; IS CHANNEL 1 OR 3?
      BEQ 2$            ; NO, GO ON
      INCA             ; YES, ADJUST CONSTANT

2$:
      STA \PTMONX, X   ; STORE INTO POINTER TABLE
      LDA #MSHOT       ; FETCH TIMER INTERRUPT DISABLE CONSTANT
      BITB #1          ; IS CHANNEL 1 OR 3?
      BEQ 3$           ; NO, GO ON
      INCA             ; YES, ADJUST CONSTANT

3$:
      STA \PTMSKX, X   ; STORE INTO POINTER TABLE
      TFR B, A         ; PREPARE TO SET CHANNEL INDICATOR BIT
      INCA             ; MAKE SURE THAT AT LEAST ONE BIT IS SET
      CMPA #2          ; LEAVE IT AT THAT?
      BLS 4$           ; YES, GO ON
      ANDA #^C1        ; NO CLEAR LSB
      ASLA             ; AND SHIFT

4$:
      STA \MARKX, X    ; AND SAVE
      LEAX \40, X      ; POINT TO START OF NEXT CHANNEL'S POINTER TA
      PULS Y           ; RESTORE Y
      LEAY 800, Y      ; POINT TO NEXT CHANNEL'S START OF INPUT BUFF
      INCB             ; BUMP CHANNEL NUMBER
      CMPB #4          ; DONE INITIALIZING ALL POINTER TABLES?
      LBNE PRESET      ; NOPE
      LDX #CLOCK0-2    ; POINT TO FIRST BAUD GENERATOR
      LDA #FSHOT       ; CONTINOUS OUTPUT CONSTANT FOR BAUD CLOCKS
      CLR \\1, X       ; POINT TO CHANNEL 2 CONTROL REGISTER
      STA , X          ; WRITE CONTROL TO CHANNEL 2 BAUD GENERATOR
      INCA             ; CHANNEL 0 IS AFTER 1
      STA \\1, X       ; WRITE CONTROL TO CHANNEL 1 BAUD GENERATOR
      DECA             ; MAKE SURE RESET BIT IS OFF
      STA , X          ; WRITE CONTROL TO CHANNEL 0 BAUD GENERATOR
      LDX #CLOCK3-6    ; NOW READY FOR CHANNEL 3
      CLR \\1, X       ; POINT TO CHANNEL 3 CONTROL REGISTER
      STA , X          ; WRITE CONTROL TO CHANNEL 3 BAUD GENERATOR
      LDA #1           ; POINT TO CHANNEL 1 CONTROL REGISTER
      STA \\1, X
      CLR , X          ; AND CLEAR PTM INTERNAL RESET BIT
      LDX #PTM0-2      ; DO THE SAME FOR CHAN 2,3 PTM
      STA \\1, X
      CLR , X          ; NEEDED TO ENABLE TIMERS
      LDX #PTM0        ; POINT TO CHANNEL 0 TIMER LATCH ADDRESS
      STX \TIMER0      ; AND STORE IN POINTER TABLE
      LDX #PTM0-2      ; NOW POINT TO CONTROL ADDRESS
      STX \PTCTL0      ; AND ALSO STORE IN POINTER TABLE
      LDX #PTM1        ; POINT TO CHANNEL 1 TIMER LATCH ADDRESS
      STX \TIMER1      ; AND STORE IN POINTER TABLE
      LDX #PTM1-3      ; NOW POINT TO CONTROL ADDRESS
      STX \PTCTL1      ; AND ALSO STORE IN POINTER TABLE
      LDX #PTM2        ; POINT TO CHANNEL 2 TIMER LATCH ADDRESS
      STX \TIMER2      ; AND STORE IN POINTER TABLE
      LDX #PTM2-2      ; NOW POINT TO CONTROL ADDRESS
      STX \PTCTL2      ; AND ALSO STORE IN POINTER TABLE
      LDX #PTM3        ; POINT TO CHANNEL 3 TIMER LATCH ADDRESS
```

0134115

```
STX \TIMER3         ;AND STORE IN POINTER TABLE
LDX #PTM3-3         ;NOW POINT TO CONTROL ADDRESS
STX \PTCTL3         ;AND ALSO STORE IN POINTER TABLE
RTS                 ;DONE AT LAST

;ROUTINE TO CLEAR ALL ATTRIBUTE BYTES IN THE OUTPUT BUFFER
;REGISTER X CONTAINS THE POINTER TO THE START OF THE APPROPR
;USER PROGRAM SHOULD ALLOW AT LEAST 20 MSEC (ACTIVE RUN) TIM
;OF THIS ROUTINE
;NO REGISTERS ARE AFFECTED

CLRATT:
PSHS X,Y,D          ;SAVE X, Y, AND D FOR RETURN
LDY \OBOTX,X        ;LOAD OUTPUT BUFFER STARTING ADDRESS
LEAY \\1,Y          ;POINT TO FIRST ATTRIBUTE
LDX #<<OTBUFO-INBUFO>/2>   ;LOAD BYTE COUNT
CLRA                ;PREPARE TO CLEAR ATTRIBUTE

1$:
LDB \STATO          ;REFRESH BUFFER MEMORY REQUEST
STA ,Y++           ;CLEAR ATTRIBUTE AND POINT TO NEXT ONE
LEAX \\-1,X         ;CLEARED ALL ATTRIBUTES FOR THIS CHANNEL?
BNE 1$              ;NO, KEEP GOING
PULS D,Y,X          ;YES, RESTORE D, Y, AND X
CLR \\LOOPX,X       ;MAKE SURE THAT LOOP MODE FLAG IS CLEARED
RTS                 ;AND RETURN
```

```
        .SBTTL IRQ INTERRUPT SERVICE ROUTINES

.SBTTL   IRQ INTERRUPT SERVICE POLLING ROUTINE
;'HUNTER' IS THE POLLING ROUTINE TO DECIDE WHO CAUSED INTERR
;AND WHAT TO DO ABOUT IT
;DUPLICATION OF CODE IS FOR SPEEDY SERVICE

HUNTER:
LDA ACIA0          ;START WITH CHANNEL 0 TERMINAL INTERRUPT (LD
BPL LOOK1          ;NO INTERRUPT FROM THIS PORT
LDX #STAT0         ;YES, POINT TO BOTTOM OF POINTER TABLE
BITA #21           ;INPUT INTERRUPT?
BEQ PUTOUT         ;NO, OUTPUT
LDB ACIA0+1        ;READ INPUT
JMP [\INPUTX,X] ;AND PROCESS


LOOK1:
LDA ACIA1          ;CHECK CHANNEL 1 TERMINAL PORT (LDD ACIA1 NO
BPL LOOK2          ;NO INTERRUPT FROM THIS PORT
LDX #STAT1         ;YES, POINT TO BOTTOM OF POINTER TABLE
BITA #21           ;INPUT INTERRUPT?
BEQ PUTOUT         ;NO, OUTPUT
LDB ACIA1+1        ;READ INPUT
JMP [\INPUTX,X] ;AND PROCESS

LOOK2:
LDA ACIA2          ;CHECK CHANNEL 2 TERMINAL PORT (LDD ACIA2 NO
BPL LOOK3          ;NO INTERRUPT FROM THIS PORT
LDX #STAT2         ;YES, POINT TO BOTTOM OF POINTER TABLE
BITA #21         - ;INPUT INTERRUPT?
BEQ PUTOUT         ;NO, OUTPUT
LDB ACIA2+1        ;READ INPUT
```

```
JMP [\INPUTX,X] ;AND PROCESS

LOOK3:
LDA ACIA3      ;CHECK CHANNEL 3 TERMINAL PORT (LDD ACIA3 NO
BPL MISS       ;NO, CHECK PTM'S
LDX #STAT3     ;YES, POINT TO BOTTOM OF POINTER TABLE
BITA #21       ;INPUT INTERRUPT?
BEQ PUTOUT     ;NO, OUTPUT
LDB ACIA3+1    ;READ INPUT
JMP [\INPUTX,X] ;AND PROCESS

PUTOUT:
JMP [\OUTPTX,X] ;OUTPUT

MISS:
LDB TRACE      ;LOAD INTERRUPT TRACKING STATUS
LDA PTM0-1     ;IS IT CHANNEL 0 OR 1 TIMER INTERRUPT?
BPL 2$         ;NO, GO ON
BITA #1        ;YES, IS CHANNEL 0?
BEQ 1$         ;NO, MUST BE CHANNEL 1
LDX #STAT0     ;YES, POINT TO BOTTOM OF POINTER TABLE
ORB #10        ;SET INTERRUPT BIT FOR SELF TEST
BRA 4$         ;AND SERVICE INTERRUPT

1$:
LDX #STAT1     ;POINT TO BOTTOM OF CHANNEL 1'S POINTER TABL
ORB #20        ;SET INTERRUPT BIT FOR SELF TEST
BRA 4$         ;AND SERVICE INTERRUPT

2$:
LDA PTM2-1     ;IS IT CHANNEL 2 OR 3 TIMER INTERRUPT?
BPL 5$         ;NO, TRY TO IGNORE IT
BITA #1        ;YES, IS CHANNEL 2?
BEQ 3$         ;NO, MUST BE CHANNEL 3
LDX #STAT2     ;YES, POINT TO BOTTOM OF POINTER TABLE .
ORB #40        ;SET INTERRUPT BIT FOR SELF TEST
BRA 4$         ;AND SERVICE INTERRUPT

3$:
LDX #STAT3     ;POINT TO BOTTOM OF CHANNEL 3'S POINTER TABL
ORB #80        ;SET INTERRUPT BIT FOR SELF TEST

4$:
LBRA TYMOUT    ;AND SERVICE INTERRUPT

5$:
RTI            ;TRY TO RETURN FROM UNDEFINED INTERRUPT??
```

0134115

```
        .SBTTL   TERMINAL INPUT INTERRUPT SERVICE ROUTINE (BI
;THIS ROUTINE CONTAINS NO FRILLS
;BINARY IS ALLOWED
;DOUBLE CTRL C, DATA OVERRUN, AND FRAMING ERROR DETECTION AR
;THIS ROUTINE IS USED WHEN BINARY MODE IS ENABLED (BY PORT C
;REGISTER X POINTS TO TOP OF RELEVANT POINTER TABLE
;REGISTER A CONTAINS THE CONTENTS OF THE ACIA STATUS REGISTE
;REGISTER B CONTAINS THE INPUT CHARACTER
;IRQ INTERRUPTS ARE DISABLED DURING THIS ENTIRE ROUTINE
;IT IS CRUCIAL THAT THIS ROUTINE BE AS SHORT AS POSSIBLE SO
;CHARACTERS ARE NOT LOST
```

```
LTREAD:
LDY \\PUSHIX,X    ;FETCH INPUT BUFFER POINTER AND REFRESH BUFF
STB ,Y+           ;STORE CHARACTER INTO INPUT BUFFER
ANDA #30          ;SAVE ONLY OVERRUN AND FRAMING ERROR BITS OF
EXG Y,D           ;MOVE UPDATED INPUT WRITE POINTER TO AC
ANDA #^C8         ;TAKE CARE OF ANY WRAP-AROUND
CMPD \\POPIX,X    ;IS INPUT BUFFER FULL?
EXG Y,D           ;RESTORE Y AND D
BNE 1$            ;NO, GO ON
ORA #20           ;YES, SET OVERRUN BIT
LDY \\PUSHIX,X    ;AND RESTORE OLD INPUT WRITE BUFFER POINTER

1$:
ANDB #7F          ;MASK OFF BIT 8 OF INPUT CHAR
CMPB #ETX         ;IS CTRL C?
BNE 2$            ;NO, GO ON
TST \\CCFLGX,X    ;YES, IS SECOND CTRL C?
BEQ 3$            ;NO, FIRST
ORA #40           ;YES, SET SECOND CTRL C BIT OF STATUS

2$:
CLR B             ;PREPARE TO CLEAR CTRL C FLAG

3$:
STB \\CCFLGX,X    ;STORE CTRL C FLAG STATE
STY \\PUSHIX,X    ;STORE INPUT WRITE BUFFER POINTER FOR NEXT T

WATCH:            -
ORA \\STATX,X     ;OR IN CURRENT PORT TERMINAL INPUT STATUS BY
STA \\STATX,X     ;AND WRITE BACK
LDD \\POPIX,X     ;FETCH INPUT BUFFER READ POINTER
SUBD \\PUSHIX,X   ;DETERMINE NUMBER OF FREE LOCATIONS IN BUFFE
ANDA #7           ;ONLY LOOK AT 11 BITS (2K)
CMPD #MAXRM       ;FREE SPACE CRITICAL?
BHI 2$            ;LOTS OF SPACE
TST \FLAGDX,X     ;IS FLAGGED INPUT IN EFFECT?
BEQ 1$            ;NO, FORGET IT
TST \FROZX,X      ;XOFF ALREADY SENT?
BNE 1$            ;YES, LET'S GO ALREADY
LDA #XOFF!80      ;QUEUE XOFF
STA \FROZX,X
TST \\OTFLGX,X    ;IS OUTPUT CURRENTLY IN PROGRESS?
LBEQ TRIGGR       ;NO, START NEW OUTPUT

1$:
RTI               ;DONE WITH TERMINAL INPUT

2$:
LDB \\HOLDX,X     ;TIMEOUT HOLD MODE IN EFFECT?
BITB #3
BEQ 3$            ;NO, ALL DONE
TST \RLOADX,X     ;ALREADY TIMED OUT?
BEQ 3$            ;YES, SKIP ACTIVE BIT
LDA #2            ;NO, INDICATE ACTIVE
STA \RLOADX,X

3$:
```

```
RTI                     ;DONE WITH TERMINAL INPUT

.SBTTL   TERMINAL INPUT INTERRUPT SERVICE ROUTINE (NON-BINARY
;THIS ROUTINE CONTAINS SOME FRILLS...SUCH AS OUTPUT CONTROL
;<CTRL S> AND <CTRL Q>
;ALSO, <CTRL C> AND <CTRL O> KILLS THE OUTPUT BUFFER
;AND <CTRL X> KILLS THE INPUT BUFFER
;DOUBLE <CTRL C>, DATA OVERRUN, AND FRAMING ERROR DETECTION
;THIS ROUTINE IS USED WHEN BINARY MODE IS DISABLED (BY PORT
;THIS ROUTINE IS ALSO DEFAULT AT POWER-UP/RESET TIME
;REGISTER X POINTS TO TOP OF RELEVANT POINTER TABLE
;REGISTER A CONTAINS THE CONTENTS OF THE ACIA STATUS REGISTE
;REGISTER B CONTAINS THE INPUT CHARACTER
;IRQ INTERRUPTS ARE DISABLED DURING THIS ENTIRE ROUTINE
;IT IS IMPORTANT THAT THIS ROUTINE BE AS SHORT AS POSSIBLE S
;CHARACTERS ARE NOT LOST


HOSTIN:
LDY \\PUSHIX,X    ;FETCH INPUT BUFFER POINTER AND REFRESH BUFF
STB ,Y            ;STORE CHARACTER INTO INPUT BUFFER
ANDB #7F          ;MASK OFF BIT 8
CMPB #CAN         ;IS INPUT A CTRL X?
BNE 1$            ;NO, GO ON
STY \KILLIX,X     ;YES, REQUEST KILL INPUT BUFFER

1$:
ANDA #30          ;SAVE ONLY OVERRUN AND FRAMING ERROR BITS OF
EXG Y,D           ;MOVE INPUT WRITE POINTER TO AC
ADDD #1           ;INCREMENT POINTER
ANDA #^C8         ;TAKE CARE OF ANY WRAP-AROUND
CMPD \\POPIX,X    ;IS INPUT BUFFER FULL?
EXG Y,D           ;RESTORE Y AND D
BNE 2$            ;NO, GO ON
ORA #20           ;YES, SET OVERRUN BIT
BRA 3$            ;DON'T UPDATE THE BUFFER WRITE POINTER

2$:
STY \\PUSHIX,X    ;STORE NEW BUFFER WRITE POINTER

3$:
CMPB #ETX         ;IS CTRL C?
BNE 4$            ;NO, GO ON
CLR \\GOFLGX,X    ;YES, CLEAR OUTPUT STOPPED FLAG
ORA #40           ;DEFAULT TO SECOND CTRL C IN A ROW
TST \\CCFLGX,X    ;IS SECOND CTRL C?
BNE 8$            ;YES, REQUEST KILL OUTPUT BUFFER
STB \\CCFLGX,X    ;NO, SET CTRL C FLAG
ANDA #^C40        ;CLEAR SECOND CTRL C RECEIVED BIT
BRA 8$            ;AND REQUEST KILL OUTPUT BUFFER

4$:
CLR \\CCFLGX,X    ;CLEAR CTRL C FLAG

5$:
CMPB #XOFF        ;IS INPUT A CTRL S?
BNE 6$            ;NO, GO ON
STB \\GOFLGX,X    ;YES, SET STOP OUTPUT FLAG
```

```
6$:
CMPB #XON          ;IS INPUT A CTRL Q?
BNE 7$             ;NO, GO ON
CLR \\GOFLGX,X     ;YES, CLEAR STOP OUTPUT FLAG

7$:
CMPB #SI           ;IS INPUT A CTRL O?
BNE 9$             ;NO, GO ON

8$:
TST \KILLOX,X      ;IS AN OUTPUT BUFFER KILL REQUEST ALREADY QU
BMI 9$             ;YES, GO ON
LDY \\PUSHOX,X     ;REQUEST OUTPUT BUFFER KILL
STY \KILLOX,X

9$:
LBRA WATCH         ;CHECK FOR FLAGGED INPUT MODE

.SBTTL  TERMINAL INPUT INTERRUPT SERVICE ROUTINE FOR SELF TE
;THIS ROUTINE CONTAINS ABSOLUTELY NO FRILLS
;NO ERROR DETECTION IS INCLUDED
;INPUT IS STORED IN THE CHANNEL'S INPUT BUFFER
;BUFFER POINTERS ARE UNCHANGED
;REGISTER X POINTS TO TOP OF RELEVANT POINTER TABLE
;REGISTER A CONTAINS THE CONTENTS OF THE ACIA STATUS REGISTE
;REGISTER B CONTAINS THE INPUT CHARACTER
;IRQ INTERRUPTS ARE DISABLED DURING THIS ENTIRE ROUTINE

INSELF:
LDY \\PUSHIX,X     ;LOAD INPUT BUFFER POINTER
STB ,Y             ;STORE CHARACTER
LDA TRACE          ;FETCH INTERRUPT STATUS
ORA \MARKX,X       ;MARK CHANNEL WHO DID IT
STA TRACE          ;AND SAVE FOR SELF TEST
RTI                ;DONE WITH TERMINAL INPUT
```

- 113 -   0134115

## APPENDIX B

| No. | Product Term | Active Level |
|---|---|---|
| | 1 1 1 1 1 | |
| | 5 4 3 2 1 0 9 8 7 6 5 4 3 2 1 0 | 7 6 5 4 3 2 1 0 |
| 0 | - - L H L L L L L - - L L L H H | . A A . . A . A |
| 1 | - - L H L L L L L - - L L H H H | A A A . . A A A |
| 2 | - - L H L L L L L - - L H L H H | A . A . . . . A |
| 3 | - - L H L L L L L - - H L L H H | . A A . . A . A |
| 4 | - - L H L L L L L L H L H H H | A A A . . A A A |
| 5 | - - L H L L L L H H H L H H H | A A A . . A A A |
| 6 | - - L H L L L L L H H L H H H | A A A . A A . A |
| 7 | - - L H L L L L H L H L H H H | A A A A . A . A |
| 8 | - - L H L L L L - - H H L H H | A A . . . A . A |
| 9 | - - L H L L L L - - H H H H H | A A A A A . . A |
| 10 | - - L H L L L L H - - L L L H L | . A A . . A . A |
| 11 | - - L H L L L L H - - L L H H L | A A A . . A A A |
| 12 | - - L H L L L L H - - L H L H L | A . A . . . . A |
| 13 | - - L H L L L L H - - H L L H L | . A A . . A . A |
| 14 | - - L H L L L L H L L H L H H L | A A A . . A A A |
| 15 | - - L H L L L L H H H H L H H L | A A A . . A A A |
| 16 | - - L H L L L L H L H H L H H L | A A A . A A . A |
| 17 | - - L H L L L L H H L H L H H L | A A A A . A . A |
| 18 | - - L H L L L L H - - H H L H L | A A . . . A . A |
| 19 | - - L H L L L L H - - H H H H L | A A A A A . . A |
| 20 | - - L H L L L H L - - L L L L H | . A A . . A . A |
| 21 | - - L H L L L H L - - L L H L H | A A A . . A A A |
| 22 | - - L H L L L H L - - L H L L H | A . A . . . . A |
| 23 | - - L H L L L H L - - H L L L H | . A A . . A . A |
| 24 | - - L H L L L H L L L H L H L H | A A A . . A A A |
| 25 | - - L H L L L H L H H H L H L H | A A A . . A A A |
| 26 | - - L H L L L H L L H H L H L H | A A A . A A . A |
| 27 | - - L H L L L H L H L H L H L H | A A A A . A . A |
| 28 | - - L H L L L H L - - H H L L H | A A . . . A . A |
| 29 | - - L H L L L H L - - H H H L H | A A A A A . . A |
| 30 | - - L H L L L H H - - L L L L L | . A A . . A . A |

## APPENDIX B (Cont.)

| No. | Product Term | | | | | | | | | | | | | | | | Active Level | | | | | | | |
|---|---|---|---|---|---|---|---|---|---|---|---|---|---|---|---|---|---|---|---|---|---|---|---|
| | 1 | 1 | 1 | 1 | 1 | 1 | | | | | | | | | | | | | | | | | | |
| | 5 | 4 | 3 | 2 | 1 | 0 | 9 | 8 | 7 | 6 | 5 | 4 | 3 | 2 | 1 | 0 | 7 | 6 | 5 | 4 | 3 | 2 | 1 | 0 |
| 31 | - | - | L | H | L | L | L | H | H | - | - | L | L | H | L | L | A | A | A | . | . | A | A | A |
| 32 | - | - | L | H | L | L | L | H | H | - | - | L | H | L | L | L | A | . | A | . | . | . | . | A |
| 33 | - | - | L | H | L | L | L | H | H | - | - | H | L | L | L | L | . | A | A | . | . | A | . | A |
| 34 | - | - | L | H | L | L | L | H | H | L | L | H | L | H | L | L | A | A | A | . | . | A | A | A |
| 35 | - | - | L | H | L | L | L | H | H | H | H | H | L | H | L | L | A | A | A | . | . | A | A | A |
| 36 | - | - | L | H | L | L | L | H | H | L | H | H | L | H | L | L | A | A | A | . | A | A | . | A |
| 37 | - | - | L | H | L | L | L | H | H | H | L | H | L | H | L | L | A | A | A | A | . | A | . | A |
| 38 | - | - | L | H | L | L | L | H | H | - | - | H | H | L | L | L | A | A | . | . | . | A | . | A |
| 39 | - | - | L | H | L | L | L | H | H | - | - | H | H | H | L | L | A | A | A | A | A | . | . | A |
| 40 | - | - | H | - | - | - | - | - | - | - | - | - | - | - | - | - | A | A | A | . | . | A | . | . |
| 41 | - | - | - | L | - | - | - | - | - | - | - | - | - | - | - | - | A | A | A | . | . | A | . | . |
| 42 | - | - | - | - | H | - | - | - | - | - | - | - | - | - | - | - | A | A | A | . | . | A | . | . |
| 43 | - | - | - | - | - | H | - | - | - | - | - | - | - | - | - | - | A | A | A | . | . | A | . | . |
| 44 | - | - | - | - | - | - | L | - | - | - | - | - | - | - | L | - | A | A | A | . | . | A | . | . |
| 45 | - | - | - | - | - | - | H | - | - | - | - | - | - | - | H | - | A | A | A | . | . | A | . | . |
| 46 | - | - | - | - | - | - | - | L | - | - | - | - | - | - | - | L | A | A | A | . | . | A | . | . |
| 47 | - | - | - | - | - | - | - | H | - | - | - | - | - | - | - | H | A | A | A | . | . | A | . | . |

L: LOW INPUT    H: HIGH INPUT    -: DON'T CARE INPUT
A: HIGH OUTPUT    .: LOW OUTPUT
INPUTS 12-7 CORRESPOND TO UNIBUS ADDRESS LINES A10-A5

CLAIMS:

1. A communications interface for controlling data transmission between a host computer and an input/output device, said communications interface comprising:

    (a)  programmable control means; and

    (b)  data storage means addressable by said programmable control means; said programmable control means including means for

        (i)  controlling data transfer from the host computer to an output buffer maintained within said data storage means; and

        (ii) controlling data transfer from said output buffer to an output device independently of the operation of the host computer.

2. A communications interface as recited in claim 1, said programmable control means further including means for

        (i)  controlling, independently of the operation of the host computer, data transfer from an input device to an input buffer maintained within said data storage means; and

        (ii) controlling data transfer from said input buffer to the host computer.

3. A communications interface as recited in claim 1 wherein said output buffer comprises a plurality of sequentially addressable data storage locations in said data storage means and wherein data received from the host computer is stored in the next sequentially available data storage location of said output buffer without reading of said data by said programmable control means.

0134115

4.  A communications interface as recited in claim 1 further comprising:

(a)  a register for storing data received from the host computer; and

(b)  means for disabling data transfer from said programmable control means to said data storage means and for enabling data transfer from said register to said data storage means;

whereby data is transferred from said register into a data storage location of said data storage means addressed by said programmable control means.

5.  A communications interface as recited in claim 4 further comprising:

(a)  a counter for counting data characters received from the host computer; and

(b)  means for resetting said counter if a preselected number of data storage locations of said output buffer are available to receive data;

whereby:

(i)  overflow of said counter signals the host computer that no data storage locations of said output buffer are available to receive data; and

(ii) resetting of said counter signals the host computer that data storage locations of said output buffers are available to receive data.

6. A communications interface as recited in claim 4 further comprising:

    (a)    address storage means addressable by said programmable control means and for storing the address of the next sequentially available storage location of said output buffer; and

    (b)    digital circuit means for changing said address to the address of the first data storage location of said output buffer if said address exceeds the address of the last data storage location of said output buffer.

7. A communications interface as recited in claim 4 further comprising a timer for timing host computer specified time delays between transmission of successive data characters from said output buffer to the output device.

8. A communications interface as recited in claim 4 further comprising a programmable timer for timing the rate of data transfer from said output buffer to the output device.

9. A communications interface as recited in claim 2 further comprising a register for storing data to be inputed to the host computer and wherein said programmable control means controls data transfer from said input buffer to the host computer by transferring the data from said input buffer to said register and then signalling the host computer that the data may be extracted from said register.

10. A communications interface as recited in claim 4 wherein said output buffer comprises 1,022 sequentially addressable data storage locations.

11. A communications interface as recited in claim 9 wherein said input buffer comprises 2,048 sequentially addressable data storage locations.

12. A communications interface for controlling data transmission between a host computer, a first plurality of input devices and a second plurality of output devices, said communications interface comprising:

    (a)   programmable control means; and

    (b)   data storage means addressable by said programmable control means and including a plurality of output buffers, each one of said output buffers corresponding to one of said output devices; said programmable control means including means for

    (i)   controlling data transfer from the host computer to said output buffers; and

    (ii)  controlling data transfer from said output buffers to said corresponding output devices independently of the operation of the host computer.

13. A communications interface as recited in claim 12 wherein said data storage means further includes a plurality of input buffers, each one of said input buffers corresponding to one of said input devices; and said programmable control means further including means for

    (i)   controlling, independently of the operation of the host computer, data transfer from said input devices to said corresponding input buffers; and

    (ii)  controlling data transfer from said input buffers to the host computer.

14.   A communications interface as recited in claim 13 wherein said output buffers each comprise a plurality of sequentially addressable data storage locations in said data storage means and wherein data received from the host computer is stored in the next sequentially available data storage location of the output buffer corresponding to the output device specified by the host computer, without reading of said data by said programmable control means.

15.   A communications interface as recited in claim 12 further comprising:

(a)   a register for storing data received from the host computer; and

(b)   means for disabling data transfer from said programmable control means to said data storage means and for enabling data transfer from said register to said data storage means;

whereby data is transferred from said register into a data storage location of said data storage means addressed by said programmable control means.

FIG. 1

FIG. 2

FIG. 3A

FIG. 3B

0134115

# FIG. 4A

# FIG. 4B

FIG. 5A

0134115

7/9

0134115

FIG. 5B

FIG. 6